# EUROPEAN PATENT SPECIFICATION

(11) **EP 4 532 381 B1**
(45) Date of publication and mention of the grant of the patent: **22.04.2026**
(21) Application number: 23745253.7
(22) Date of filing: 31.05.2023
(51) Int. Cl.: B65G 65/00

(54) **APPARATUS AND METHOD FOR MAKING COMBINED LOAD UNITS**
VORRICHTUNG UND VERFAHREN ZUR HERSTELLUNG VON KOMBINIERTEN LADEEINHEITEN
APPAREIL ET PROCÉDÉ DE RÉALISATION D'UNITÉS DE CHARGE COMBINÉES

(30) Priority: 31.05.2022 IT 202200011534
(43) Date of publication of application: 09.04.2025
(73) Proprietor: E80 Group S.p.A., 42030 Viano (Reggio Emilia) (IT)
(72) Inventor: GRASSI, Enrico, 42030 Viano (Reggio Emilia) (IT); CAVIRANI, Vittorio, 42030 Viano (Reggio Emilia) (IT); GUIDI, Roberto, 42030 Viano (Reggio Emilia) (IT)
(74) Representative: Feltrinelli, Secondo Andrea
(86) International application number: PCT/IB2023/055554
(87) International publication number: WO 2023/233304

(56) References cited:
- DE-A1- 102009 014 950
- US-A1- 2013 062 160
- US-A1- 2019 276 176
- US-A1- 2021 380 338

## Description

### TECHNICAL FIELD OF THE INVENTION

The present invention relates to an apparatus and methods for making combined load units, i.e., palletized loads comprising layers of packages of products of different types.

In particular, the apparatus according to the present invention can form palletized loads comprising layers of packages of products of different types in the same layer and/or layers of packages of products of the same type in the same layer combined with each other on the basis of user requests.

For the description of the present invention the following definitions are established. UDC or load unit: set of packages of finished products, both intended directly for the market and intended as auxiliary materials for production plants, grouped in such a way as to optimise volumes according to transport and to guarantee the necessary stability.

SKU: within the scope of warehouse management, a stock keeping unit, acronym SKU, or warehouse managed item, indicates a specific item, stored in the warehouse in a specific position; in an inventory, a SKU is the least aggregated level: all the units that are part of the same SKU are to be understood as interchangeable; the SKUs consist of boxes, cartons, or other similar containers, but they could also be of other types, for example, bundles of bottles or the like, or packages of paper rolls, packages of products of the ceramic industry, and others; the dimensions and dimensional proportions of the product packages can be any, without particular limitations; in the embodiments of the present invention, for the sake of representation simplicity, the SKUs have a substantially parallelepiped shape.

Mother UDC: a load unit made up of SKUs that are all uniform with respect to each other.

Combined UDC: a load unit composed of non-uniform SKUs, made according to a shipment order.

Layer picking or picking of a layer: method for creating combined UDCs composed of non-uniform layers but composed of uniform SKUs within a single layer.

Case picking or picking of a SKU or warehouse managed item: method for creating combined UDCs made up of non-uniform SKUs even within single layers.

### STATE OF THE PRIOR ART

In production plants there is a need to create combinations of different SKUs in one same UDC, i.e., in one same palletized load, in order to then be able to send this load unit or palletized load directly to production plants or to an end user, e.g., to a distribution centre or retailer.

According to a known type of system, the packages of finished products or SKUs, arriving directly from production or via a forwarding agent or carrier are depalletized from the original pallets or mother UDC, using manual and/or automated depalletization systems. In the case of an automated depalletization system of the mother UDC, whole layers or portions of layers can be picked.

Individual SKUs taken from the mother UDCs are transferred to a warehouse by means of conveyors. At the time of a request, the SKUs are again transferred by means of conveyors that run from the warehouse to a palletizing system which can be manual and/or automated.

In the case of an automated depalletizing system, a whole layer or portions of a layer can be picked.

A system according to the preamble of claim 1 is shown in DE102009014950A1.

This system is not very flexible because the use of conveyors implies limits for the characteristics of the products that can be handled, in relation to both the size and the type of products.

The system is not easily scalable and modular because the use of conveyors results in rigid connections between the parts that make up the system, making retrofitting expansion or the addition of ancillary parts/features difficult.

The system is highly maintenance intensive due to the significant presence of conveyors which normally cannot be redundant and must therefore be kept in perfect working order to ensure system availability. According to another system of the known type, a combined UDC is implemented directly from a mother UDC with manual picking of the warehouse managed items or SKUs.

This solution provides:
storage of the mother UDCs to a special area in as many positions as are the SKUs needed to create the combined UDCs in a given period;
manual transfer by an operator, also known as picker, of the requested SKUs to the combined UDC to be created, also ensuring, if necessary, the stabilization of the UDC at least for handling purposes inside the plant;
final stabilization of the combined UDC before shipment.

This system does not guarantee constant results in terms of quality, in particular as regards the correspondence of the SKUs entered in the UDC with those actually expected, as the UDCs implementation activity is carried out manually by an operator.

This system is unreliable in terms of speed and availability as most of the operations are performed manually.

This system exposes the operators to the risk of accidents given the continuous performance of heavy-duty activities from an ergonomic point of view.

This system may involve the use of preliminary stabilization elements (straps, plastic film strips, adhesive tape, glue, etc.) before the final stabilization with consequent consumption of the material necessary for this preliminary stabilization.

According to a further system of the known type, a combined UDC is made directly from a mother UDC with SKUs obtained through automated picking by a robot.

This system provides:
storage of the mother UDCs to a special area in as many positions as are the SKUs needed to create the combined UDCs in a given period;
automated transfer by a mobile robot equipped with a gripper of the requested SKUs on to the combined UDC;
the possible stabilization of the combined UDC inside the mobile robot, at least for handling purposes inside the plant;
final stabilization of the combined UDC before shipment.

This system can imply long operation times because the automated depalletization of single packages or SKUs from a mother UDC is a delicate operation and all the more difficult the wider the variety of products to be handled.

This requires, for the same depalletization speed to be achieved, a greater number of mobile robots and consequently an increase in the costs and space required.

Furthermore, the system could be unreliable, given the difficulties of implementing direct picking of a package, or SKU, from a UDC, and there may be a risk of damage to the packages, or SKUs, and the need for operator action for the resolution of the problem.

This system may also not be able to automatically manage all the products as required, given the difficulties in carrying out direct package picking from the UDC, having to resort, even if only partially, to the manual package picking method.

Finally, this system may require the use of preliminary stabilisation elements (straps, plastic film strips, adhesive tape, glue, etc.) before final stabilisation with consequent consumption of the necessary material and availability of related devices for the application of the necessary material for this preliminary stabilization.

### OBJECTS OF THE INVENTION

The purpose of the present invention is to improve the state of the art in the sector of apparatuses and methods for making combined load units, or UDCs, and in the sector of automated warehouses equipped with such devices.

Within the scope of this technical task, it is an object of the present invention to provide an apparatus and methods for making combined load units, or UDCs, which allow the aforementioned drawbacks to be overcome.

An object of the present invention is to develop an apparatus and methods for making combined load units, or UDCs, which allow to form load units, or UDCs, combined with packages of different products for each layer or layers of different but uniform products in the same layer.

A further object of the present invention is to make an apparatus and methods available for making combined load units, or UDCs, which allow to reduce the space used up inside production plants and which can be expanded or reduced with the greatest flexibility.

Another object of the present invention is providing an apparatus and methods for making combined load units, or UDCs, which allow product types of different nature and/or with different composition layouts of the combined load units to be handled with equal effectiveness and in a versatile way.

According to one aspect of the present invention an apparatus is presented for making combined load units, or UDCs, according to claim 1.

In relation to other aspects of the present invention methods are presented for making combined load units, or UDCs, according to independent claims 29 and 32.

Dependent claims refer to preferred and advantageous embodiments of the invention.

### BRIEF DESCRIPTION OF THE DRAWINGS

The features of the invention will be better understood by anyone skilled in the art from the following description and accompanying drawings, provided by way of non-limiting example, wherein:
Figure 1 is a general axonometric view of an apparatus according to the present invention;
Figure 2 is a general plan view of the apparatus shown in Figure 1;
Figure 3 is a general plan view of another version of an apparatus according to the present invention;
Figure 4 is an axonometric view of a first depalletizing island which is part of the apparatuses shown in the previous figures;
Figure 5 is an enlarged view of a detail of the depalletizing island shown in the previous figure;
Figure 6 is an axonometric view of a first automated warehouse which is part of the apparatuses shown in Figures 1-3;
Figures 7-9 are enlarged views of a few details of the first automated warehouse shown in the previous figure;
Figure 10 is an axonometric view of two first palletizing islands which are part of the apparatuses shown in Figures 1-3;
Figures 11-27 are enlarged views of a few devices and construction details of one of the palletizing islands shown in the previous figure;
Figure 28 is an axonometric view of a second automated warehouse which is part of the apparatus shown in Figures 1, 2;
Figure 29 is an enlarged view of a detail of the second automated warehouse shown in the previous figure;
Figure 30 is an axonometric view of a second palletizing island which is part of the apparatus shown in Figures 1, 2;
Figure 31 is an axonometric view of a wrapping island which is part of the apparatuses shown in Figures 1-3;
Figure 32 is an enlarged view of a detail of the wrapping island shown in the previous figure; and
Figures 33, 34 are elevation and plan views - respectively, of a third automated warehouse which is part of the apparatus shown in Figure 3;
Figures 35-46 are axonometric views of the divider layer removal islands.

### EMBODIMENTS OF THE INVENTION

The present invention provides an apparatus and a method for making combined load units or UDCs which is based on the following method:
depalletization and warehouse storage of single layers of SKUs or uniform packages;
use of special trays, for internal use, with a specific shape to support layers of SKUs in order to facilitate handling of the layers and standardize the handling systems;
handling of the trays by means of a first type of autonomously guided vehicle equipped with a tray support surface made in such a way as to facilitate both the transfer of the tray to and from the autonomously guided vehicle, and the picking of single SKUs, or of a given number of SKUs, from the tray;
stabilization of the UDC during the palletization phase through the use of a specific containment cage or enclosure, for internal use;
handling of the UDCs inserted in the cage and handling of the empty cages without UDCs by means of a second type of autonomously guided vehicle, for heavier loads, i.e., also a complete UDC, equipped with a conveyor for transferring the UDCs and any containment cage;
final stabilization of the UDC by means of a wrapping device which ensures the stability of the UDC until the end of the wrapping operation;
possibility of making a UDC with or without a support pallet.

In the present description, the term pallet shall mean the item used to support the load unit during the load unit completing operations, it can be a pallet of various shapes, sizes and materials; for the sake of simplicity, the term pallet shall also mean a so-called "slipsheet" or, in general, an item which has characteristics such as to carry out the task of supporting and handling the load unit.

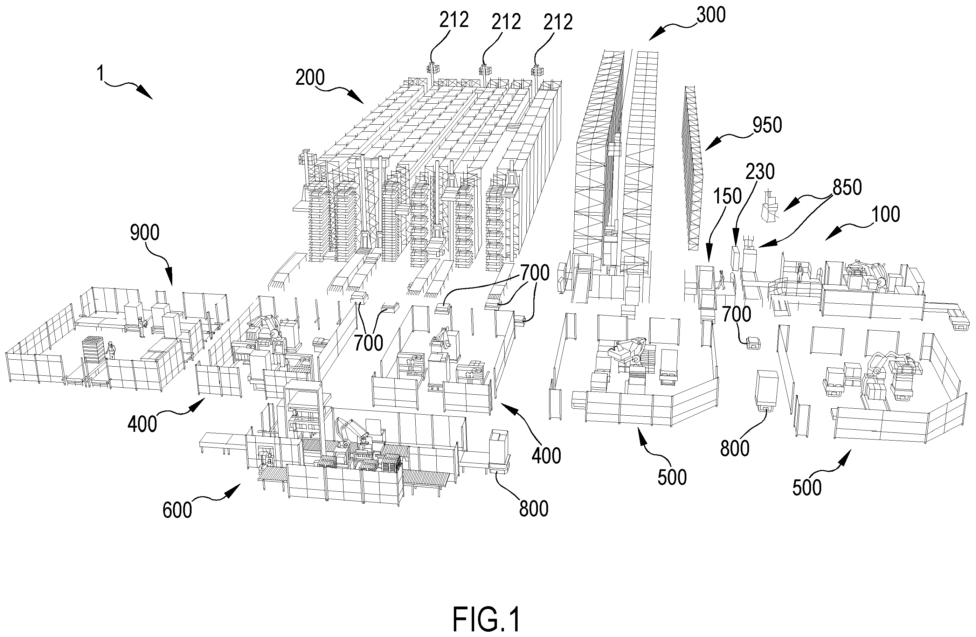

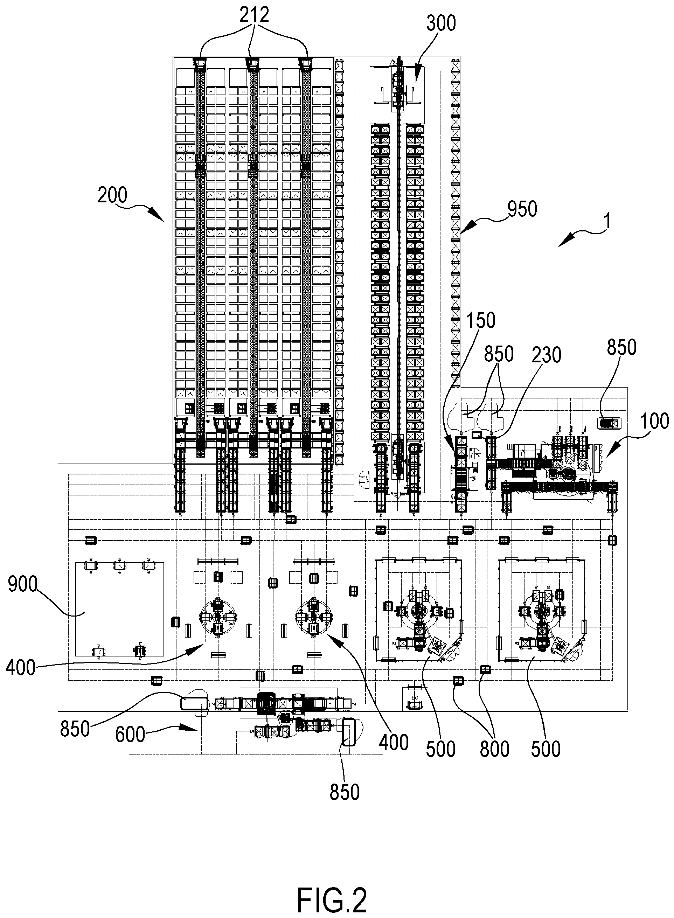

Figure 1 shows an axonometric view of an apparatus 1 for forming palletized loads according to a version of the present invention; the aforementioned apparatus 1 is also illustrated as a plan view in Figure 2.

According to this version, the apparatus 1 essentially comprises: at least one depalletizing island 100; at least one first automated warehouse 200 for layers of uniform packages; at least one second automated warehouse 300 intended for the de-filmed mother UDCs, i.e., without wrapping film and/or other lateral stabilizing elements, or for partially depalletized UDCs, i.e., pallets of uniform packages from which only a few layers have been picked; at least one first palletizing island 400 for packages or single SKUs; at least one second palletizing island 500 for SKU layers; at least one wrapping island 600 for combined UDCs.

The apparatus 1 may also comprise one or more de-filming islands 150, i.e., an island wherein only removal from the mother UDC of the wrapping film and/or other lateral stabilizing elements is performed.

The apparatus 1 also comprises a fleet of autonomously guided vehicles: first shuttles 700, of the lighter first type, capable of supporting up to one layer of packages, second shuttles 800, of a heavier second type, capable of supporting an entire UDC and having a support top surface with a conveyor, as well as autonomously guided lift trucks 850 equipped with forks, for example LGV (laser guided vehicle) or AGV (automated guided vehicle), alternatively or additionally, manual-guided forklifts may also be used.

Hereafter, autonomously guided forklifts or manually guided forklifts will be simply referred to as forklift trucks 850.

As will also be evident from the following description, the fleet of shuttles 700, 800 allows the different parts of the apparatus 1 to be connected in a flexible way, eliminating the conveyor belts, or similar devices, which require fixed installation and make it difficult to alter and expand the apparatus 1.

As mentioned, the first shuttles 700 are autonomously guided vehicles capable of rotating on themselves and moving along linear and curvilinear paths with transport missions defined by a central management system. The first shuttles 700 have an upper plane 701 and are able to support up to one layer 110 of SKUs resting on a special tray 118, by way of non-limiting example the upper plane 701 is able to support the weight of a tray 118 with the weight of one layer of SKUs, for example approx. 300 kg or 3000 N.

Normally, the tray 118 has width and length dimensions greater than those of one layer of SKUs of the mother UDCs, for example 800 x 1200 mm, and is made of metal or another material suitable for supporting the weight of one layer of SKUs, for example about 250 kg or 2500 N.

In some cases, the tray 118 can have width and length dimensions substantially matching those of an SKU layer of the mother UDC

An important characteristic of the tray 118 is given by the presence of a plurality of slots or openings 122 arranged according to a grid with a pitch, in the transversal direction and in the longitudinal direction considering the extension of the layer 110 of SKUs, which depends on the type and dimensions of the SKUs, and which, by way of non-limiting example, can be between 30 mm and 80 mm.

Additionally, the tray 118 is built to be easily stackable, and the SKU layer support surface has non-slip features to reduce the risk of SKU slippage, especially during transport on the shuttles 700.

The openings 122 allow the passage of support items which will be used to lift the complete or partial layer of SKUs in the palletizing island 400. The system with which the first shuttles 700 receive the trays 118 on the plane 701 must allow for the achievement of the expected performance in terms of speed; by way of non-limiting example this speed can reach 180 trays/hour.

According to one version, the shuttle 700 can be inserted below the outfeed conveyor 121 of the tray 118, with or without the layer of SKUs, so as to progressively transfer the tray 118, with its possible load of SKUs, onto the plane 701 of the shuttle keeping both the tray 118 and the shuttle 700 moving.

To facilitate this transfer, the outfeed conveyor can be made using a system of chains or belts which support the tray preferably on the outer edges so as to allow the shuttle support plane to be inserted inside them.

In a variant of this version and to better support the tray 118, the outfeed conveyor can be formed by a chain or comb belt system, i.e., with the chains or belts arranged at a given distance, so as to support the tray 118 over its entire surface.

Consequently and in order to be able to associate with the conveyor, the upper plane 701 of the shuttle 700 is therefore comb-shaped with a series of parallel strips 702 arranged at a given distance from each other so as to be insertable within the chain system or belts of the outfeed conveyor 121, and also of the infeed conveyor 116 which is shaped like the outfeed conveyor 121.

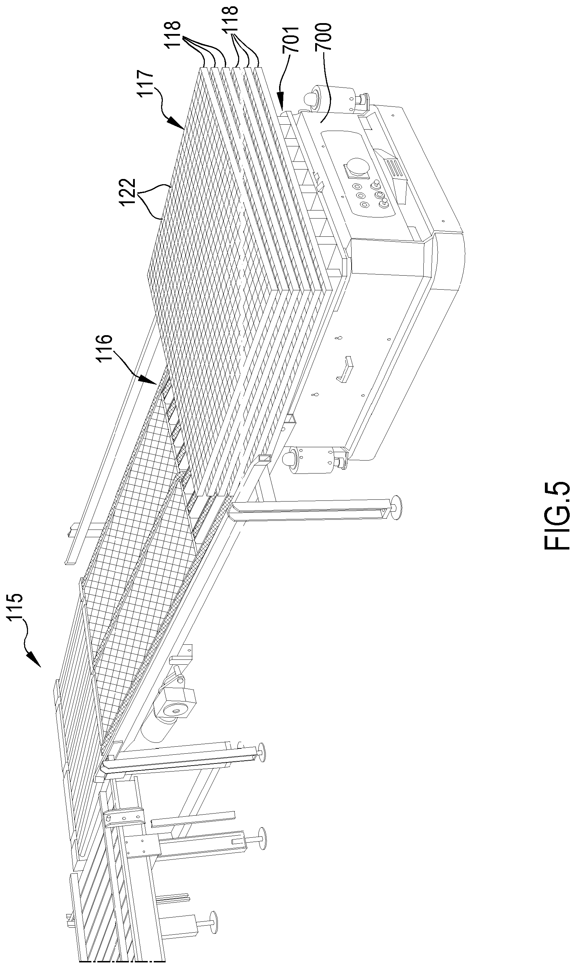

This version, illustrated in more detail in Figure 5, requires a slight inclination of the conveyor or of the upper plane 701 of the shuttle 700 to allow the gradual detachment of the tray from the chains/belts of the conveyor and consequent resting on the upper plane of the shuttle or conversely the gradual detachment of the tray from the upper plane of the shuttle and consequent resting on the chains/belts of the conveyor, when the tray, with its possible load, must once again be transferred to a conveyor.

Another version, similar to the previously described version, has conveyor chains or belts which can be moved vertically.

This function allows the tray to be placed on the upper plane 701 of the shuttle while keeping the tray with the SKUs always horizontal, an advantageous condition in the case of unsteady SKUs.

Since the insertion phase of the shuttle 700 can take place with the chains or belts with the related support frame in the top position, without interfering with the shuttle 700, this version also allows the insertion phase of the shuttle 700 below the conveyor to be simplified.

According to yet another version, the destacking of the tray takes place directly on the shuttle, consequently only the conveyors are necessary and present for the transfer of the stacks of trays, but there are no conveyors present for transferring the individualized trays, nor are there coupling devices between the tray and shuttle.

In a further version, the shuttle 700 has the support elements for the trays 118 made with movable elements, for example conveyor belts or chains, which allow the trays to be transferred to and from fixed conveyors without using the method which requires the insertion of the shuttle below the conveyor.

In all versions, the shuttles 700 have items for supporting the trays 118 made in such a way as to allow the operation of the lifting device present in the palletizing island for single packages, as will be described below.

The tray destacking device can be made by means of a suitable gripper mounted on a programmable manipulator, such as a robot, or it could also be made with other systems: gravity, destacker, gantry structure, etc.

In addition, the apparatus 1 can comprise at least one third island 900 for manual palletizing of special packages which cannot be handled automatically, and an auxiliary warehouse 950 for pallets of high turnover packages which can be placed or picked up by the forklift trucks 850.

In this version of the invention, the apparatus 1 can form combined UDCs using packages, or SKUs, in the following ways:
1) The combined UDCs may include, at the base, one or more complete layers of packages, or SKUs, which have been left in the mother UDC from which the formation of the combined UDC is started; in relation to a request for packages, or SKUs, it is possible to partially depalletize a mother UDC, leaving one or more layers of uniform packages, or SKUs, at the base; this layer or layers left at the base of the mother UDC were not picked because they could already be used for the combined UDC being formed;
2) Combined UDCs consist of packages, or SKUs, that have been picked from the mother UDCs as complete layers; the form-combined UDC requires that it is at least partly formed also by uniform layers of packages, or SKUs, therefore in each layer there can be a different type of package, or SKU, providing it is uniform over the whole layer; above these layers of uniform packages, or SKUs, layers formed by single SKUs or small groups of different SKUs within the same layer can be placed (see points 3 and 4 below);
3) Combined UDCs are made up of packages, or SKUs, single or in small groups, for example two or three, of packages, or SKUs, so that each layer of the combined UDC can include different types of packages, or SKUs; and
4) The combined UDCs are made up of single depalletized packages, or SKUs, which are palletized in the combined UDC in an exclusively manual way.

The number of depalletizing islands 100, of first palletizing islands 400 for single SKUs, of palletizing islands 500 for layers of SKUs, of wrapping islands 600, the possible presence of a de-filming island 150 and the dimensions of the warehouses 200, 300, 950, depend on the number of SKUs to be processed and on the number and type, by layers of packages or single packages, of combined UDCs to be made within a given time interval.

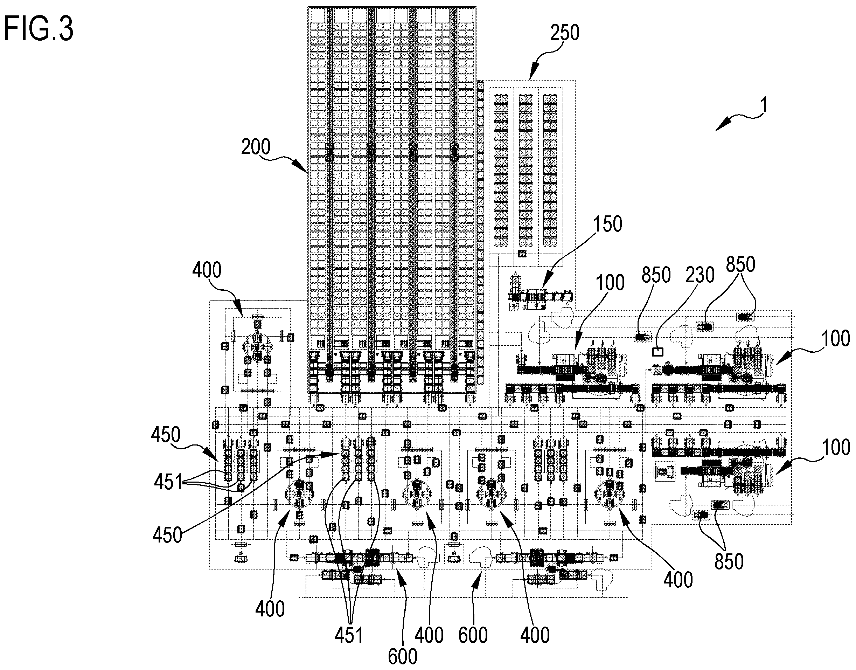

Figure 3 shows a plan view of the apparatus 1 according to another version of the invention.

In this version, which is simpler than the previous one, the apparatus 1 comprises at least one depalletizing island 100, in this example three depalletizing islands 100; at least one de-filming island 150, i.e., an island for the removal of the UDC wrapping, with at least one automated approach warehouse 250 wherein a given number of UDCs without wrapping film are stored; at least one first automated warehouse 200 for layers of uniform packages as in the previous version; at least one first palletizing island 400 for single packages, in this example five palletizing islands 400; at least one third proximity warehouse 450 for the temporary storage of SKUs for which a short waiting time is expected before use, in this example three proximity warehouses 450; at least one wrapping island 600 for combined UDCs, in this example two wrapping islands 600. Also in this case, the number of depalletizing islands 100, of palletizing islands 400, of wrapping islands 600, the presence of a de-filming island 150 and the dimensions of the warehouses 200, 450 depend on the number of SKUs and combined UDCs to be prepared in a given time frame.

As in the previous version, the apparatus 1 comprises a fleet of shuttles 700, 800 and forklift trucks 850 for feeding the mother UDCs and picking the combined UDCs.

It should be noted that in this version the formation of the UDC takes place by combining only single SKUs or UDCs in small groups (two or three) for each layer of the combined UDC. Both versions of the apparatus 1 are modular and can be expanded or reduced as needed.

In particular, the apparatuses 1 can be formed by the same parts and the same devices: the depalletizing island 100, the de-filming island 150, the first automated warehouse 200, the first palletizing island 400, the wrapping island 600 as well as the fleet of autonomously guided vehicles with first shuttles 700, second shuttles 800 and forklift trucks 850.

The different islands, areas and parts of the apparatus 1 and its variants are now described.

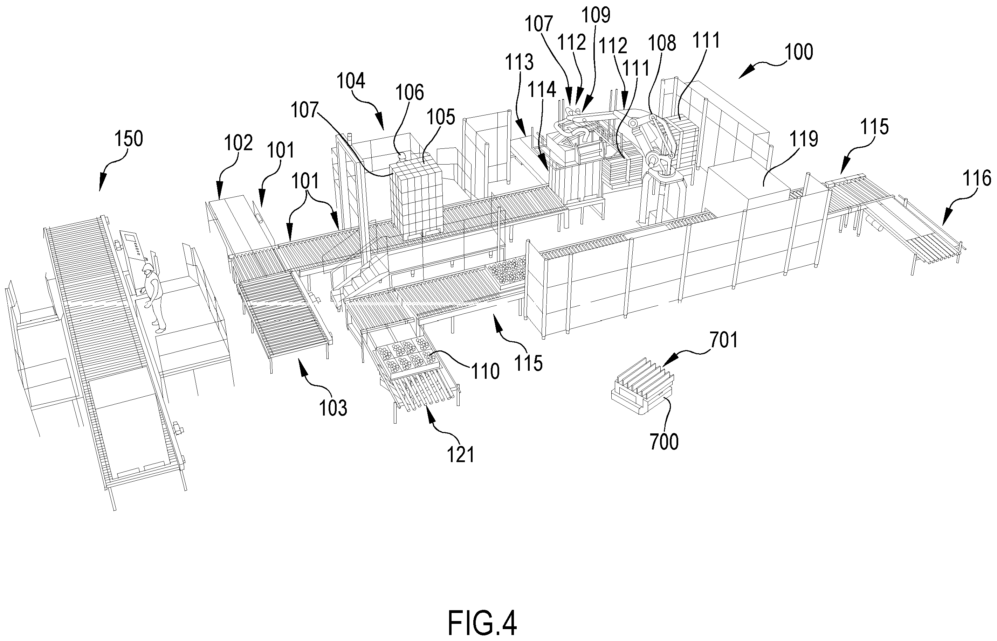

Figure 4 shows the depalletizing island 100; in this island the depalletization of the SKU layers 110 picked from the mother UDCs 105 takes place by means of a programmable manipulator 108, for example an anthropomorphic robot.

Figure 4 also illustrates the de-filming island 150 which is only used for the de-filming of the mother UDCs 105, these UDCs without film will be stored in a special warehouse for subsequent use, for example in the second automated warehouse 300, or in the automated approach warehouse 250.

In detail, the depalletizing island 100 comprises at least one first conveyor 101 with one or more infeed zones 102, 103, designed to receive the mother UDCs 105 at the infeed.

A mother UDC 105, formed by uniform SKUs, is stored by a forklift 850, or by a similar vehicle, to an infeed zone 102, 103, is transferred by the first conveyor 101 towards a de-filming area 104, where the mother UDC 105 is freed from any flaps/caps at the top and from film or other lateral stabilizing elements by an operator 106 or possibly by an automated system (not shown).

The mother UDC 105 continues to be carried on the conveyor 101 up to a layer depalletization zone 107; in this area 107 there is the aforementioned anthropomorphic robot 108, equipped with a gripper 109 for picking a complete SKU layer 110.

The SKU layers picking operation can be repeated to the complete depalletization of the mother UDC 105 or only the layers 110 needed at that specific moment can be picked.

If the mother UDC is not completely depalletized, then the mother UDC in which some complete layers of packages have been left is fed out through one or more outlets 113 provided for the partially depalletized UDCs 114.

The partially depalletized UDCs 114 are then conveyed to the second automated warehouse 300 via the second shuttles 800.

The second shuttles 800 are also autonomously guided vehicles capable of rotating on themselves and moving along linear and curvilinear paths with transport missions defined by a central management system.

The second shuttles 800 are able to support an entire UDC and therefore can also accommodate partially depalletized UDCs 114.

In particular, the second shuttles 800 are equipped with an upper surface 801 with a conveyor 802 for receiving a UDC coming fed out of a conveyor of other parts of the apparatus 1, or the second shuttles 800 with the conveyor 802 are able to transfer an infeed UDC to a conveyor of other parts of the apparatus 1.

Furthermore, the second shuttles 800 are capable of receiving and transferring other equipment for stabilizing the UDC being formed, such equipment will be described in more detail later.

By way of non-limiting example, the upper surface 801 with the conveyor 802 is able to support a weight of approximately 1500 kg or 15000 N.

The depalletizing island 100 has a second conveyor 115 which extends substantially parallel to the first conveyor 101, the robot 108 is located between the two conveyors 101, 115 so as to be able to reach both conveyors easily.

The second conveyor 115 comprises an infeed conveyor 116 for the trays 118 (see Figure 5), a stacker and de-stacker device 119 for the trays 118, a loading area 120, where the trays 118 are loaded by the robot 108 with a full layer 110 of SKUs and an outfeed conveyor 121 where the trays 118, with a full layer 110 of SKUs, are transferred to shuttles 700.

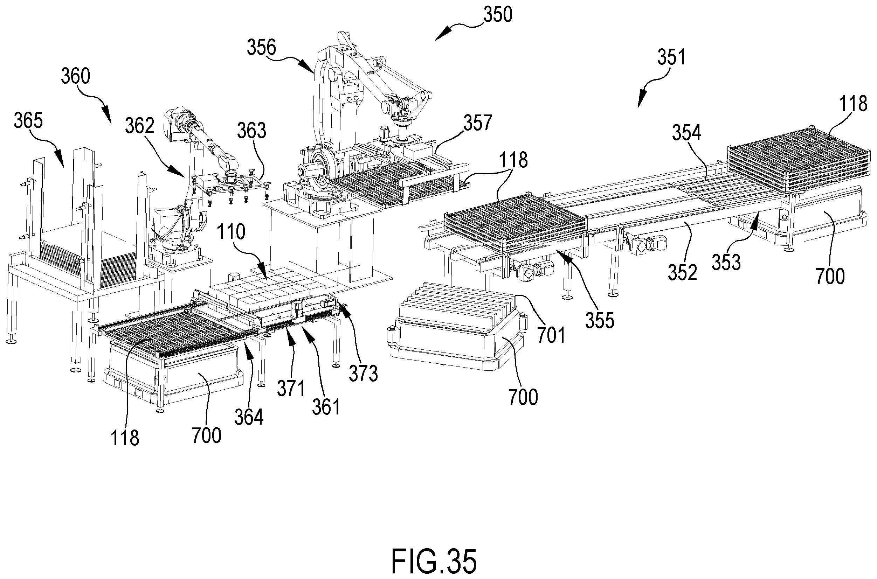

In another version of the invention illustrated in Figures 35-46 and better described further on, a complete layer of SKU is placed in a divider layer removal island 350, and in this island the complete layer of SKU is transferred on to a tray 118.

As shown in Figure 5, a shuttle 700 transports a stack 117 of trays 118, e.g., six trays 118, these can arrive pre-stacked if they come from a special tray stacking area.

The trays 118 brought to the depalletizing island 100 by the shuttle 700 can also be single, if coming directly from the first palletizing islands 400 for single SKUs, or from the second palletizing islands 500 with layers of uniform SKUs.

Subsequently, the stack 117 of trays 118 arrives at the stacker and de-stacker device 119 from which a single tray 118 comes out, which is transferred by the conveyor 115 to the loading area 120.

As specified above, the stacker and de-stacker device 119 provides for de-stacking the trays from the stack to make them available for placement of the layer, and can also stack the individual trays 118, storing a certain amount of them, when the amount of incoming trays is greater than the amount of outgoing ones from the device 119, thus balancing any transients in which the operation of the various islands or areas of the apparatus 1 is not uniform.

In the layer depalletizing area 107, the robot 108 picks up each single layer of SKUs from the mother UDC 105 which is waiting on the first conveyor 101 and places it on a tray 118 on the second conveyor 115.

According to one version of the invention, the gripper 109 fixed to the robot 108 comprises a frame able to surround the layer 110 of SKUs, acting with a mechanical effect on the perimeter of the layer 110 of SKUs.

Furthermore, the gripper 109 is capable of wrapping the SKUs in a casing in which vacuum can be created so as to guarantee gripping of the layer 110 even in the event of irregularly shaped SKUs.

The SKU layers picking operation can be repeated to the complete depalletization of the mother UDC 105 or only the layers 110 needed at that specific moment can be picked.

In the case of complete depalletization, the empty pallets are stored in one or more stacks 111, according to the type and size of pallets, so as to form stacks 111 of pallets of the same type and size.

Once the set height for the stacks 111 of pallets has been reached, these stacks are removed from the depalletization area through one or more exits 112 for pallet stacks; the stacks 111 are then picked up by a lift truck 850 and taken to a suitable warehouse.

If there is a divider layer between the layers 110, this must be removed before placing the layer 110 on the tray 118 to allow the SKUs to be picked up in the palletizing area.

The divider layer removal island 350 is provided for removing the dividers in-between layers and can be implemented according to different versions shown in the Figures 35-46.

Figure 35 shows a version of the divider layer removal island 350, this station can be a separate island from the others or it can be integrated into the depalletizing island 100.

The layer removal island 350 essentially comprises a first group 351 for the management of trays 118 and a second group 360 for the removal of the divider layer from the SKU layers.

The first group 351 for managing the trays 118 comprises a conveyor 352 with an infeed section 353 for the trays 118, for example made with a comb device 354 similar to that of the conveyor 115 of the depalletizing island 100. A stack of trays 118 is transported towards the infeed section 353 by a shuttle 700 and transferred by the conveyor 352 to a tray pick-up station 355, where it finds a first programmable manipulator, e.g., a first anthropomorphic robot 356 or a Cartesian robot.

The first robot 356 comprises a gripper 357 designed to pick up the individual trays 118 from the stack previously placed on the conveyor 352 from the shuttle 700.

Therefore, the robot 356 picks up a single tray 118 and places it on a shuttle 700, which has moved to a position adjacent to the tray picking-up station 355; then the shuttle 700 with the tray 118 moves to the second group 360 for the removal of the divider layer.

The second group 360 for the removal of the divider layer comprises a divider layer picking-up station 361, a layer transfer station 364 for the transfer of the SKU layer onto a tray 118, said station 364 being adjacent to the divider layer picking-up station 361, a second programmable manipulator, for example a second anthropomorphic robot 362, or a Cartesian robot, which is located near the divider layer picking-up station 361 and is provided with a gripper 363 for removing the divider layer.

According to the example shown in the figures, the gripper 363 for removing the divider layer can be made with a series of suction means, for example vacuum suckers, capable of gripping one layer at a time.

There may also be a storage station 365 where the divider layers taken from the SKU layers 110 are stored.

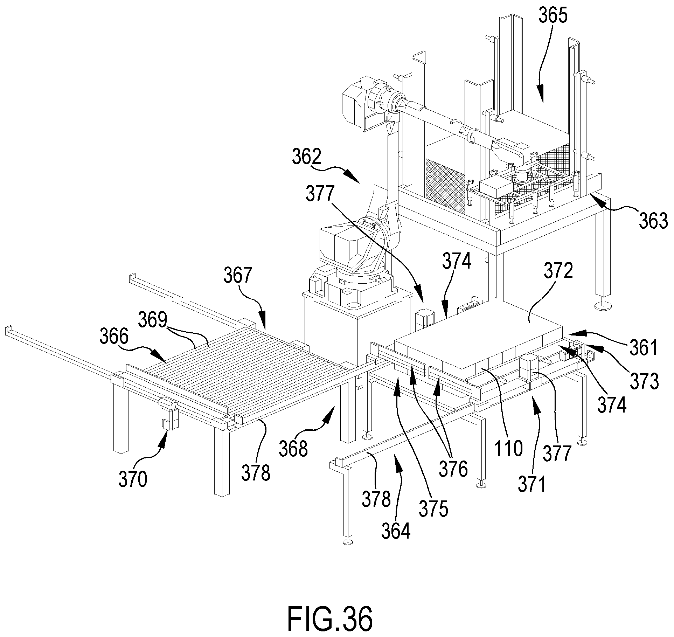

In Figure 36 another version of the second group 360 for the removal of the divider layer is illustrated, in this figure a divider layer 372 can also be seen positioned on a layer 110.

In this version, the layer transfer station 364 comprises a roller table 366 or a simple low friction coefficient plane, the aforementioned roller table 366 is movable horizontally between a first waiting position 367 and a second position 368 for receiving the layer 110 of SKUs without the divider layer.

As mentioned, the roller table 366 generally comprises a plurality of rollers 369 which can be idle, or it comprises a low friction coefficient surface, and is supported by a suitable structure provided at a height slightly higher than the surface of the tray 118 positioned on the shuttle 700, so that the shuttle 700 with the tray 118 can freely pass under it.

The roller table 366, or the plain low friction coefficient plane, is operated by motor means 370 which allow the roller table 366, or the plane, to be moved horizontally between the first waiting position 367 and the second position 368 for receiving the layer 110.

It should be noted that the second layer 110 receiving position 368 matches the layer transfer position 364.

In both versions, the second group 360 is equipped with a pusher 373 which comprises two compacting elements 374 which allow the SKUs to be brought together by compacting the layer 110 of SKUs according to a transversal direction with respect to the layer 110, when the compactors 374 are open the layer 110 is free to go through them without any interference.

The pusher 373 also comprises a rotating bar device 375 which allows the layer 110 to be maintained and moved according to a longitudinal direction with respect to the layer 110.

In the example shown in the figures, the rotating bar device 375 comprises four bars 376, of which two are located in front of the layer 110 and two are located behind the layer 110; each of the bars 376 is hinged to the sides of the pusher 373, approximately where the compactor elements 374 are located.

According to one version of the present invention, there could also be just one of the bars 376 in front of the layer 110 and one behind the layer 110.

The bars 376 can be closed by rotating to a horizontal position around the front and rear edges of the layer 110 and can be opened by rotating upward in an approximately vertical direction so as not to interfere with layer 110.

The pusher 373 is equipped with motor means 377 which allow it to move on guides 378 between the divider layer picking-up station 361 and the layer transfer station 364.

The main operating difference between the version of the second unit 360 for removing the divider layer of Figure 35 without roller table and the version of Figure 36 with the roller table 366 consists in the method of transferring the layer onto the shuttle 700.

In the version of Figure 35, the layer 110 is transferred directly onto the tray 118, as described below.

The divider layer picking-up station 361 is located on a bridge structure under which the shuttle 700 carrying the tray 118 can pass.

When the pusher 373 begins to move the layer 110 towards the layer transfer station 364, the shuttle 700 with the tray 118 moves in a synchronized manner below the layer picking-up station 361 allowing the layer 110 to be progressively placed directly on to the tray 118.

In the version of Figure 36, the transfer of the layer 110 onto the tray 118 occurs indirectly via the roller table 366 or the low friction coefficient plane. The pusher 373 moves the layer 110 towards the layer transfer station 364 where the roller table 366, or the low friction coefficient plane, is already located, which had moved to this station 364 previously.

When the layer 110, moved by the pusher 373, is entirely on the roller table 366, or on the low friction coefficient plane, the shuttle 700 with the tray 118 can be positioned, or can already be found, below the roller table 366 in a position corresponding to the position that the layer 110 must have on the tray 118; if the shuttle 700 with the tray 118 is already in a position below the roller table 366, the pusher 373 will centre the layer 110 with respect to the tray 118; in any case the position of the layer 110 above the roller table 366 and the position of the tray 118 must match.

At this point the layer 110 held in position by the pusher 373 can be placed on the tray 118 by returning the roller table 366 to its first waiting position 367, which can in fact allow the layer 110 to rest on the tray 118.

The divider layer picking-up station 361 can be built according to two embodiments, depending on the position in which the divider layer is located with respect to the layer 110, during the layer picking-up phase.

In a first case in which the divider layer continues to adhere, at least partially, to the upper plane of the layer which is located under the layer 110 that is being picked, i.e., the divider layer is resting on top of each layer 110, as illustrated for example in the Figures 36-38, the divider layer picking-up station 361 can comprise a simple support plane for the layer 110.

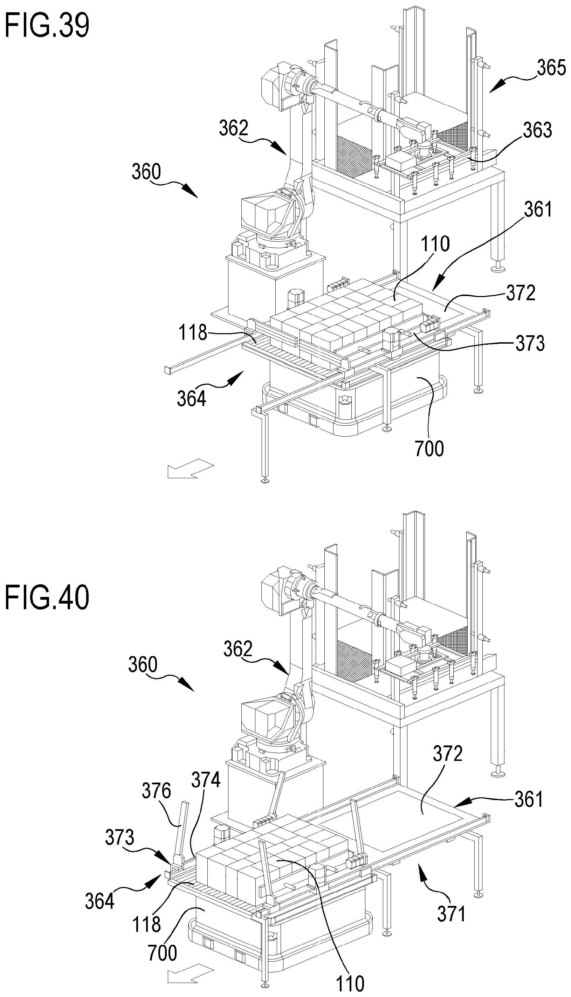

In a second case in which the divider layer continues to adhere to under the layer 110 of the SKU being picked, for example due to the suction action of the picking gripper 109 through the layer of SKUs, particularly when the SKUs have an irregular shape and there may be gaps between the various SKUs of the layer 110 (the situation in which the divider layer is under the layer is illustrated in Figures 39-46), the divider layer picking-up station 361 comprises a suction plane 371 on which the divider layer will be placed with the layer 110 arranged in turn on top of the divider layer.

Naturally, the divider layer picking-up station 361 can always include the suction plane 371, but this will be operated only when required by the position of the divider layer with respect to the layer 110, as described below.

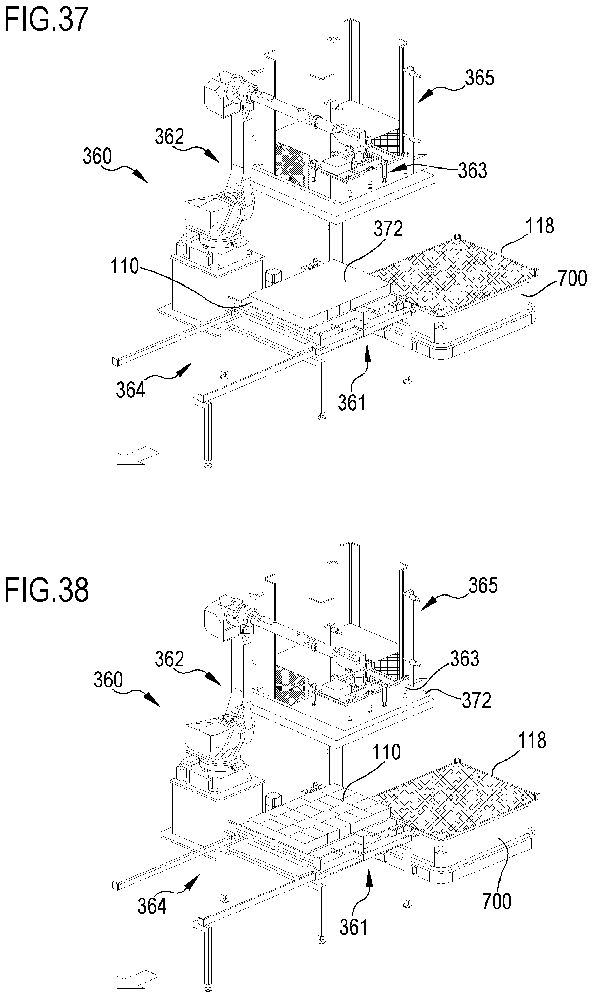

Figures 37 and 38 relate to the version of the second group 360 in which the transfer of the layer 110 onto the tray 118 takes place directly without the roller table 366; Figure 37 shows a divider layer 372 positioned over a layer 110 of SKUs which was previously placed by the gripper 109 of the robot 108 of the depalletizing island 100 or by a similar device for picking up a layer. The robot 362 equipped with the gripper 363 can pick up the divider layer 372 directly above the layer 110 and, if provided, can place the divider layer 372 in the storage station 365.

The layer 110 can then be transferred onto the tray 118 according to the methods previously described.

Figures 39 and 40 also relate to the version of the second group 360 wherein the transfer of the layer 110 onto the tray 118 takes place directly without the roller table 366.

In this example, the divider layer 372 is below the layer 110; in Figure 39 the layer 110 previously placed by the gripper 109 of the robot 108 of the depalletizing island 100 (not shown), being transferred by means of the pusher 373 onto the tray 118, the divider layer 372 can also be observed which is held by the suction plane 371 in the divider layer picking-up station 361.

In Figure 40 the layer 110 has been entirely transferred to the tray 118, the pusher 373 has opened and does not interfere with the layer 110, so that the shuttle 700 can move away from the divider layer removal island 350 with the layer 110.

The divider layer 372 which has continued to adhere to the suction plane 371 during the transfer phase of the layer 110 can be picked by the robot 362 by means of the related gripper 363. For this purpose, the suction plane 371 is deactivated so as to allow the gripper 363 to pick up the divider layer 372 and place it in the storage station 365.

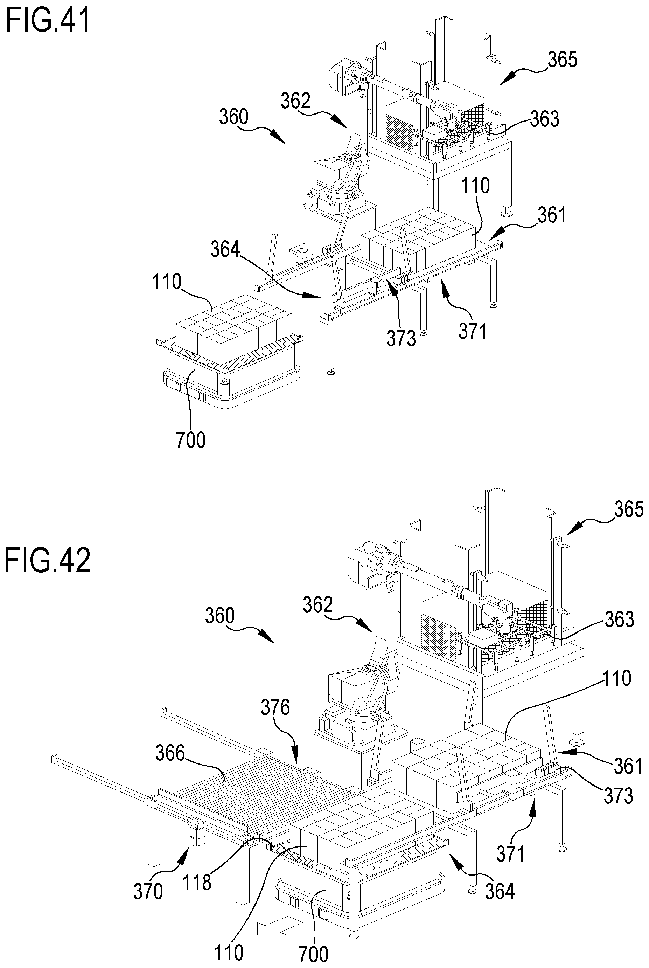

Figure 41 shows the shuttle 700 moving away with the layer 110, while in the meantime a new layer 110 has been placed in the layer picking-up station 361 and the divider layer removal cycle can start again.

Figure 42 shows the version of the second group 360 equipped with a roller table 366 or a low friction coefficient plane, already illustrated in Figure 36.

A shuttle 700 can be observed with a tray 118 onto which a layer 110 has been transferred still in the layer transfer station 364, but on its way away.

The roller table 366 is in the first waiting position 367 having returned to that position after placing the layer 110 which is located above the shuttle 700 on its way away; a new layer 110 had been previously placed by the gripper 109 of the robot 108 of the depalletizing island 100, or by a similar device for picking up a layer, and the pusher 373 has returned to the divider layer picking-up station 361. It should be noted that in this example the divider layer is located below the layer 110.

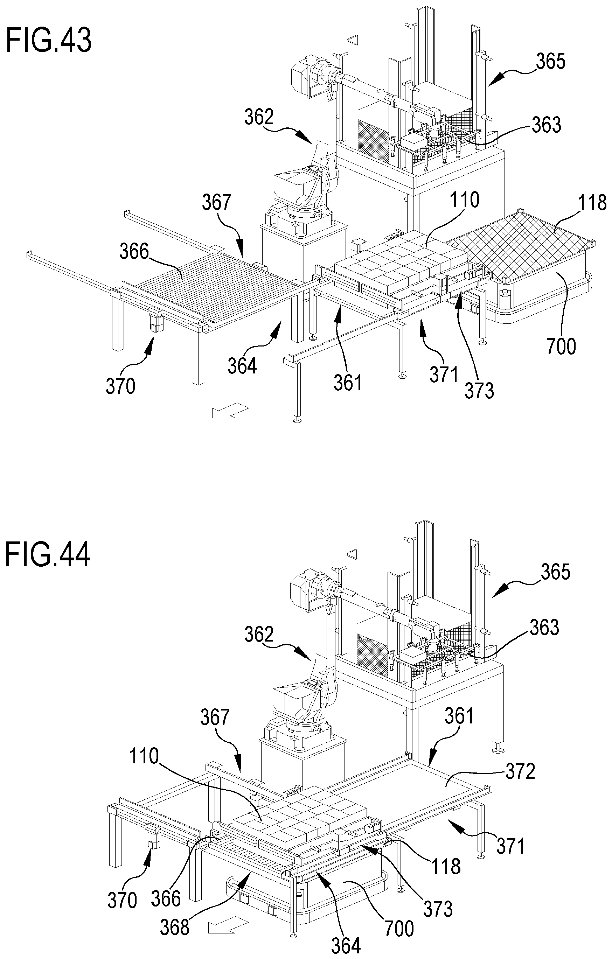

In Figure 43 the pusher 373 has closed compacting the layer 110 so as to be able to transfer it towards the layer transfer station 364, in the meantime a shuttle 700 with the tray 118 has approached the layer picking-up station 361 and is preparing to go under the bridge structure that supports the divider layer picking-up station 361.

In Figure 44 the shuttle 700 with the tray 118 has gone under the divider layer picking-up station 361 and is located in the layer transfer station 364 below the roller table 366.

Meanwhile, the roller table 366 has moved to the second position 368 for receiving the layer 110 of SKUs and the layer 110 has been transferred by the pusher 373 onto the same roller table 366, in this way the layer 110 has been released from the divider layer 372 which is retained by the suction plane 371 in the divider layer picking-up station 361.

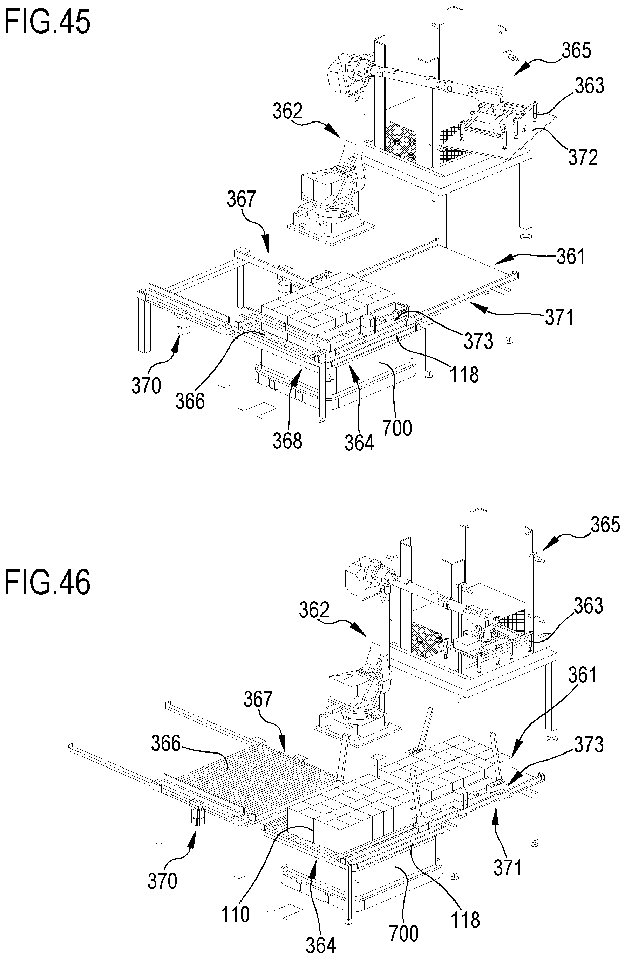

As can be seen in Figure 45 the robot 362, through the related gripper 363, has picked up the divider layer 372 and is transferring it to the storage station 365.

The divider layer has continued to adhere to the suction plane 371 during the transfer phase of the layer 110 and subsequently the suction plane 371 had been deactivated so as to allow the gripper 363 to pick up the divider layer 372.

In Figure 46, the roller table 366 has returned to its standby position 367 having allowed, during the return movement, the layer 110 to be placed on the tray 118, the layer 110 having been kept in the correct position by the pusher 373; the shuttle 700 can move away with layer 110 without the divider layer on the tray 118.

In the meantime, a layer 110 has been placed in the divider layer picking-up station 361 and the pusher 373 which had opened can return to this station starting another cycle for picking up the divider layer.

The tray 118 with the layer 110 is transferred from the exit 121 to a first autonomously guided vehicle 700 which in turn takes it to the first automated warehouse 200 for layers of uniform packages.

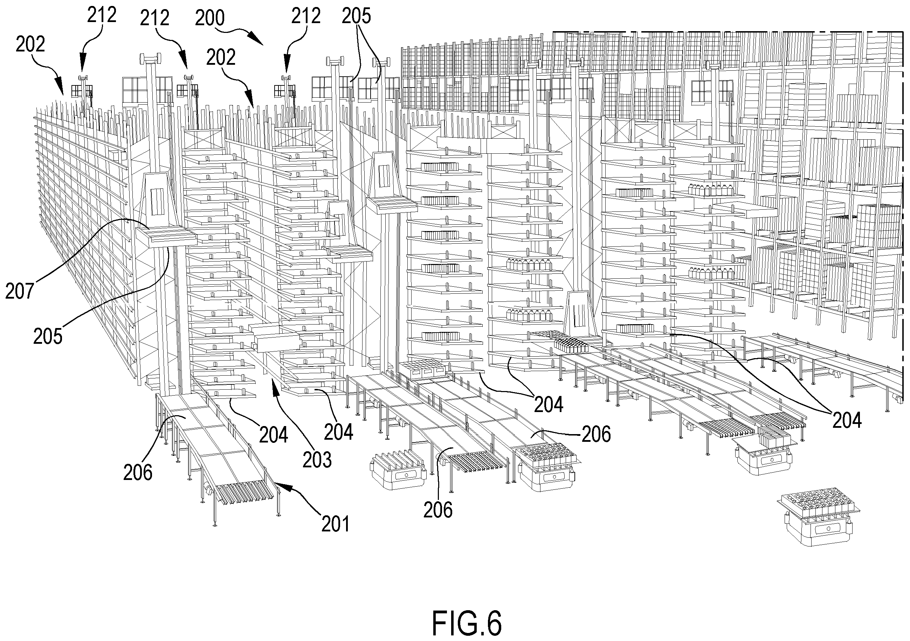

Figures 6-9 show the first automated warehouse 200 for complete or partial layers of SKUs or uniform packages arranged on trays 118, in this warehouse the storage of trays 118 with a layer 110 of SKUs or uniform packages takes place.

In this first warehouse 200, the layer 110 of uniform packages, or SKUs, can be complete, in the event that the tray 118 with the related layer 110 comes from the depalletizing island 110 described above, or the tray 118 can comprise a lower number of packages, i.e., the layer is incomplete if the tray has returned from the palletizing island 400 for single packages. Observing Figure 6, the first warehouse 200 has a front side, a rear side and comprises a structure with a plurality of levels and shelves 202 with locations for storing the trays 118, the shelves 202 are separated by corridors 203; according to one version of the present invention the shelves 202 are of the double depth type, i.e., they comprise two unique locations capable of accommodating two trays 118 placed side by side depth-wise with the related SKUs.

The first warehouse 200 comprises in the front side an infeed area 201, interfacing stations 204, these stations are located on each level of the warehouse 200 and are adjacent to the corridors 203, elevators 205 and conveyors 206; the latter can be made, for example, with catenaries and/or motorized rollers.

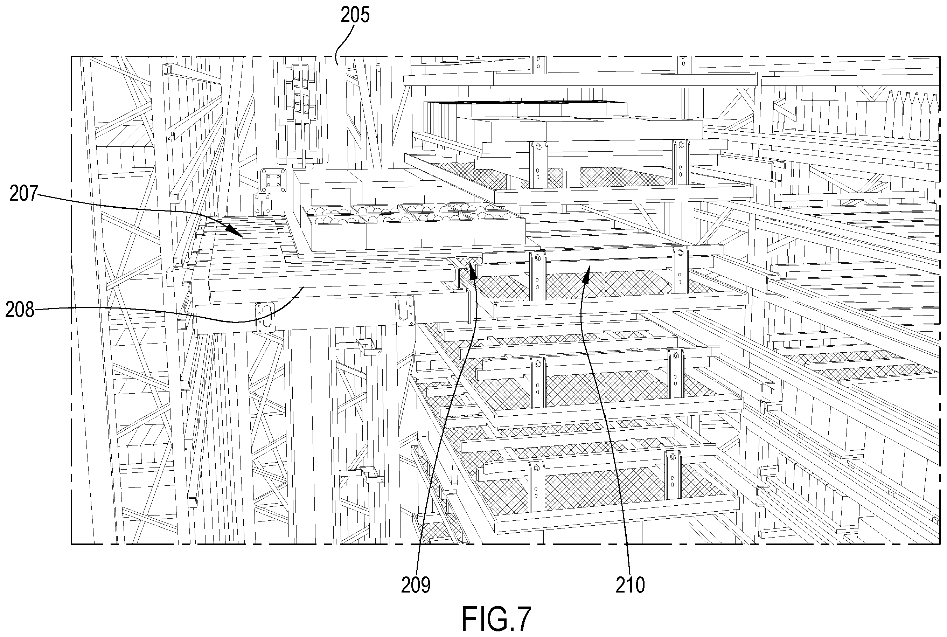

As shown in more detail in Figure 7, each elevator 205 comprises a cradle 207 equipped with motorized rollers 208 and telescopic forks 209 for transferring the trays 118, the forks 209 are located between the motorized rollers 208 and can be inserted into the interface stations 204, as these are made with support bars 210 arranged at given intervals which ensures space for the introduction of the telescopic forks 209.

The telescopic forks 209 are inserted below the tray 118 and move it to the interface station 204 in a substantially orthogonal manner with respect to the conveyors 206.

The bars 210 are sized so as to support the weight of the tray 118 with a layer of SKUs.

The trays 118 with the related layers of complete or incomplete uniform SKUs are taken by a first shuttle 700 to the infeed area 201 of the first warehouse 200.

At the infeed area 201, the first shuttle 700 transfers the tray 118 with the related SKUs to a conveyor 206 according to one of the methods previously indicated for transferring the tray 110 to and from the depalletizing island 100.

The tray 118 is transferred to the lifting area of the warehouse 200 via the conveyor 206 which ends on board the cradle 207 of the elevator 205; the cradle 207 is able to receive the tray 118 since it is equipped with motorized rollers 208 which rotate in a synchronized manner with the conveyor 206.

To transfer the tray 118 to the interfacing station 204, considering that the telescopic forks 209 are located slightly below the plane of the motorized rollers 208, the motorized rollers 208 can be lowered thus supporting the tray 118 with the telescopic forks 209.

In this way, the telescopic forks 209 can transfer the tray 118 with the SKUs to the interfacing station 204; as mentioned above, the forks 209 have a substantially orthogonal movement with respect to the conveyors 206.

It should be noted that the elevator 205 has a cradle 207 with the possibility of handling single or multiple (two or more) trays 118 and that at least two forks are provided for each tray 118 located in the cradle 207.

For example, the elevator 205 can accommodate in the cradle 207 two trays 118 with the related loads and therefore has two forks 209 for each tray 118.

Each pair of forks 209 can move a tray 118 which can be stored independently in one of the interfacing stations 204 even at different levels of the warehouse 200.

The warehouse management software 200 assigns a unique location to the tray 118 with the SKUs, the elevator 205 transfers the tray 118 to an interface station 204 located on the same level as the corresponding unique location.

To manage the handling of the trays 118 with the SKUs inside each one of the corridors 203 and on a single level of the warehouse, third shuttles 211 are provided, i.e., a third type shuttle which stays inside the warehouse 200.

The shuttle 211 comprises a loading plane 217 and is characterized by a horizontal movement axis implemented for example with motorized rubber wheels 213 which run on metal guides 214 connected to the structure of the warehouse 200, while the loading or placement of the tray 118 takes place from the side of shuttle 211.

The warehouse 200 can comprise one shuttle 211 for each level and for each corridor 203; for example, in the case shown in Figures 1, 2 and 6, the warehouse 200 comprises three corridors and fourteen levels, therefore, the maximum number of third shuttles 211 that can be found in the warehouse is forty-two, in Figure 3 the warehouse is somewhat larger and includes four corridors.

Obviously, a smaller number of shuttles 211 is also possible and the minimum number is one shuttle for each corridor.

When the shuttles 211 are not present on all levels of the warehouse 200, means for transferring the shuttles 211 from one level to another must be provided, for example by means of dedicated elevators arranged in each corridor for the transfer of the shuttles.

In the warehouse 200 shown in FIG. 6, the shuttle elevators 211 are located on the rear side opposite to that of the elevators 205 and are indicated with 212 (see also Figures 1 and 2).

The handling for placement or picking up of the tray 118 to or from the unique location of the warehouse 200 from or to the shuttle 211, as well as from or to the interface station 204, is carried out by means of the telescopic arms 215 equipped with swivel pins 216 installed on board the shuttle 211.

The telescopic arms 215 with the swivel pins 216 can pull or push the tray 118 from the unique location of the warehouse 200, or from the interfacing station 204, towards the loading plane 217 of the shuttle 211 and vice versa.

According to one version of the present invention, the swivel pins 216 make contact to the lateral edges of the tray 118 causing the tray to slide on the sliding plane of the shuttle 211.

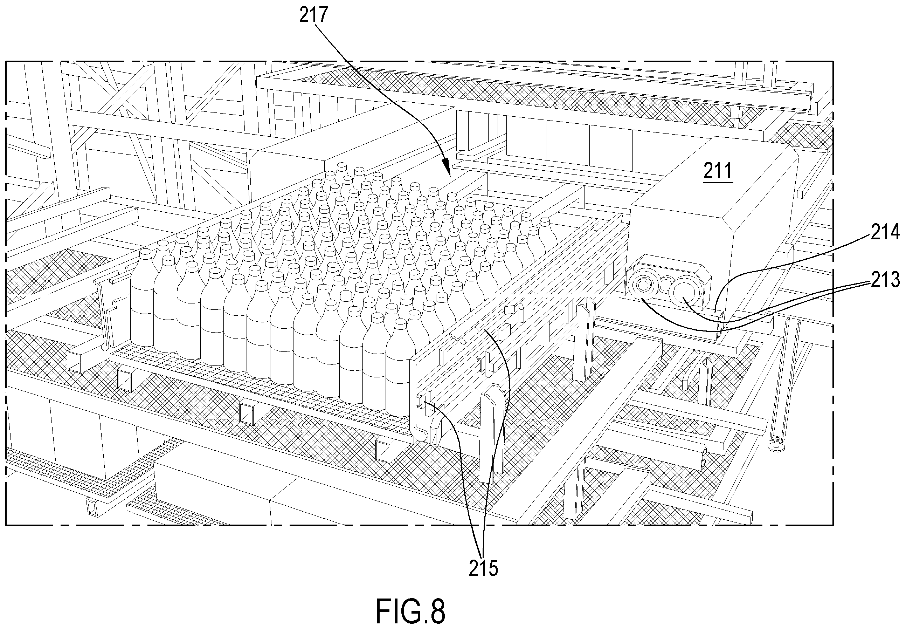

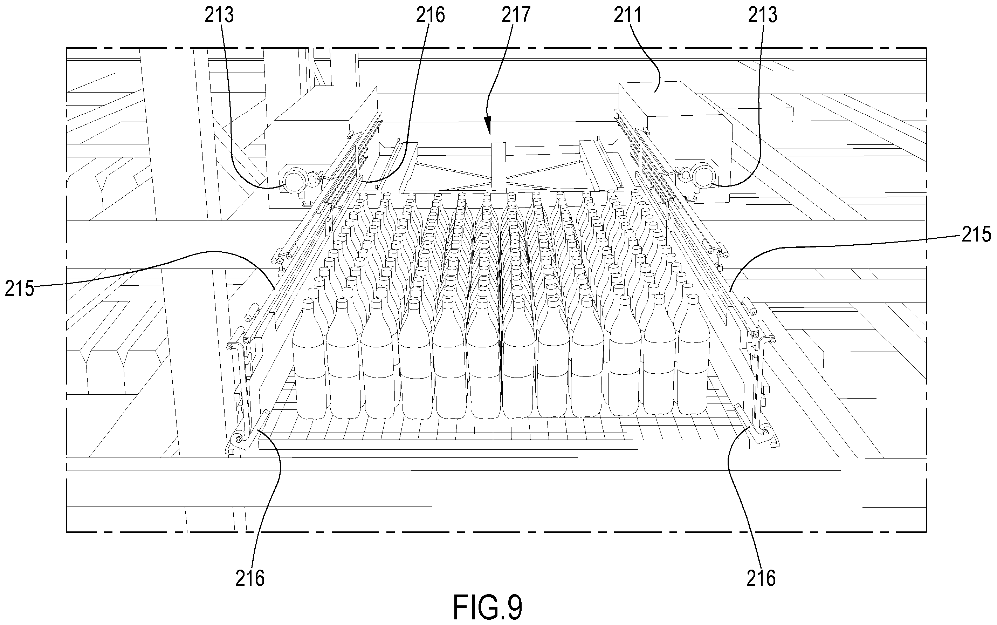

As shown in more detail in Figures 8 and 9, the telescopic arms 215 are of the double extension type and comprise two swivel pins 216 at the outer ends of the arms 215 and two more swivel pins 216 on the inner side of the shuttle 211, so as to allow contact of the pins 216 with the lateral edges of the tray 118 both to pull and to push the tray itself.

To pick up a tray 118 with a given type of SKU from the warehouse 200, the shuttle 211 positions itself next to the unique location where the tray 118 with the requested SKUs is located and picks up the tray 118 with the telescopic arms 215 with the pins 216 from the unique location by transferring it to the loading plane 217 of the shuttle 211.

Similarly to the picking-up phase, for placing a tray 118 in the required unique location of the warehouse 200, the shuttle 211 transports the tray 118 next to the unique location and places it via the telescopic arms 215 with the pins 216. It should be noted that the trays 118, on the lower side in contact with the sliding surfaces of the shuttle 211, can be equipped with special low-friction surfaces to facilitate the movement of the tray 118 from the loading plane of the shuttle 211 to the unique location of the warehouse 200 and vice versa.

The rotation of the swivel pins 216 can take place by means of actuators placed on one of the extensions of the telescopic arm or the rotation of the swivel pins 216 can take place by means of mechanical cams arranged inside the shuttle 211 capable of transferring the rotation motion to pin 216 itself.

According to another version of the present invention not shown in the figures, the loading or placement of the tray 118 can take place by means of telescopic forks of the same type already described for the elevator 205.

In case of picking-up following a call from the warehouse management software, the shuttle 211 performs the placement of one or more trays 118 in the interfacing position on the interface station 204, which will then be moved to the unloading plane by means of an elevator 205.

Subsequently, the elevator 205 transfers the trays 118 onto the conveyor 206 via the motorized rollers 208.

The conveyor 206 transfers the trays 118 to the infeed area 201 where the trays are picked up by the shuttles 700 through linking with chains or conveyor belts as previously described for the infeed and outfeed of the trays 118 in the depalletizing island 100.

Before the transfer conveyor for the shuttles 700 there may be a control device, for example a vision system, to check the consistency of the SKUs, or packages, on the trays 118 and detect any problems: overturned packages, non-compliant package dimensions, non-conforming layer dimensions, etc.

If the control device detects any problems, the tray 118 with the SKUs is not taken by the shuttle 700 to the palletizing island 400 for single packages but is taken by the shuttle 700 to an operator control island, so as to be able to restore the SKU load.

The apparatus 1 can also comprise a scanning station 230 of the palletizing SKUs which can be fed from the automated depalletizing island 100 or from a manual depalletizing station (Figures 1-3).

The scanning station 230 can be integrated with the handling systems present in the automated warehouse 200 or a dedicated, fully automated or semi-automated measuring station can be provided; SKUs can be measured while in motion or statically in the dedicated measuring station.

In order to collect and classify the characteristics of the SKUs, the scanning station 230 is equipped with an automated scanning device for detecting the physical characteristics of the SKUs.

The following physical characteristics of the SKUs can be detected: weight, coordinates of the centre of gravity and the complete inertia tensor, i.e., the moments of inertia on the 3 main axes of rotation and the products of inertia in the three Cartesian planes, other geometric characteristics such as: size, shape, flatness of the support surfaces and mechanical characteristics such as stiffness and damping coefficient of the SKUs.

The mass properties can be measured by means of load measuring devices arranged in space which work in conjunction with actuators which exert combined product accelerations in the three directions of the Cartesian axes.

The analysis of the combined forces and torques allows to define the weight, the inertia tensor and the coordinates of the centre of gravity.

The measurement of the shape of the surfaces can be performed via optical or ultrasonic or contact scanning systems which allow the flatness of the contact surfaces of the SKUs to be analyzed.

The measurement of the mechanical characteristics can take place using systems that detect the deformation of the SKUs following the application of a force.

These tools simulate the behaviour of the SKU when stressed by the weight of the palletized SKUs on top, by measuring the deformation and springback of the SKU surfaces.

The deformation of the SKU, as well as the other characteristics of the SKU, affect the final stability of the pallet during transport. The measurement of the elastic and plastic deformation is acquired and included in the SKU master data and classification database of the apparatus 1. All the collected data of the SKUs are automatically acquired and stored in the database of the apparatus 1.

The combined UDC training software can then use this information to optimize the SKU storage sequence to maximize stability and volumetric fill rate.

Additionally, the combined UDC training software can also use this information to check for stackability of packages to ensure that packages are not damaged by the weight of packages placed on top.

Using this information, a physical model of the combined UDC can also be created which allows to simulate its behaviour in post-palletization handling and to evaluate in advance the requirements regarding stabilizing elements.

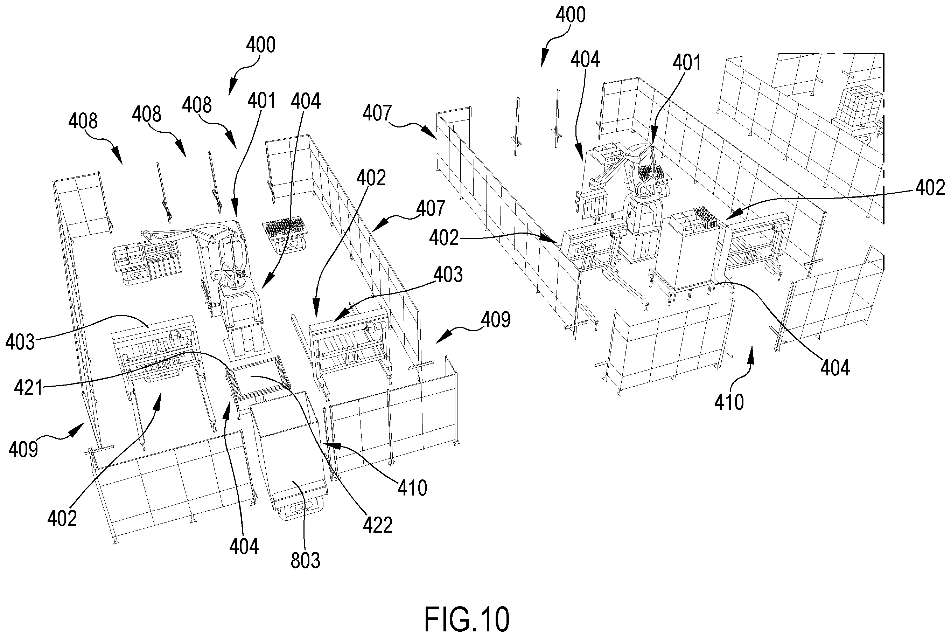

Figure 10 shows in more detail two first palletizing islands 400 for single SKUs, these islands are part of the apparatuses 1 already illustrated in Figures 1, 2 and 3, and their purpose is to form the combined UDCs both in the case where palletizing requires some complete layers of SKUs (Figures 1 and 2), and in the case that palletization consists of single SKUs (Figure 3).

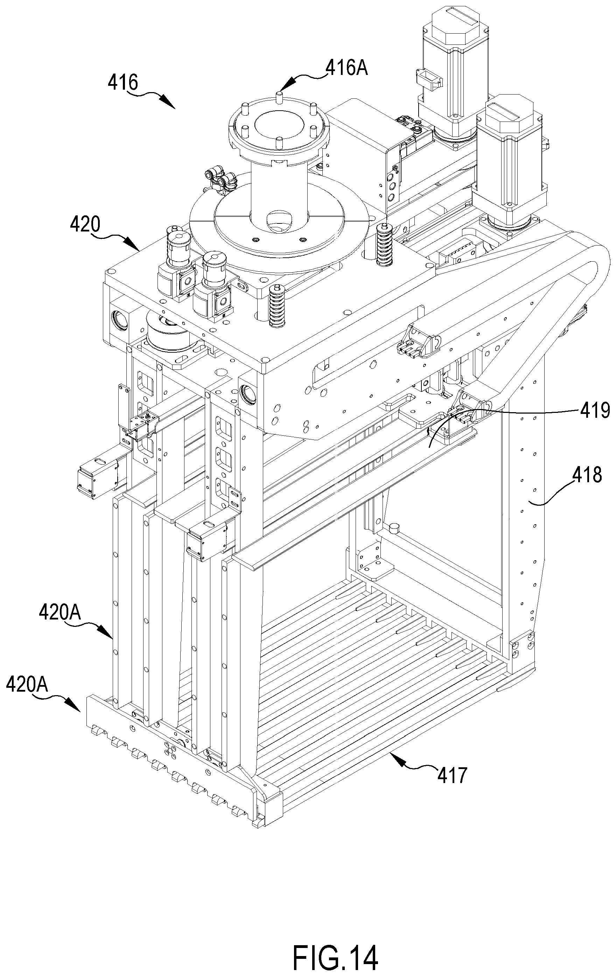

The first palletizing island 400 essentially comprises: a programmable manipulator, for example an anthropomorphic type robot 401, equipped with a palletizing gripper 416, at least one picking station 402 of the SKUs equipped with a lifting device 403, at least one storage station 404 equipped with a conveyor 421 with a movable section 422 that can be lifted and lowered vertically. According to what is shown in Figures 14-16, the gripper 416 essentially comprises a plurality of horizontal comb-shaped support elements 417 fixed to a vertical structure 418 movable in a horizontal direction, and at least one horizontal presser 419, movable in a vertical direction, and in addition, the gripper 416 comprises a substantially vertical abutment element 420A.

In the embodiment shown in Figures 1-3 and 10, the palletizing island 400 comprises two picking-up stations 402 of the SKUs and two storage stations 404, but it must be considered that the number of picking-up stations 402 and storage stations 404 can be greater, this number is a function of the transfer speed of the SKUs from the picking-up station to the storage station provided by the robot 401.

For example, in the case of SKUs that are difficult to pick up and/or place, i.e., with long picking-up, transferring and releasing times, then a single robot might be able to serve only one picking-up station and only one storage station.

In the case of easily handled SKUs, i.e., with short times for picking up, transferring and releasing, a single robot could cater for, for example, three picking-up stations and three storage stations or even more stations.

The pick and place stations should be positioned at ground level around the robot 401 so as to be equidistant from the robot itself.

The trays 118 containing layers of uniform SKUs, either complete or partial, are carried by a shuttle 700 to the SKU picking-up station 402.

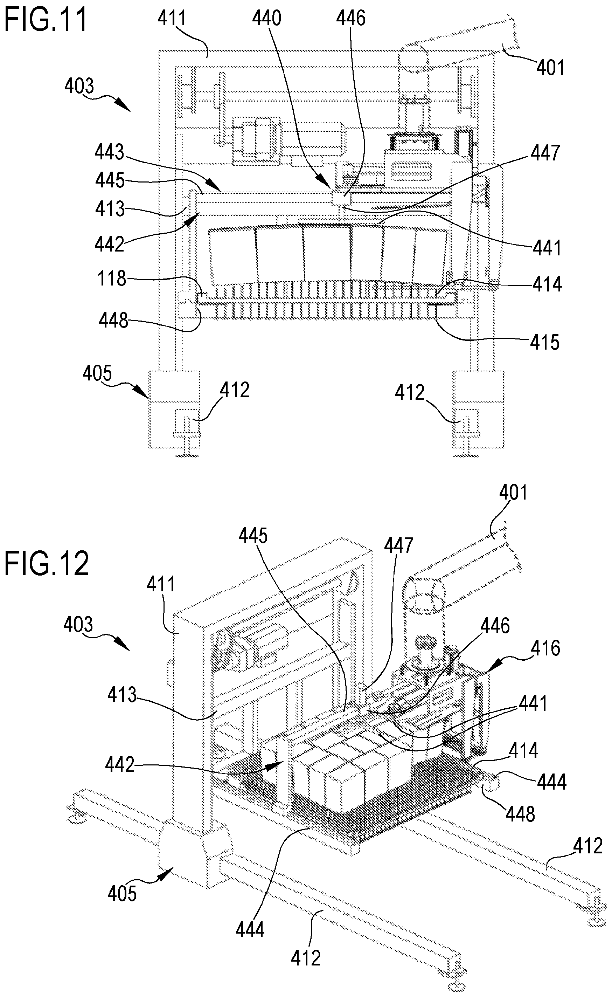

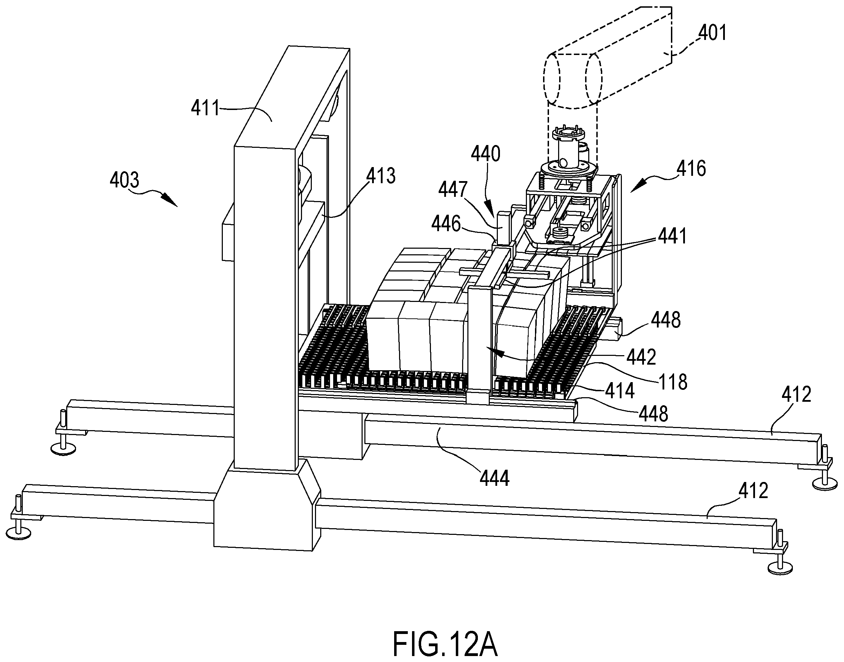

In Figures 11-13 the lifting device 403 is illustrated in detail, this device allows the SKU layer to be lifted off the tray 118 which is located on the shuttle 700; for greater clarity in Figures 11, 12 and 12A only the tray 118 is shown without the shuttle 700.

The lifting device 403 essentially comprises a support structure, for example a gantry structure 411, mounted on a base 412, a movable frame 413 sliding vertically in the gantry structure 411 and equipped with a plurality of support elements or slats 414 with respective upper ends intended to support the SKUs during picking-up.

The support gantry 411 can also be mounted on a carriage 405 which can be moved and operated horizontally on the base 412 according to the forward movement direction of the shuttle 700.

This further movement can be useful to avoid having to move the shuttle 700 back once the SKUs have been picked up.

The shuttle 700 can therefore be fed out in the opposite direction to the infeed one, consequently allowing other shuttles 700 to be brought to the picking-up station 402 in a waiting position before the station.

At the picking-up station 402, the lifting device 403 is inserted below the tray 118.

As can also be seen in Figures 11-13, the slats 414 are fixed to a plurality of bars 415 which are positioned at a given distance, the aforementioned distance of the bars 415 is complementary to the distance of the strips 702 of the upper plane 701 of the shuttle 700, i.e., where a slat 414 is located there is no strip 702.

The picking-up station 402 further comprises a device 440 for retaining the SKUs found on the tray 118; the holding device 440 can be integrated into the device 403 and aids a secure grip by the gripper 416 on the SKUs selected for being picked without interference with the SKUs which instead must remain on the tray 118.

The holding device 440 allows reliable picking-up of the SKUs even in the case of SKUs that are particularly unsteady or with characteristics such as to involve the risk of SKUs adjacent to those to be picked moving and/or falling, for example lightweight SKUs and SKUs with protruding carton flaps laterally, SKUs with caps, SKUs with plastic cases/trays with ribs and protrusions.

The holding device 440 comprises stop elements 441, which in the example of Figures 11, 12, 12A are made in the shape of a cross, which are movable on a horizontal plane and in a vertical direction.

The stop elements 441 can be moved by means of a Cartesian system 442 with three axes where the first and second axes on the horizontal plane move the stop elements 441 longitudinally and transversally - respectively - with respect to the direction of insertion of the tray 118 in the picking-up station 402 and the third vertical axis moves the aforementioned stop elements 441 in a vertical direction to adapt to the different heights of the SKUs to be treated.

During the picking-up operation, the stop elements 441 can be positioned above the SKUs adjacent to the one or ones to be picked up, preventing their movement, in particular their vertical movement.

This embodiment of the holding device 440 makes it possible not to introduce constraints or hindrances to the movement of the robot 401 which carries the gripper 416.

From a constructive point of view, the stop elements 441 can be handled by means of a Cartesian or anthropomorphic manipulator, able to move the stop elements 441 at least according to the three Cartesian axes of movement, two axes in the horizontal plane and one in the vertical plane, and possibly, also according to further axes, for example, to adapt the inclination of the retaining elements to the inclination of the SKUs, in the event that the lifting plane with the slats 414 is of the convex type as specified below.

In particular, Figures 11, 12, 12A illustrate a Cartesian manipulator which comprises a bridge structure 443 sliding on guides 444 in the same direction of movement as the shuttles 700. The bridge structure 444 comprises a crosspiece 445 on which a support 446 traverses which carries the stop elements 441.

The stop elements 441 are supported by a bar 447 which is in turn movable vertically in the support 446.

Furthermore, the stop elements 441 can be tilted by means of an adjustable joint (not shown) so as to follow the inclination of the upper part of the SKUs due to the curvature of the plane of the slats 414.

In use, through displacements in the horizontal plane of the bridge structure 443 with respect to the guides 444 and of the support 446 with respect to the crosspiece 445, the holding device 440 positions the stop elements 441 above the SKUs adjacent to the one or the ones to be picked up; then, it lowers the stop elements 441 on to the above-mentioned SKUs.

Thanks to the positioning of the stop elements 441 above the adjacent SKUs, the gripper 416 can therefore pick up the intended SKUs without the adjacent SKUs being possibly moved or overturned.

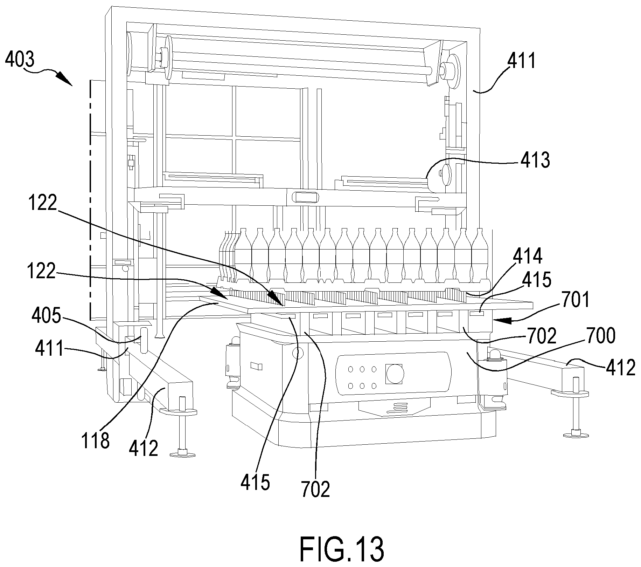

In Figure 13 the bars 415 can be observed inserted between the strips 702 of the upper plane 701 of the shuttle 700, furthermore it can also be observed that the slats 414 are inserted in the openings 122 of the tray 118.

The spacing and shape of the slats 414 are important for the purposes of correct lifting of the SKU layer, the slats 414 are arranged according to a rectangular grid with a given pitch in the transversal and longitudinal directions considering the SKU layer, generally this pitch is equal in both directions and must match that of the openings 122 of the tray 118, since, as will be seen below, the slats 414 must be inserted into the openings 122 of the tray 118 to lift the SKU layer from the support plane of the tray 118.

By way of non-limiting example, the pitch can be between 30 mm and 80 mm, i.e., as mentioned above, matching that of the openings 122 of the tray 118.

To facilitate the insertion of the slats 414 in the openings 122 of the tray 118, the picking-up station 402 can comprise a centring device 448 (Figures 11, 12 and 12A), e.g., integrated in the guides 444, which performs a centring operation on the tray 118.

The centring operation takes place by acting on the sides of the tray 118 moving it and making it slide over the upper plane 701 of the shuttle 700 until it is brought into the optimal position for inserting the slats 414 and allows to compensate for any errors due to the positioning tolerance of the shuttle 700 and/or the movement of the tray 118 with respect to the upper plane 701 of the shuttle 700 due to vibrations associated with navigation.

The pitch of the grid of slats 414 is chosen so as to leave space between the slats which must be sufficient both to allow the insertion of the comb-shaped support elements 417 of the palletizing gripper 416 between the slats 414, and to ensure good stability for the SKUs resting on the upper ends of the slats 414 before the picking-up phase by the gripper 416.

The spacing and shape of the slats 414 are important for proper operation, the individual slats 414 are shaped in such a way as to allow both transversal and longitudinal insertion of the support elements 417.

As stated above, good stability of the SKUs and the possibility of easy insertion of the elements 417 of the gripper 416 can be obtained with a pitch of the slats 414 between 30 mm and 80 mm.

It should be noted that this pitch measurement serves to ensure the stability of the SKUs, in relation to the type of SKU, and the ease of insertion of the support elements 417 of the palletizing gripper 416 between the slats 414.

However, it should be considered that, in relation to the type of SKU, pitch sizes outside the aforementioned range can also be chosen.

As already mentioned, the insertion of the gripping elements of the palletizing gripper 416 must take place with the greatest possible flexibility, i.e., with the possibility of inserting the support elements 417 between the slats 414 both in the direction parallel to the forward travelling direction of the shuttle 700, and according to the direction orthogonal to it, i.e., transversely and longitudinally considering the SKU layer.

The surface of the upper end of the slats 414 which is designed for contact with the SKUs can be shaped in such a way as to increase the support base with respect to the lower part of the SKUs to improve stability.

According to the embodiment illustrated in Figures 11, 12 and 12A, the slats 414 can be made in such a way that the upper ends in contact with the SKU layer 110 are not all on the same plane, but are in accordance with a convex arrangement where the ends in contact with the innermost part of the layer are at a higher level than the ends in contact with the outermost part of the layer 110; by way of non-limiting example, the difference in level between the inner ends and the outer ends is approximately 50 mm.

During lifting of the layer of SKUs, the aforementioned shaping of the slats 414 allows the SKUs to be inclined progressively from the centre of the layer towards the ends of the layer - the result being that spacing out of the SKUs is obtained in a simple and reliable way.

This shaping of the slats 414 is particularly advantageous during the picking-up of the SKUs because it reduces the risk of moving or overturning the SKUs adjacent to those which are about to be picked.

Figures 14-16 show the gripper 416 in more detail; the gripper 416 is able to pick up the SKUs that are on the sides of the full or partial layer that is on the tray 118.

The number of SKUs that can be picked up simultaneously by the gripper 416 is one or more than one, for example two or three, this possibility being a function of the size and weight of the SKUs, the palletization layout and the required speed.

As previously described, the gripper 416 essentially comprises a plurality of horizontal support elements 417 in the shape of a comb fixed to the vertical structure 418, which is in turn movable according to a horizontal direction, at least one horizontal presser 419 movable in a vertical direction and the vertical abutment element 420A, fixed with respect to the connector to the robot 401.

As illustrated in detail in Figure 14, the gripper 416 has a support frame 420 equipped with a connector 416A for the wrist of the robot 401.

In turn, the support frame 420 comprises the abutment element 420A which extends downwards in a substantially vertical manner and which is fixed with respect to the support frame 420. The support frame 420 also comprises the vertical structure 418 which is instead movable horizontally to which the plurality of horizontal support elements 417 in the shape of a comb are fixed and it also comprises the horizontal presser 419, movable in a vertical direction.

The support elements 417 are arranged horizontally so as to support the SKUs at the bottom during picking-up and ensure a secure grip with any type of SKU.

By means of actuator means located in the support frame 420, the frame 418 can slide horizontally with respect to the support frame 420 and the support elements 417 can be moved horizontally and inserted below the SKUs.

The distance between the support elements 417 is complementary to the pitch of the grid of slats 414. In fact, the support elements 417 can be inserted between the slats 414 both in the transverse direction and in the longitudinal direction considering the extension of the SKU layer, the striker element 420A is provided to keep the SKU or the SKUs still during the gripping and release of the same, while the horizontal presser 419 can rest on the SKUs to stabilize them.

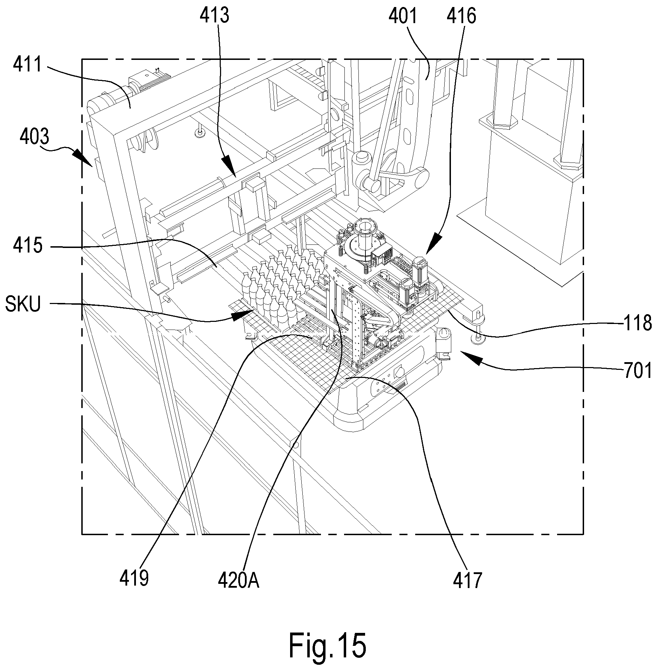

In Figure 15 the gripper 416 can be observed during the phase of picking up two SKUs, in this case two groups of bottles resting on a shelf.

The two SKUs have been lifted by the slats 414 and therefore are detached from the plane of the tray 118.

The gripper 416 is lowered by the robot 401 by positioning the support elements 417 below the lower plane of the SKUs and placing the abutment element 420A to rest against the side walls of the SKUs to be picked up.

Subsequently the support elements 417 are inserted between the slats 414 below the two SKUs and the horizontal presser 419 is lowered onto the SKUs so as to stabilize them.

The robot 401 can therefore safely lift the two SKUs to place them on the UDC being formed located in the storage station 404.

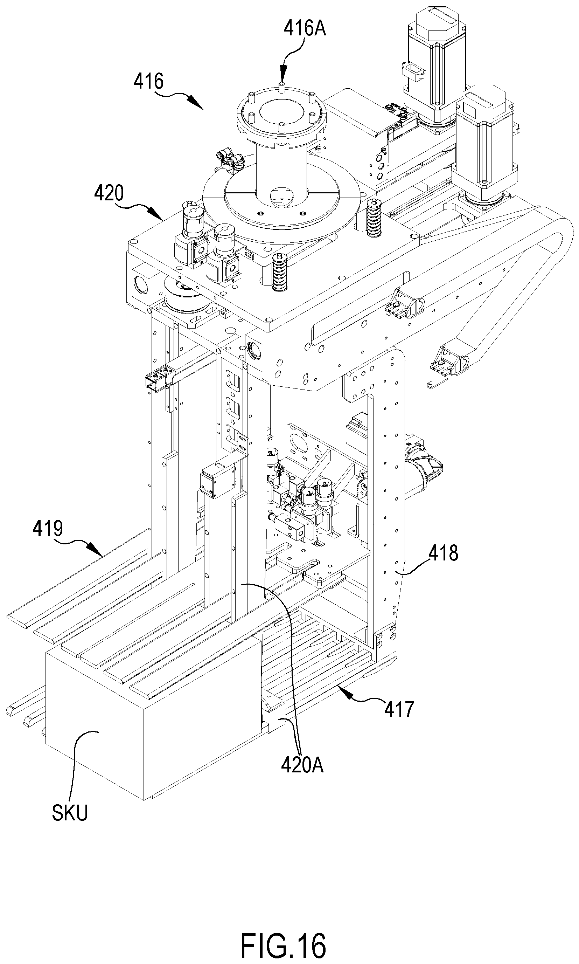

Figure 16 shows the gripper 416 during the release phase of the two SKUs on to a layer of the UDC being formed.

For the release, the robot brings the two SKUs into the right position, after which the gripper lifts the presser 419 and only moves horizontally, by means of the actuator means, the support elements 417, leaving the SKUs to rest on the layer of the UDC; the SKUs are also held in position by the abutment element 420A.

Once the SKU has been downloaded into the UDC being formed in the storage station 404, the robot 401 can start a new cycle by taking the SKUs from the picking-up station 402. When the specific SKUs necessary for the formation of the UDC have been picked up by the shuttle 700 located in the picking-up station 402, the lifting device 403 lowers the slats 414 by placing the remaining SKUs on the tray 118 and making the gantry structure 411 move back via the carriage 405 which moves on the base 412 by extracting the bars 415 from the strips 702 of the upper plane 701 of the shuttle 700.

Then the movable frame 413 is raised above the level of the SKUs left on the tray 118 so as to allow the shuttle 700 to go under the gantry structure 411.

As mentioned, the shuttle 700 can therefore exit from the outlet 409 in the opposite direction to the entry direction, consequently allowing another shuttle 700, waiting upstream from the withdrawal station 402, to be brought into the station 402.

Therefore, according to this version of the invention, the circulation of the shuttles 700 inside the palletizing island can occur in a unidirectional way obtaining a fast supply of SKUs; however, for any other reason or requirement, this movement can also take place in a bidirectional way.

It may happen that one or more particular SKUs, which are being picked up from a tray 118 of a shuttle 700 which is located in a depalletizing island 400, are needed, after a certain period of time, in a second depalletizing island 400; the aforementioned time may be long enough not to justify a waiting time at the second depalletizing island 400 of the shuttle 700 with the tray 118 carrying this SKU, once the mission has ended at the first depalletizing island 400.

On the other hand, the waiting time at the second depalletizing island 400 is also relatively short, so as not to justify the return of the tray 118 with the requested SKUs to the first automated warehouse 200, given that the displacement of the elevator 205 and of the third shuttles 211 located in this warehouse 200 could take longer than the waiting time of the first shuttle 700 at the second depalletizing island 400.

For these cases, the apparatus 1 can comprise a third warehouse 450, called proximity or opportunity warehouse; as illustrated in Figure 3, there are three third warehouses 450, each of which includes three warehouse modules 451, this third warehouse 450 is located near the depalletizing islands 400 to shorten the path, and hence the necessary time, required for the shuttles 700 to travel between the palletizing islands 400 and the aforementioned third warehouse 450.

Thanks to the third warehouse 450, the shuttle 700 is able to unload and reload a tray 118 with SKUs that must be used after a short period of time, such as not to justify waiting for the shuttle 700 at the second depalletizing island 400, nor storing the tray 118 in the first automated warehouse 200.

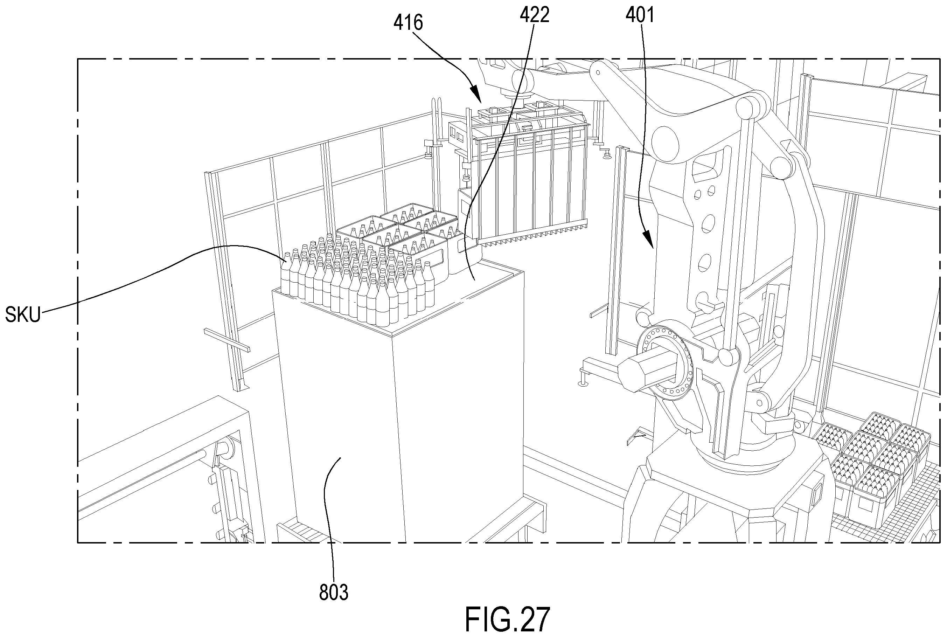

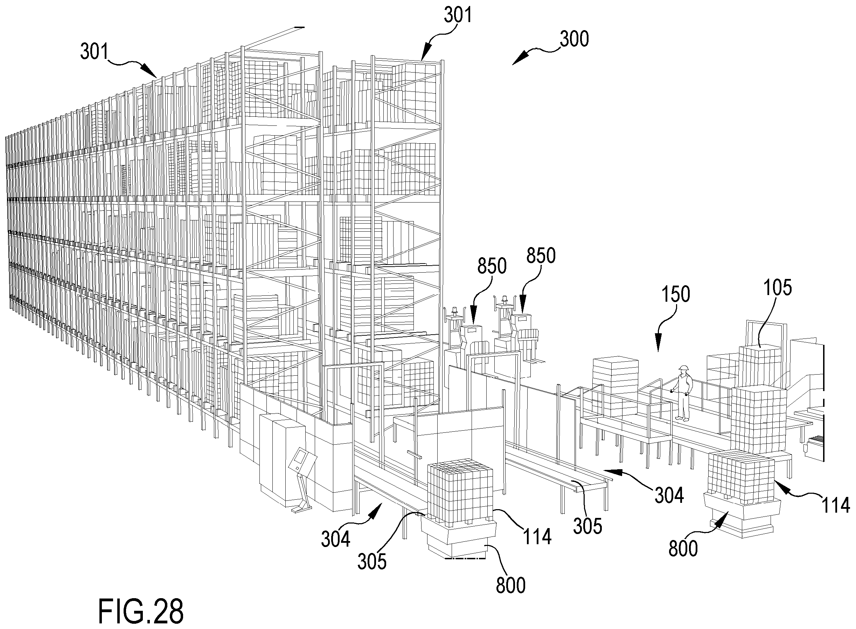

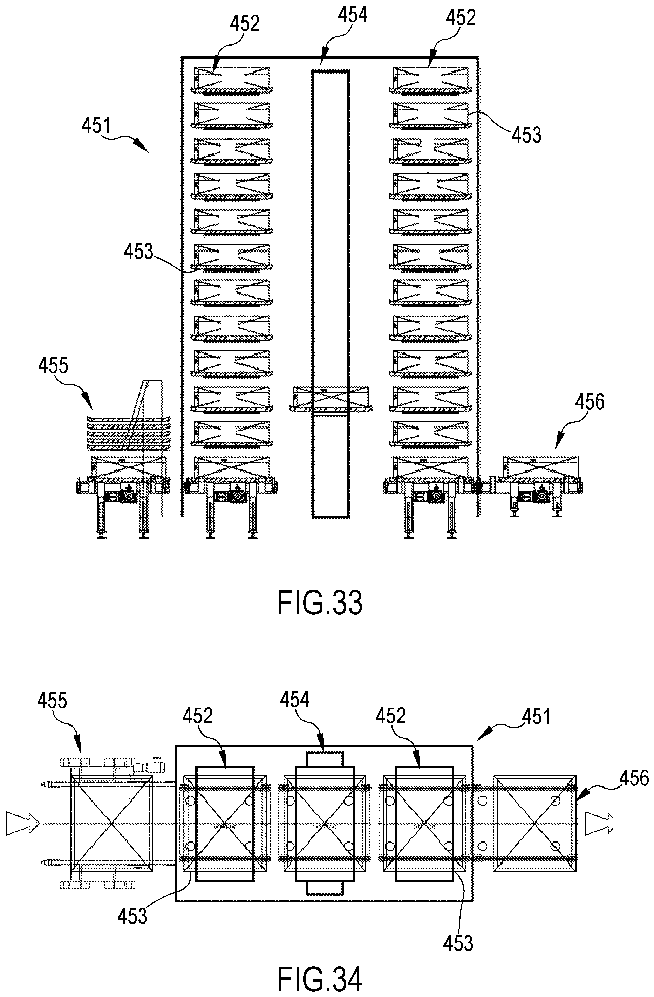

Figures 33 and 34 show a warehouse module 451 of the third proximity warehouse 450 as an elevation view in Figure 27 and as a plan view in Figure 28 - respectively. The warehouse module 451 essentially comprises a pair of shelves 452 which develop in a vertical direction and comprise a plurality of stations 453, each capable of accommodating a tray 118 with the related SKUs, for accessing the stations 453 a vertical elevator 454 is provided, which is located in the centre of the pair of shelves 452 and has a mechanism for storing and picking up the trays 118 similar to that of the shuttle 211 of the first automated warehouse 200, i.e., through telescopic arms equipped with swivel pins which come into contact with the side edges of the tray 118 by sliding the tray from the vertical elevator 454 to the station 453 and vice versa.

The warehouse module 451 is completed by an infeed bay 455 and an outfeed bay 456 for the entry and exit of the trays 118, from and to the shuttles 700.

Since the stations 453 are served directly by the vertical elevator 454, the time required to store the trays 118 is very short and the entire storage and picking up process, and vice versa, takes place very quickly.

The palletizing or formation of the combined UDC takes place in the storage station 404.

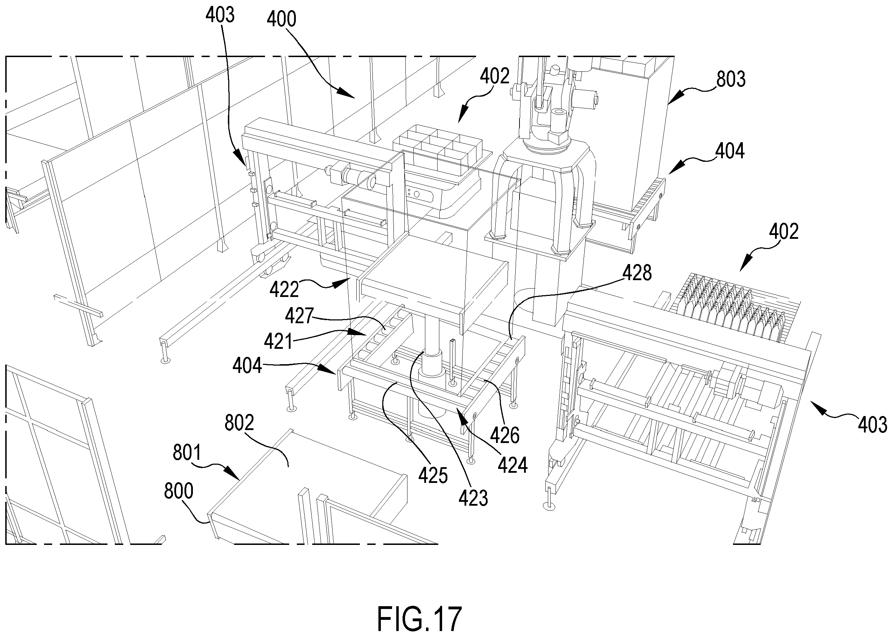

**In** this station 404, to improve the stability of the UDC linked to the palletization of different SKUs, a containment cage 803 can be provided which is brought to the palletizing island 400 by means of the shuttle 800 (Figure 10) and is then transferred, via the shuttle 800 conveyor 802, on to the storage station 404. As shown in Figure 17, the storage station 404 essentially comprises a conveyor 421 equipped with different sections.

The conveyor 421 comprises in its centre a movable section 422 which can move in the vertical direction by means of lifting means 423, e.g., a hydraulic cylinder with several extensions or an equivalent mechanism such as a scissor lift, or an external lifter, and a fixed section 424 that surrounds the movable section 422.

As will be seen below, the cage 803 must remain at a fixed height and cannot be supported by the movable section 422, therefore the fixed section 424 has the function of supporting and transferring the cage 803 to and from the shuttle 800.

Considering the front-to-back arrangement of the parts of the storage station 404 illustrated in Figure 17, the fixed section 424 comprises a front conveyor 425 which precedes the movable section 422, two side conveyors 426 and 427 which are located respectively to the right and left of the movable section 422, and a rear conveyor 428 which follows the movable section 422.

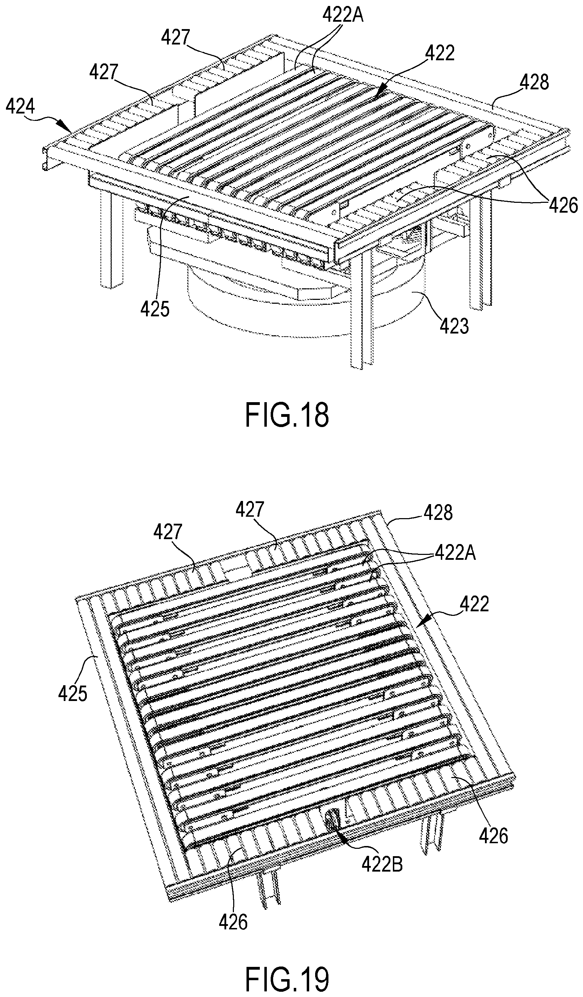

Figures 18-21 show in detail the fixed section 424 and the movable section 422 of the storage station 404.

The movable section 422 must have dimensions substantially matching those of the SKU layer of the combined UDC.

Since the dimensions of the SKU layers can be variable and have a non-linear outline, the movable section 422 of the conveyor 421, which supports the UDC being formed, must therefore be made in such a way as to vary its plan dimension in relation to the different UDCs.

The movable section 422 comprises the conveying elements exemplified in the figures with a series of belts 422A, which may comprise e.g., a modular chain, which can vary their size in the longitudinal direction and their mutual distance in the transverse direction. These conveying elements of the movable section 422 must have characteristics which allow for the creation of reduced passages necessary to prevent the SKUs from falling or jamming during the transfer from and to the shuttle 800 for UDC handling.

In Figure 18 the movable section 422 is illustrated in the configuration with minimum dimensions both in the longitudinal and in the transverse direction, while in Figure 19 the movable section 422 is illustrated in the configuration with maximum dimensions both in the longitudinal and in the transverse direction.

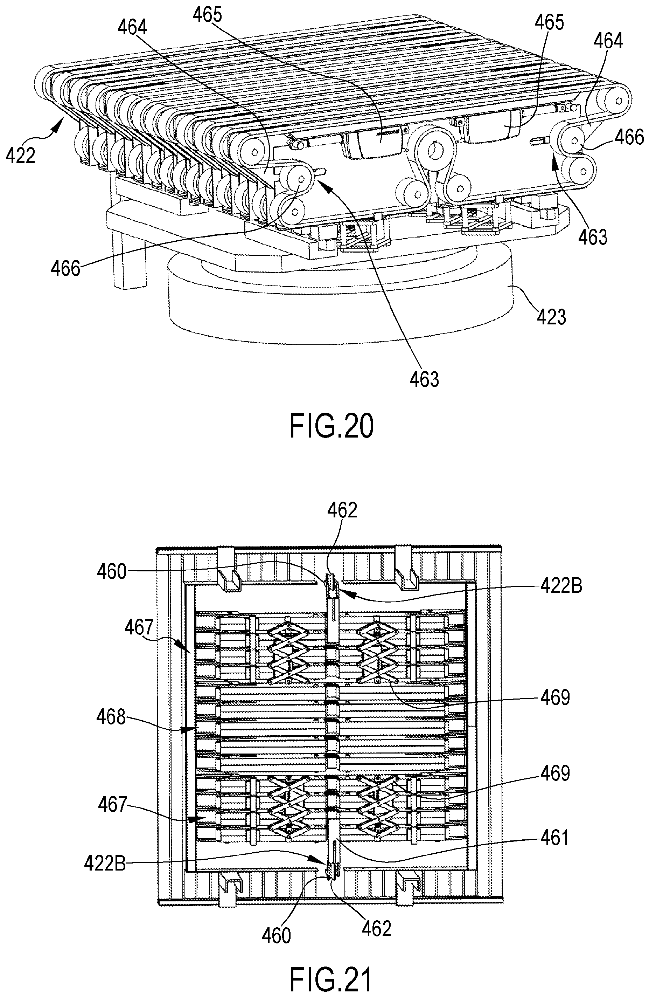

Furthermore, as mentioned above, in the area of the side conveyors 426, 427 there are centring devices 422B for the movable section 422 with respect to the cage 803. Figure 19 shows one of the two centring devices 422B provided for the movable section 422, Figure 21 shows both centring devices 422B.

According to the example of Figures 19 and 21, there are two centring devices 422B which comprise swivel wheels 460 supported by a respective bracket 461 which is in turn connected to the structure of the movable section 422.

The wheels 460 have guide means 462, for example a V-shaped groove, provided for coupling in corresponding sliding profiles of the containment cage 803, as specified below.

In addition to the aforementioned centring devices 422B, in the area of the lateral conveyors 426, 427 locking devices of the cage 803 may possibly be present; these devices are used to avoid problems both during the insertion and upstroke of the movable section 422 inside the cage 803 and during the formation of the UDC.

Figure 20 shows the apparatus for varying the lengthwise dimension of the movable section 422.

Each belt 422A of the movable section 422 is made by means of a modular chain and comprises transmission elements 463 located at the end of the modular chain mounted on horizontally movable slides 464, in the direction of movement of the modular chain.

The movable slides 464 are driven by respective actuators 465 and at each end of the modular chain compensation means 466 are also provided, for example made with a horizontally movable wheel which determines a transmission of variable length for the modular chain.

**In** this way, the elongations or shortenings of each belt 422A due to the longitudinal dimension change of the movable section 422 are compensated by the transmission of variable length implemented by the horizontally movable wheel of the compensation means 466.

Figure 21 shows the apparatus for varying the transverse dimension of the movable section 422.

The movable section 422 comprises two side portions 467 and a central portion 468 provided with a support frame 469 for each belt 422A.

**In** the two lateral portions 467 of the movable section 422, each belt 422A is mounted on a respective support frame 469 which can be moved transversally, while in the central portion 468 the support frames 469 are fixed. The transverse positions of the support frames 469 of the lateral portions 467 can be varied by moving them closer or away by changing the mutual distance.

To achieve uniform spacing, the support frames 469 of the lateral portions 467 are fixed to a pantograph mechanism 469 which causes this uniform spacing of the support frames 469 of the lateral portions 467. Uniform spacing mechanisms of different types, also of a non-mechanical type, based on electric or electronic actuators and meters of the movable support frames 469 can also be provided.

As mentioned above, the movable section 422 must have characteristics which allow for the creation of reduced passages necessary to prevent the SKUs from falling or jamming during transfer from and to the shuttle 800 for UDC handling.

For this reason, the conveyor 802 of the shuttles 800 can also be made with a modular chain of the same type used for the conveying element of the movable section 422, with these components it is possible to create the reduced passages necessary to avoid falling or jamming of SKUs during transfers.

The containment cage 803 is made according to a hollow parallelepiped shape, without the lower base and the upper base, within which the conveyor of the movable section 422 can fit and slide throughout the height of the cage 803.

According to one version of the present invention, the containment cage can consist of a enclosure formed by plates or sheets which form a shell again with a hollow parallelepiped shape without the lower base and the upper base.

The function of the cage or enclosure 803 is to contain the perimeter SKUs of the UDC during palletization, so that the distance between the internal walls of the cage and the external surface of the packages must be minimal, in any case not greater than a limit value beyond which the SKUs may fall off or be skewed to an unacceptable angle for subsequent wrapping.

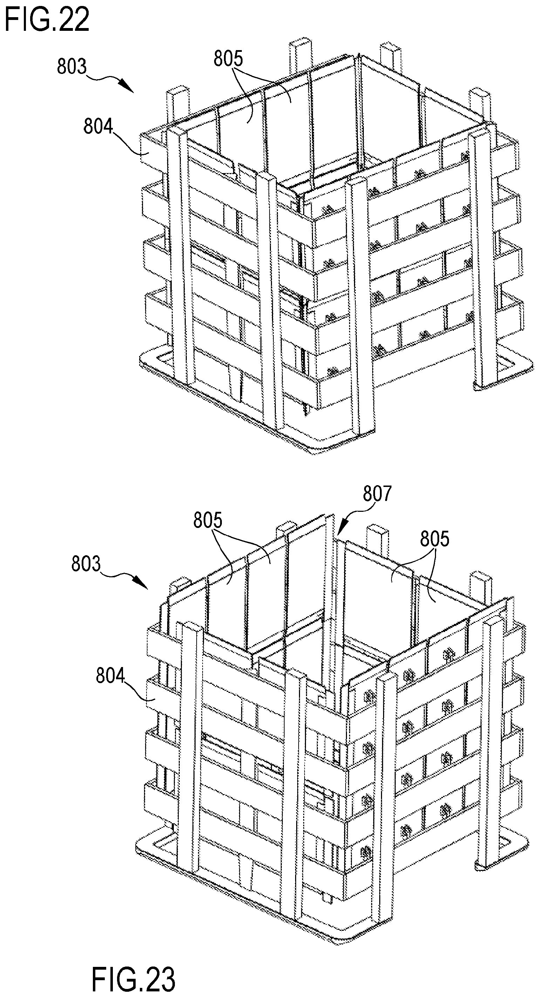

Figures 22-26 show the containment cage 803 in detail. The containment cage or enclosure 803 comprises a frame or shell 804 which externally delimits the cage or enclosure and has a parallelepiped shape of suitably larger dimensions than those of a combined UDC.

Since the dimensions of the layers of SKUs can be variable, the internal walls of the cage must be able to adapt to the dimensions of the layer.

To allow the walls of the cage this freedom of movement, as mentioned, also the movable conveyor 422 must have the possibility of modifying its dimensions according to the dimensions of the UDC to be created so as not to constitute an obstacle to the freedom of adaptation of the walls of the cage.

To achieve the adaptability of the walls of the cage to the different sizes of SKUs, the containment cage 803 comprises inside it a plurality of movable sides 805 fixed to the frame 804 by means of movable connection means, for example connecting rods 806.

Each of the movable sides 805 is independent with respect to the others and can move horizontally in a direction perpendicular to the surface of the side itself. This horizontal movement is allowed by the connecting rods 806 which form in pairs an articulated parallelogram with equal arms for each side 805.

Furthermore, when at rest the movable sides 805 are in the innermost position of the cage 803; this effect can be obtained by means of suitable contrast means which cause the movable sides 805 to move to this innermost position; for example, the aforementioned contrast means can be elastic elements or simple gravity due to the own weight of the sides 805.

When at rest, the sides 805 are forced to position themselves with the connecting rods 806 to a maximum extension condition, i.e., arranged substantially horizontally in a direction perpendicular to the surface of the sides 805, this configuration is illustrated in Figure 22.

The sides 805 can open under the effect of the thrust exerted by the external surfaces of the movable section 422 during the upstroke or due to the insertion of the SKUs during the formation of the UDC; therefore, in these cases the connecting rods 806 are arranged obliquely upwards allowing a horizontal movement of the sides 806 in the maximum opening configuration, this configuration is illustrated in Figure 23.

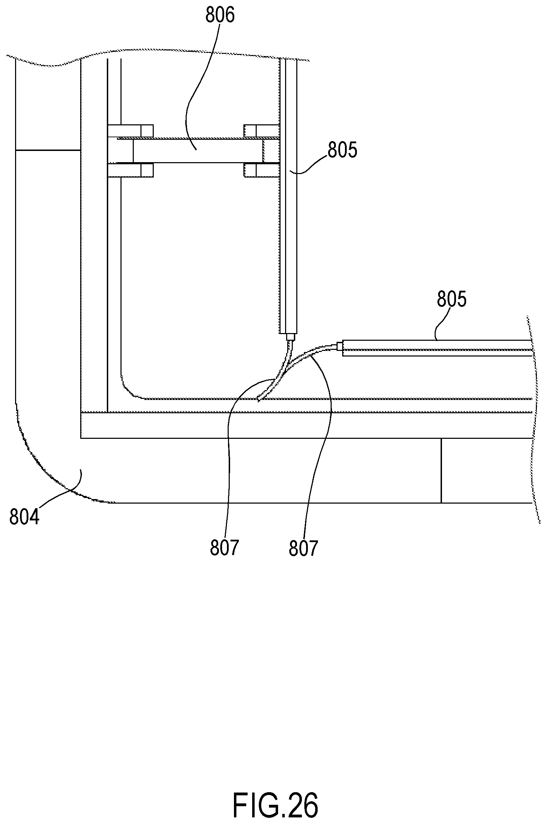

As illustrated in more detail in Figure 26, the cage 803 has flexible bands 807, arranged between the sides 805 which are located in the corners of the frame 804, so as to compensate for the movements of the sides 805, without leaving gaps in which the SKUs could get stuck.

As has been seen, to allow adaptation to UDCs with a non-linear outline, each internal surface of the cage 803 is divided into several sides 805 according to a vertical direction and possibly according to a horizontal direction.

The subdivision according to the vertical direction is useful for adapting to UDCs with non-linear perimeter, while the subdivision according to the horizontal direction is advantageous, in particular, at the lower edge of each side 805, to allow an adaptation of the lower portion of the side itself to the pallet during the UDC unloading operation on to the pallet before wrapping. The 803 cage is also equipped with connecting points for a lifting device present in the wrapping island 600.

The cage 803 can also be equipped with guide elements for the movable section 422, made by means of sliding profiles 808 placed externally with respect to the containment surfaces of the SKUs on which the corresponding centring means 422B of the frame of the movable section 422 are engaged.

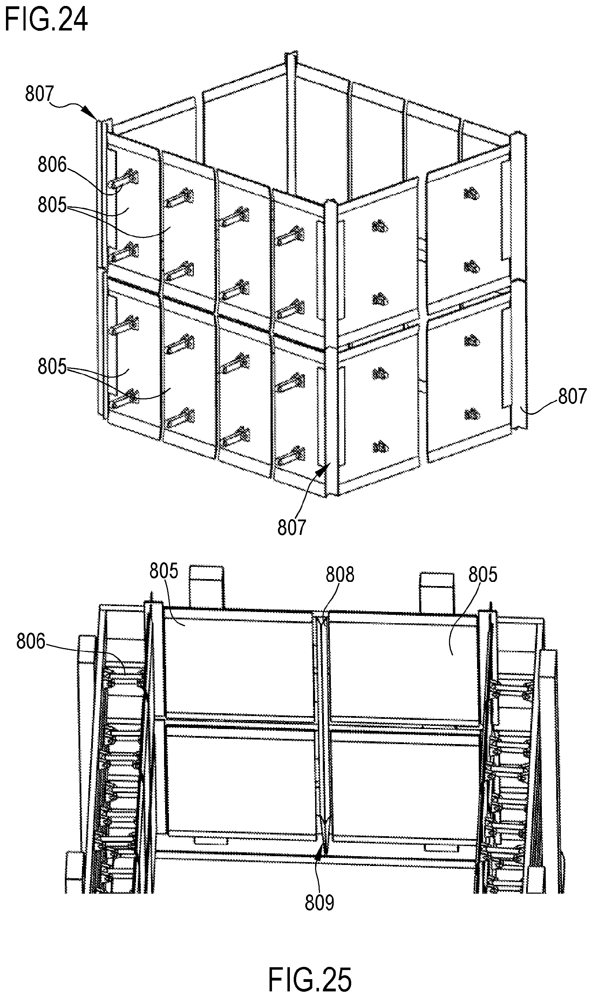

Figure 25 shows in detail a sliding profile 808, it is fixed to the frame 804 and has a section complementary to that of the centring means 422B.

To facilitate the insertion of the centring means on the sliding profile 808, this comprises a tapered portion 809.

The first palletizing island 400 can also be equipped with a device for inserting a divider layer between the layers (not shown).

Given the complex conformation of the combined UDCs, an advantageous embodiment of this device can be achieved by means of a system for creating portions of layers starting from a reel, e.g., with a device of the type shown in Italian patent no. 102018000002957 by the same applicant.

These portions of divider layers can be arranged on the layer taking into account the differences in height or in any case, in the case of layers of uniform height, arranging the portions of divider layer where actually necessary to guarantee stability while saving material compared to the use of a full divider layer having approximately the dimensions of the layer.

In the palletizing island 400 the formation of the combined UDC takes place with the following method.

The shuttles 700 carry the SKU layers (whole or partial) to the picking up stations 402 on the trays 118 taken from the first automated warehouse 200 or directly from the depalletizing island 100.

The shuttles 800 carry the cages 803 to the storage stations 404, the cages 803 are taken from a special warehouse and can be completely empty or have a pallet inside already, if the combined UDC that is about to be formed provides that the SKUs are placed on pallets, or it can have one or more layers of uniform SKUs possibly arranged on a pallet, if the combined UDC to be formed so requires.

If the cage 803 contains a pallet or one or more layers of uniform SKUs with or without a pallet, the cage 803 must be raised above the pallet, or layers of SKUs with or without a pallet, and then lowered again positioning it around the pallet, or the layers of SKUs with or without pallets, using a special lifting device which will be illustrated later in the description of the wrapping island 600.

Then the cage 803, possibly with a pallet and/or layers of SKUs already present inside it, is transferred to the conveyor 421 of the storage station 404.

Subsequently, the movable section 422 of the conveyor 421 is raised until the movable section itself, or possibly the pallet and/or the upper layer of SKUs already present, is brought to a level slightly higher than the upper edge of the cage 803, as the cage 803 remains rested on the fixed section 424 of the conveyor 421 and as, for example, illustrated in Figures 17 and 27.

The robot 401 picks up the SKUs, for example one or two SKUs, from the tray 118 which is located in one of the picking-up stations 402, until a mixed layer of SKUs is formed, since the robot 302 can pick up the SKUs from several picking-up stations 402 and different SKUs can alternate in each picking-up station.

When the mixed SKU layer is completed, the movable section 422 of the conveyor 421 is lowered by an amount substantially corresponding to the height of one SKU layer, i.e., until the top part of the newly formed SKU layer is brought to a level slightly higher than the upper edge of the cage 803, as in the previous situation.

The loading steps for forming mixed layers of SKUs are repeated until an entire combined UDC is formed which is entirely inside the cage 803 and therefore stabilized even if not yet wrapped.

The movable section 422 of the conveyor 421 has progressively lowered and, if it has not already reached it, it is brought to the same level as the fixed section 424 of the conveyor 421.

The cage 803 with the combined UDC inside it can be transferred to one of the shuttles 800, which shuttle 800 can leave the palletizing island through the passage 410 and reach the wrapping island 600.

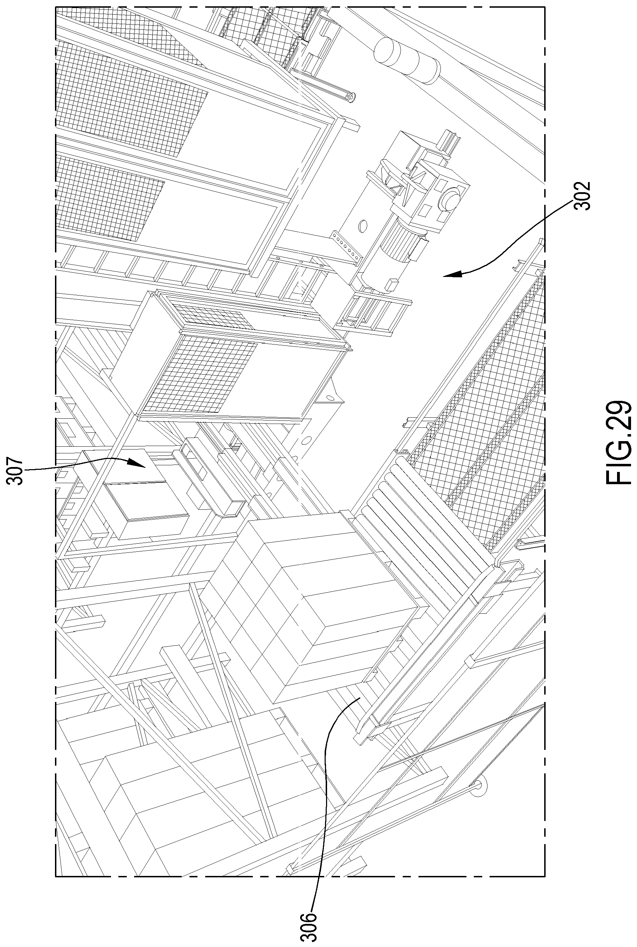

Figures 28 and 29 show the second automated warehouse 300 intended for the SKUs still on the pallet, i.e., for the partially depalletized UDCs 114, i.e., pallets with uniform SKUs from which only a few layers of SKUs have been taken, for example coming from exit 113 of the depalletizing island 100, or for the complete mother UDCs 105, but without film and/or other lateral stabilizing elements, for example coming from the de-filming island 150.

In the embodiment of Figures 28 and 29, the second automated warehouse 300 comprises two double-depth shelving 301, i.e., capable of accommodating two deep pallets.

Between the two shelving 301 there is a stacker crane device, or simply a lifter crane 302 which is equipped with telescopic forks 303 (Figure 29), it should be noted that the forks 303 can move on both sides, to the right and to left of the stacker crane 302, so as to be able to pick up or store the loads from both sides.

Two conveyors 304 are also provided with inlets 305 for causing the pallets 114 or the mother UDCs 105 to reach the loading station 306 of the stacker crane 302.

The shuttles 800 carry the partially depalletized UDCs 114 or the de-filmed mother UDCs 105 to the inlet 305 of one of the conveyors 304, then the UDC is transferred to the conveyor 304 which takes the UDC to the loading station 306 (Figure 29).

In the loading station 306 the stacker crane 302 picks up the UDC by means of the forks 303, and transfers the UDC internally to the station 307.

Then the stacker crane 302 can move, in the horizontal and vertical direction, between the two shelving 301.

Once the unloading position in the shelving 301 has been reached, the stacker crane can unload the UDC by means of the forks 303.

With an inverse procedure, the stacker crane 302 is able to pick up an UDC from the shelving 301 and take it to the loading station 306 and then, via the conveyor 304, transfer it to a shuttle 800.

This automated warehouse 300 allows a back-up of SKUs to be quickly formed to feed the palletizing and/or depalletizing islands.

The automated approach warehouse 250 of the embodiment of the apparatus 1 illustrated in Figure 3 is also made in a similar way to the second automated warehouse 300, although it comprises a different number of shelvings and stacker crane devices.

In particular, the second automated warehouse 300, and the corresponding automated approach warehouse 250, are necessary when many different SKUs have to be processed, i.e., many SKU codes, but the number of combined UDCs to be prepared is not large.

The sizing of these warehouses is a function of the number of different SKUs to process and the number of combined UDCs to prepare in a given time frame.

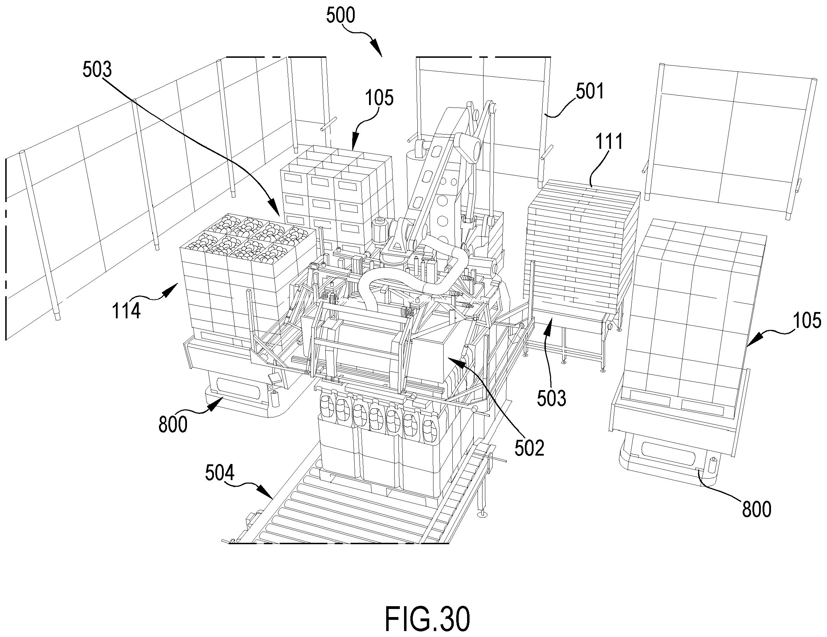

Figure 30 shows one of the second palletizing islands 500, these second palletizing islands only deal with complete layers of SKUs, they may also not be present as in the version of the apparatus 1 illustrated in Figure 3.

The second palletizing island 500 essentially comprises at least one infeed conveyor 503 for the mother UDCs 105 without film and/or other lateral stabilizing elements, the infeed conveyor 503 can also accommodate stacks of pallets, these stacks of pallets being similar or equal to the stacks of pallets 111 formed in the depalletizing island 100, a programmable manipulator 501, for example an anthropomorphic robot, equipped with a gripper 502 equal to the gripper 109 of the depalletizing island 100, this gripper 502 being made with constructive characteristics such as to allow a complete layer 110 of SKUs to be picked up, and at least one outfeed conveyor 504 for the UDCs combined in layers or for the UDCs partially formed with only some layers of SKUs, this partial UDC will subsequently be completed in the first palletizing islands 400 with the single SKUs as previously described.

In the embodiment illustrated in Figure 30, it can be observed that the second island 500 comprises two infeed conveyors 503 and one outfeed conveyor 504, the two infeed conveyors 503 are equipped with modular chains to avoid jamming of the mother UDCs or stacks of pallets during the transfer from the shuttle 800 to the infeed conveyor 503, the outfeed conveyor 504 can initially include a roller table and, in its terminal part, a modular chain to facilitate the transfer of the UDC towards the shuttle 800.

It should be noted that the number of infeed conveyors 503 and outfeed conveyors 504 shown in Figure 30 is given for guidance only and is not binding.

If the combined UDC does not have a pallet at the base, the outfeed conveyor 504 is entirely made with modular chains to obtain better stability of the combined UDC.

On one conveyor 503 there is a stack of pallets 111, on the other conveyor 503 there is a mother UDC 105 without film or other lateral stabilizing elements.

There are also two shuttles 800 which carry mother UDCs 105, or partially depalletized UDCs 114, without film and/or other lateral stabilizing elements; the shuttles 800 are waiting to transfer the UDCs to the infeed conveyors.

If the UDC is expected to be equipped with pallets, the robot 501 first picks up a pallet from the stack 111 which is waiting on one of the infeed conveyors 503 and places it on the outfeed conveyor 504.

Then the robot 501 picks up a layer of SKUs from the mother UDC 105, or from the partially depalletized UDC 114, which is waiting on one of the conveyors 503 and places it on the outfeed conveyor 504 above the pallet if provided.

The SKU layers picking operation can be repeated to the complete depalletization of the mother UDC 105, or of the partially depalletized UDC 114, or only the layers needed at that specific moment can be picked for forming a combined UDC.

The SKU layer picking operation can also take place directly from the mother UDC 105, which is located on one of the waiting shuttles 800.

As specified initially, the apparatus 1 can comprise at least one third island 900 (Figure 1) for the manual palletization of special SKUs which cannot be handled automatically; this manual palletization takes place after the palletization that took place in the first and second automated palletizing islands 400, 500, and allows the combined UDC to be completed with SKUs that have special shape and/or fragility characteristics.

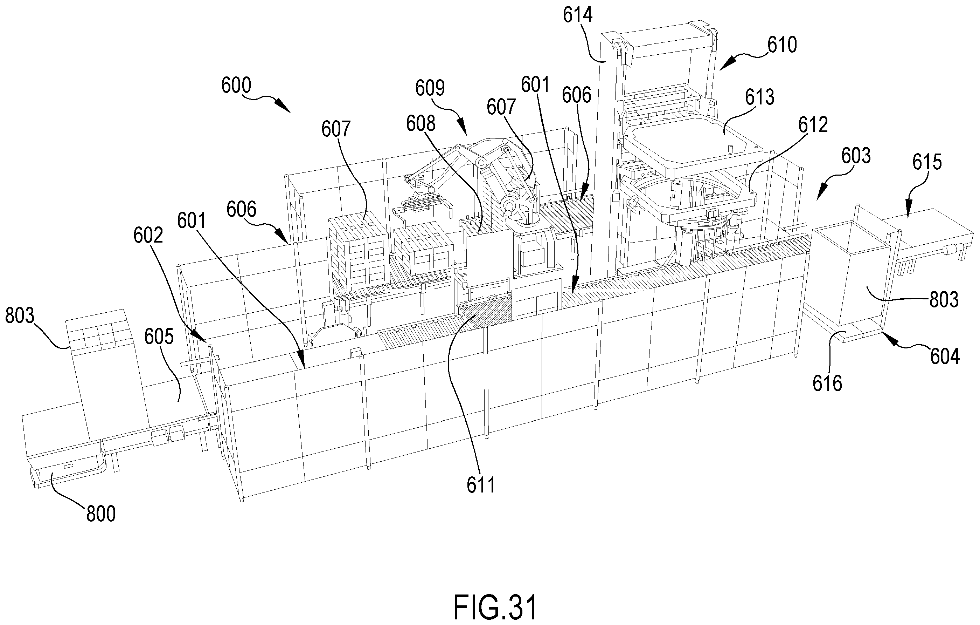

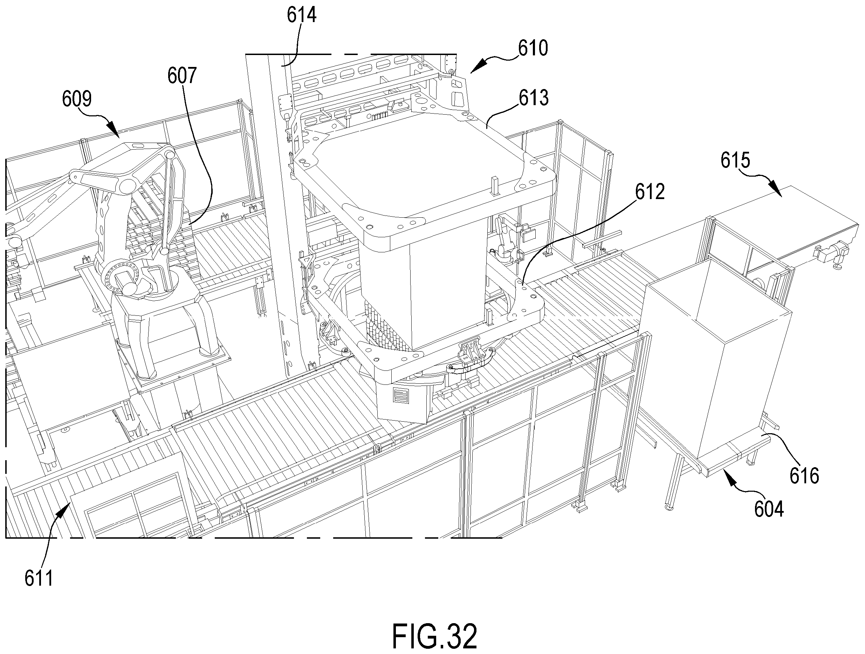

Figures 31 and 32 show a wrapping island 600; in this island the combined UDC is wrapped and the containment cage 803 is removed if present; the wrapping island 600 can also include a device for coupling a pallet to the combined UDC.

For example, this combination can be achieved with a device of the type illustrated in the Italian patent no. 102019000007335 by the same applicant. If provided, and if a pallet has not already been inserted in the palletizing island 500, an empty pallet can be inserted before or after the wrapping operation.

In both cases, the actual position of the UDC on the wrapping island conveyor 600 must be detected before inserting the empty pallet using suitable detection means, for example: vision systems, measurement photocells or sonars.

The wrapping island 600 essentially comprises at least one first conveyor 601 with an infeed area 602, designed to receive the cages 803 with the UDCs combined inside it, at least one second conveyor 606 designed to receive stacks 607 of empty pallets also of different sizes and types, a pallet insertion station 608 equipped with a manipulator 609 and a wrapping station 610.

In the path covered by the first conveyor 601, the pallet insertion station 608 can precede or follow the wrapping station 610.

Furthermore, the first conveyor 601 comprises an outfeed conveyor 615 with at least one first exit 603 for combined UDCs complete with wrapping and possibly a conveyor 616 for empty containment cages 803 with a second exit 604.

To maintain good UDC stability without pallets, the first conveyor 601 for UDCs must include modular chain conveyors up to the pallet insertion station 608.

Therefore, the first conveyor 601 comprises an infeed conveyor 605 made with a modular chain which allows for the creation of passages of reduced dimensions, this conveyor is of the same type as those used in the movable conveyor of the palletizing island 400 and in the shuttle 800.

If the pallet insertion station 608 is downstream from the wrapping station 610, the conveyors at the wrapping station must also be built within a modular chain.

In the pallet insertion station 608 the empty pallets are taken from the stacks 607 of pallets and placed by means of the manipulator 609 in the unloading position 611 of the UDC on the pallet, using for this purpose solutions already shown in the aforementioned Italian patent no. 102019000007335.

The UDCs with the containment cage 803 are transferred to the infeed conveyor 605 by means of a shuttle 800, for example coming from the palletizing island 400.

As was mentioned, the infeed conveyor 605 uses a modular chain which allows for the creation of passages of reduced dimensions, the modular chain being of the same type as that used in the movable conveyor of the palletizing area 400.

In the case of pallet insertion under the UDC before wrapping, therefore with the cage 803 still present, the necessary reference can be obtained between the UDC and the pallet by detecting the position of the perimeter of the frame or of the shell 804 of the cage, instead of the position of the external surfaces of the combined UDC, as these are not directly accessible.

The wrapping station 610 comprises a wrapping device 612, for example a ring wrapping device, associated with a cage lifting device 613 which allows the cage 803 to be lifted simultaneously with the wrapping operation.

In particular, the ring wrapping device 612 is supported so as to be able to slide vertically by means of a gantry structure 614 arranged on the side of the first conveyor 601.

The same gantry structure 614 can also support the cage lifting device 613 in a vertically sliding manner; the ring-wrapping device 612 and the cage lifting device 613 may each comprise their own drive means so that they can be operated independently, or they may comprise a single drive means which conveniently drives both devices. Therefore, the cage lifting device 613 and the ring wrapping device 612 can be connected to each other or can feature independent movements.

In the wrapping station 610, wrapping is carried out starting from the underside of the UDC, progressively lifting the cage 803 depending on the upstroke of the ring wrapping device 612 and making sure that the SKUs of the UDC are held and stabilized by the wrapping as soon as support from the sides of the cage 803 is removed.

The cage lifting device 613 is equipped with a device for hooking the cage 803.

In the case of independent movements, the empty cage 803 can be removed without having to place it again on the first conveyor 601, the cage 803 can be placed directly downstream of the first conveyor 601 on the UDC outfeed conveyor 615, or the cage 803 can be placed on the cage conveyor 616, thereby reducing the cycle time of the overall operation.

If it is necessary to insert a cage 803 around a pallet, or around one or more layers of uniform SKUs with or without pallets, for subsequent palletization of single SKUs on pallets, or on one or more layers of uniform SKUs with or without pallets, to be carried out in the first palletizing island 400, the cage lifting device 613 can be used independently without simultaneous wrapping, or it can be part of a specific island (not shown) for inserting the cages 803.

Therefore, there is a passage in the wrapping island 600, or in the specific cages insertion island, of the pallet, or of one or more layers of uniform SKUs with or without pallets; the cage lifting device 613 is lifted above the pallet, or layers of SKUs with or without pallets, and then lowered again positioning the cage 803 around the pallet, or layers of SKUs with or without pallets; subsequently, the cage 803 with the pallet, or with one or more layers of uniform SKUs with or without pallets, is sent, via a shuttle 800, to the first palletizing island 400.

In the palletizing island 400 the subsequent palletizing of single SKUs can therefore take place on top of the pallet, or the layers of SKUs with or without pallets, as previously described.

After wrapping and possibly inserting the empty pallet, the UDC can be labelled and transferred to the outfeed conveyor for picking by the forklift trucks 850 and subsequent transfer to the storage warehouse or shipping area.

All the elements of apparatus 1, i.e., the depalletizers, the warehouses for the mother UDC or partially depalletized UDCs, the warehouses for the SKUs on trays, the palletizers for the single SKUs, the palletizers for the layered SKUs, the shuttles and the forklifts, any conveyors, communicate via fieldbus with a central control unit, providing the necessary information, in particular any relating to the references and position of the UDCs and the references and position of the SKUs present in the system, to the management software of the central control unit.

Thanks to this, the forming operations of the combined UDCs can be optimized by organizing the missions of the shuttles 700, 800 and the forklifts 850 in such a way as to maximize the use of the same shuttles and forklift trucks.

The method according to the present invention comprises a step in which at least one forklift truck 850, or a second shuttle 800, carries a mother UDC 105 to the depalletizing island 100; a first shuttle 700 carries at least one tray 118 to the depalletizing island 100; a second shuttle 800, or a forklift truck 850, picks up at least one pallet from the depalletizing island 100; in the depalletizing island 100, the mother UDC 105 is subjected to the removal of the wrapping film and/or other lateral stabilizing elements.

Then, the mother UDC 105 is completely or partially divided into single layers 110 of uniform SKUs, the single layers 110 of uniform SKUs are positioned on the trays 118 and sent, via the first shuttles 700, to a first automated warehouse 200 for the storage of trays 118 with layers of uniform SKUs of different types for each layer.

From the depalletizing island 100, the partially depalletized UDCs 114 are sent, via the second shuttles 800, to the second automated warehouse 300, or to the automated approach warehouse 250, for the storage of partially depalletized UDCs 114 or mother UDCs 105 without wrapping film and/or other lateral stabilizing elements.

The method optionally comprises a step in which at least one forklift truck 850, or a second shuttle 800, takes a mother UDC 105 to the de-filming island 150, in this island the mother UDC 105 is released, manually or automatically, from the wrapping film, and/or from the other lateral stabilizing elements; the mother UDC without wrapping film, and/or other lateral stabilizing elements, is sent, via the second shuttles 800, to the second automated warehouse 300, or to the automated approach warehouse 250.

The method therefore comprises picking up from the first automated warehouse 200 single layers 110 of uniform SKUs positioned on the trays 118 for subsequent palletizing and sending, via the first shuttles 700, to the palletizing island 400, where the single SKUs are picked from trays 118 and arranged, according to the required order, to form a combined UDC; to improve the stability of the UDC linked to the palletization of individual SKUs different from each other, a containment cage 803 can be provided which is brought to the palletizing island 400 by means of a second shuttle 800.

Furthermore, to improve the stability of the UDC, the method can provide for inserting a divider layer over each layer of non-uniform SKUs, this step takes place in the first palletizing island 400 by means of a device for inserting a divider layer between layers. In relation to the SKUs needed to form the combined UDC, the method optionally includes the possibility that inside the cage 803 a pallet already exists, or one or more layers of uniform SKUs with or without a pallet.

These layers of uniform SKUs are picked up, via the second shuttle 800, from the second automated warehouse 300 or they can be picked up directly from the depalletizing island 100.

In this way it is possible to form combined UDCs with some layers of uniform SKUs and with other layers of single SKUs on top of these layers of uniform SKUs.

A variant of the method according to the present invention provides that the combined UDCs are formed only by layers of uniform SKUs 110.

The method according to this variant comprises a phase in which at least one second shuttle 800 picks up a mother UDC 105, or a partially depalletized UDC 114, from the second automated warehouse 300 and a phase in which the shuttle 800 carries the mother UDC 105, or the partially depalletized UDC 114, to the second palletizing island 500; another second shuttle 800 picks up a stack of pallets 111 from a dedicated warehouse, or directly at the outfeed 113 from the depalletizing island 100. The method provides for picking up an entire layer of SKUs from a mother UDC 105, or from a partially depalletized UDC 114, and for palletizing the layers forming a combined UDC.

The method involves iterating the picking up of layers of uniform SKUs coming from various mother UDCs 105, or from various partially depalletized UDCs 114, the UDCs 105, 114 are brought in sequence by the second shuttles 800 to the second palletizing island 500, until the requested combined UDC is formed with several layers of uniform SKUs.

According to another aspect of the present invention, the method provides for forming the requested combined UDC, first in the second palletizing island 500, by picking up some layers of uniform SKUs coming from different mother UDCs 105, or from several partially depalletized UDCs 114, then transferring the UDC being formed in the first palletizing island 400, forming other layers of SKUs of different types.

If necessary for the formation of the combined UDC, the UDC being formed, coming both from the first palletizing island 400 and from the second palletizing island 500, can be completed in the third island 900 with the manual palletization of special SKUs that cannot be manipulated automatically.

Therefore, the method according to the present invention provides for wrapping the combined UDC completed in the previous palletizing islands 400, 500, 900, in the wrapping island 600; the wrapping step takes place by holding the combined UDC and wrapping the film around the UDC, by means of the ring wrapping device 612, starting from the base of the UDC.

If the containment cage 803 is also present in the combined UDC, the method also provides for lifting the cage 803, by means of the cage lifting device 613, simultaneously and progressively with the wrapping phase.

In general, by using the method according to the present invention the following types of combined UDC can be obtained:
the combined UDC is formed only by different layers of uniform SKUs, palletizing takes place in the second palletizing island 500, possibly one or more layers at the base of the UDC can come from partially depalletized UDCs 114, taken from the second automated warehouse 300, or from the automated approach warehouse 250;
the combined SKU is made up of a few different layers of uniform SKUs and other layers, above these layers of uniform SKUs, formed by different single SKUs, or by a number of equal SKUs, forming non-uniform layers of SKUs, with each SKU different in the layer or with some groups of identical SKUs, but with groups of SKUs different in the layer, the layered palletization phase takes place in the second palletizing island 500 for the formation of uniform SKU layers, the palletizing phase with single SKUs, or in groups of two or more SKUs, takes place in the first palletizing island 400 for the formation of non-uniform SKU layers, between the palletizing phase in layers and the palletizing phase with non-uniform SKU layers, an insertion phase of the cage 803 around the uniform SKU layers can be added, the insertion phase of the cage 803 can take place in the wrapping island 600 using only the cage lifting device 613, or in a special cage insertion island equipped with a cage lifting device like the one present in the wrapping island 600;
the combined UDC is formed only by layers formed by single different SKUs, or by groups of a certain amount of equal SKUs, forming layers of non-uniform SKUs, with each SKU different in the layer or with some groups of equal SKUs, the palletization phase in layers takes place in the first palletizing island 400, in this island 400 it is also possible to have the positioning of the containment cage 803 for the stabilization of non-uniform SKU layers which will be inserted in this cage 803; the phases of palletizing layers of non-uniform SKUs can also include a phase for inserting a divider layer between the layers;
all the previous types of combined UDCs can also include manual palletizing of special SKUs which cannot be handled automatically, this manual palletizing phase takes place in the third palletizing island 900;
all the previous types of combined UDCs can also include a pallet at the base of the UDC, this pallet can be inserted during the palletizing phases that take place in the island 500, or it can take place before or after the wrapping phase with a specific pallet insertion phase, this phase takes place with a special device provided in the wrapping island 600.

The apparatus 1 according to the present invention guarantees great operational flexibility, since there are no limits as to the types of SKUs which can be processed, nor are there any constraints in relation to the dimensions of the layers of the combined UDCs, or to the reliability of this process; in addition, there are no limits in relation to the manageable palletizing schemes.

The present invention has been described according to preferred embodiments, but equivalent variants can still be conceived without departing from the scope of the appended claims.

## Claims

1. Apparatus (1) for making combined load units, or UDCs, consisting of packages of different products or SKUs, said combined UDCs being obtained from mother UDCs (105) of uniform packages or SKUs, or from partially depalletized UDCs (114), i.e., a pallet of uniform packages or SKUs from which only some layers have been taken, comprising at least one depalletization island (100) for depalletizing said mother UDCs (105); at least one layer removal island (350) which can be integrated in the depalletization island (100); at least a first automated warehouse (200) for layers (110) of uniform packages or SKUs; at least a second automated warehouse (300), or at least an approach warehouse (250), intended for said de-filmed mother UDCs (105) and/or for said partially depalletized UDCs (114); at least a first palletizing island (400) for making said combined UDCs with layers of packages formed by individual different SKUs or by different groups of SKUs within the same layer, with a containment cage or enclosure (803) for containing the peripheral SKUs of the UDC being formed; at least one wrapping island (600) for said combined UDCs; at least a first autonomously guided shuttle (700) provided with an upper plane (701) capable of supporting a layer (110) of packages or SKUs; at least a second shuttle (800) provided with an upper surface (801) capable of supporting a mother UDC (105) of uniform packages or SKUs or a combined UDC, with a conveyor (802) for transferring or receiving said mother UDC (105) or said combined UDC, at least one forklift (850), i.e., a forklift provided with forks, with automatic or manual guidance, **characterized in that** it comprises trays (118) provided with a plurality of slots or openings (122), arranged according to a grid with a pitch, transversely and longitudinally, considering the extension of said layer (110) of packages or SKUs, which depends on the type and size of said packages or SKUs, said trays (118) being provided for the support of said layers (110) of packages or SKUs on said first shuttle (700) and in said first automatic warehouse (200), to allow the transfer and subsequent picking-up of said packages, or SKUs, individually or in small groups in said first palletizing island (400).

2. Apparatus (1) according to claim 1, wherein said cage or enclosure (803) is made according to a hollow parallelepiped shape, without the lower base and the upper base and comprising a frame or shell (804) externally delimiting the cage or the enclosure (803) and having a parallelepiped shape with size greater than a combined UDC, said frame or shell (804) comprising therein a plurality of movable sides (805) fixed to said frame or shell (804) by movable connection means (806), said movable sides (805) being provided with contrast means provided to induce said sides (805) in the innermost position of the cage (803).

3. Apparatus (1) according to claim 1 or 2, comprising, in addition or alternatively to said at least a first palletizing island (400), at least a second palletizing island (500) for making said combined UDCs with layers of uniform SKUs.

4. Apparatus (1) according to one of the preceding claims, wherein said upper plane (701) of said first shuttle (700) is comb-shaped with a series of parallel strips (702) arranged at a certain distance from each other, said certain distance being complementary to said passage of said grid of slots or openings (122) of said tray (118).

5. Apparatus (1) according to one of the preceding claims, comprising at least a third proximity warehouse (450) for the temporary storage of SKUs waiting before use in said at least a first palletizing island (400).

6. Apparatus (1) according to one of the preceding claims, wherein said at least a first palletizing island (400) comprises a programmable manipulator or anthropomorphic robot (401), provided with a palletizing gripper (416), adapted to pick up at least one SKU from said tray (118), at least one picking-up station (402) of the SKUs, provided with a lifting device (403), at least one storage station (404) provided with a conveyor (421) with a movable section (422) which can be raised and lowered vertically.

7. Apparatus (1) according to the preceding claim, wherein said lifting device (403) comprises a support structure (411), mounted on a base (412), a movable frame (413) sliding vertically on said support structure (411), said movable frame (413) being provided with a plurality of support elements or slats (414) with their respective upper ends intended to contact and support the SKUs during the picking-up by said palletizing gripper (416).

8. Apparatus (1) according to the preceding claim, when dependent on one of claims 4-6, wherein said support elements or slats (414) are fixed to a plurality of parallel bars (415) positioned at a certain distance from each other, complementary to the distance of said strips (702), and said support elements or slats (414) are arranged according to a rectangular grid with a certain pitch in a transverse direction and in a longitudinal direction considering the layer of SKUs, said pitch corresponding to that of said slots or openings (122) of the tray (118), to allow said support elements or slats (414) to be inserted inside said slots or openings (122) of the tray (118).

9. Apparatus (1) according to the preceding claim, wherein said support elements or slats (414) have said upper ends, in contact with said layer (110) of packages or SKUs, according to a convex arrangement where the ends in contact with the innermost part of said layer (110) are at a higher level with respect to the ends in contact with the outermost part of said layer (110).

10. Apparatus (1) according to one of claims 7-9, wherein said support structure (411) is mounted on a carriage (405) which is movable and operable horizontally with respect to said base (412).

11. Apparatus (1) according to one of claims 6-10, wherein said at least one picking-up station (402) of the SKUs comprises a holding device (440) of the SKUs which are located on said tray (118), said holding device (440) comprising stop elements (441) which are movable by means of a three-axis Cartesian system (442), wherein the first and second axes in the horizontal plane of said Cartesian system (442) are included for moving said stop elements (441) respectively longitudinally and transversely with respect to the direction of insertion of the tray (118) in the picking-up station (402) and wherein the third vertical axis of said Cartesian system (442) is included for moving said stop elements (441) according to a vertical direction in order to adapt to the different heights of the SKUs to be processed.

12. Apparatus (1) according to one of claims 6-11, wherein said movable section (422) of the conveyor (421) comprises a plurality of belts (422A) provided with an apparatus (463-466) for varying the longitudinal dimension of said movable section (422) and an apparatus (467-469) for varying the transverse dimension of said movable section (422).

13. Apparatus (1) according to one of claims 6-12, wherein said palletizing gripper (416) comprises a plurality of horizontal comb-shaped support elements (417) fixed to a substantially vertical structure (418) movable according to a horizontal direction, at least one horizontal presser (419), movable according to a vertical direction and at least one substantially vertical abutment element (420A).

14. Apparatus (1) according to the preceding claim, wherein the horizontal comb-shaped support elements (417) have a pitch corresponding transversely and longitudinally to said pitch of said support elements or slats (414).

15. Apparatus (1) according to one of claims 6-14, wherein said movable section (422) of said conveyor (421) of said storage station (404) is raised and lowered vertically by lifting means (423) and is surrounded by a fixed section (424), said movable section (422) having dimensions substantially corresponding to the dimensions of a layer of SKUs of the combined UDC, and being adapted to be inserted and raised inside said containment cage or enclosure (803), said fixed section (424) being adapted to support and transfer the cage or enclosure (803) to and from said second shuttle (800).

16. Apparatus (1) according to one of the preceding claims, wherein said at least one depalletizing island (100) comprises at least a first conveyor (101) provided with one or more entry zones (102, 103), included for receiving said mother UDCs (105) in entry, a depalletizing zone (107) of the layers (110), one or more exits (112) for stacks of pallets (111), one or more exits (113) for said partially depalletized UDCs (114), a second conveyor (115) which extends substantially parallel to the first conveyor (101), provided with an entry conveyor (116) for said trays (118), a stacker and de-stacker device (119) for said trays (118), a loading area (120) for loading said layers (110) of packages or SKUs onto said trays (118), an exit conveyor (121) in which said trays (118) with a complete layer (110) are transferred to said shuttles (700), a programmable manipulator or anthropomorphic robot (108), arranged between said first conveyor (101) and said second conveyor (115), said programmable manipulator or anthropomorphic robot (108) being provided with a gripper (109) capable of picking up a complete layer (110) of packages or SKUs.

17. Apparatus (1) according to the preceding claim, when dependent on one of claims 4-15, wherein said entry conveyor (116) for said trays (118) and said outlet conveyor (121) for said trays (118) with a complete layer (110) of packages or SKUs, comprise a chain system or comb-shaped belts, said chains or belts being arranged at a certain distance from each other so as to support said trays (118) on their entire surface, said distance between the chains or belts being complementary to said distance between said strips (702) of said upper plane (701) of said shuttles (700), so as to allow said shuttles (700) to be inserted within said chain system or comb-shaped belts of the entry conveyor (116) and the exit conveyor (121), for the transfer of said trays (118).

18. Apparatus (1) according to one of the preceding claims, wherein said layer removal island (350) comprises a first group (351) for the management of said trays (118) and a second group (360) for the removal of the layer from the SKU layers.

19. Apparatus (1) according to the preceding claim, wherein said second group (360) for the removal of the layer from the SKU layers comprises a layer picking-up station (361), a layer transfer station (364) for the transfer of the SKU layer onto said tray (118), said station (364) being adjacent to said layer picking-up station (361), a programmable manipulator, for example a second anthropomorphic robot (362), or a Cartesian robot, which is located near the layer picking-up station (361) and is provided with a gripper (363) for removing the layer.

20. Apparatus (1) according to one of the preceding claims, wherein said at least a first automatic warehouse (200) for layers (110) of uniform packages or SKUs, complete or partial, has a front side, a rear side and at least one inlet area (201) arranged on the front side with at least one conveyor (206) and comprises a plurality of planes and shelves (202) provided with unique locations separated by corridors (203), of the elevators (205) arranged on the front side with an interface station (204) with said at least one conveyor (206), said at least one conveyor (206) and said elevators (205) being provided for moving layers (110) of uniform packages or SKUs, complete or partial, and at least a third shuttle (211) for each corridor (203), said third shuttles (211) comprising a loading plane (217) for the trays (118) and at least two telescopic arms (215) provided with swivel pins (216) for pulling or pushing the tray (118) from said unique location, or from said interface station (204), towards said loading plane (217) of said shuttle (211) and vice versa.

21. Apparatus (1) according to the preceding claim, wherein said at least one conveyor (206) is made with catenaries and/or motorized rollers in which the inlet part of each conveyor (206) has a comb-shaped system of chains or belts, said chains or belts being arranged at a distance complementary to the distance between said strips (702) of said upper plane (701) of said shuttles (700).

22. Apparatus (1) according to claim 17 or 18, wherein said at least a first automatic warehouse (200) comprises elevators (212) positioned on the rear side opposite the front side of said elevators (205) for uniform, complete or partial layers (110) of packages or SKUs, said elevators (212) being included for moving said third shuttles (211) from one plane to another of said first automatic warehouse (200).

23. Apparatus (1) according to one of the preceding claims, wherein said at least one wrapping island (600) comprises at least a first conveyor (601) with an entry zone (602) for receiving said cages or enclosures (803) in entry with the combined UDCs therein, at least a second conveyor (606) for receiving stacks (607) of empty pallets also of different sizes and types, a pallet insertion station (608) for inserting a pallet below said cage or enclosure (803) with said combined UDC, or for inserting a pallet below said combined UDC without cage or enclosure (803), and a wrapping station (610) for wrapping said combined UDC.

24. Apparatus (1) according to the preceding claim, wherein said pallet insertion station (608) can be positioned before said wrapping station (610) or can be positioned after said wrapping station (610).

25. Apparatus (1) according to claim 23 or 24, wherein said wrapping station (610) comprises a ring wrapping device (612) associated with a cage lifting device (613) which allows lifting said cage or enclosure (803) substantially simultaneously with the lifting of said ring wrapping device (612) during the wrapping operation.

26. Apparatus (1) according to one of claims 3-25, wherein said at least a second palletizing island (500) comprises at least one entry conveyor (503) for accommodating said mother UDCs (105) without films and/or other lateral stabilizing elements, and stacks of pallets, a programmable manipulator or anthropomorphic robot (501), provided with a gripper (502), said gripper (502) being made with construction features such as to allow a complete layer (110) of packages or SKUs to be picked up, and at least one outfeed conveyor (504) for combined UDCs in layers or for UDCs partially formed with only some layers of SKUs.

27. Apparatus (1) according to one of the preceding claims, comprising at least one de-filming island (150), i.e., an island for the removal from the mother UDCs (105) of the wrapping film and/or other lateral stabilizing elements from the mother UDCs (105).

28. Apparatus (1) according to one of the preceding claims, comprising at least a third island (900) for the manual palletization of packages or special SKUs which cannot be manipulated automatically.

29. Method for making a combined UDC starting from a plurality of mother UDCs (105) formed by uniform packages or SKUs by means of an apparatus (1) according to one of the preceding claims, comprising the steps of:
removing the wrapping film and/or other lateral stabilizing elements from a mother UDC (105);
picking up at least one layer (110) of uniform SKUs from said mother UDC (105);
placing said layer (110) of uniform SKUs on a tray (118);
transferring, by means of a first shuttle (700), said tray (118) with said layer (110) of uniform SKUs to a first automatic warehouse (200) for the storage of said trays (118) with layers of uniform packages or SKUs, said packages or SKUs being able to be of different types for each layer (110);
alternatively to the previous step, transferring, by means of a first shuttle (700), said tray (118) with said layer (110) of uniform packages or SKUs to a picking-up station (402) of a first palletizing island (400);
if said tray (118) with said layer (110) of uniform packages or SKUs is in said first automatic warehouse (200), picking up from said first automatic warehouse (200), said tray (118) with said layer (110) of uniform packages or SKUs, by means of said first shuttle (700);
transferring, by means of said first shuttle (700), said tray (118) with said layer (110) of uniform packages or SKUs to a picking-up station (402) of a first palletizing island (400);
picking up a package or SKU, or a group of packages or SKUs, from said tray (118) with said layer (110) of uniform packages or SKUs, positioned in said picking-up station (402);
positioning said package or SKU, or said group of packages or SKUs on a vertically liftable and lowerable movable section (422) of a storage station (404);
repeating the two previous steps until obtaining a layer of packages or SKUs of different types;
lowering said movable section (422) by a measurement substantially corresponding to the height of a layer of SKUs;
repeating the four previous steps, until forming a combined UDC formed by layers (110) of different packages or SKUs;
transferring said combined UDC from said first palletizing island (400) to a wrapping island (600), by means of a second shuttle (800);
wrapping said combined UDC in said wrapping island (600) by means of a ring wrapping device (612);
optionally inserting a pallet below said combined UDC in a pallet insertion station (608) by means of a device for matching a pallet to the combined UDC, said step of inserting said pallet being able to occur before or after said wrapping step;
wherein said step of picking up a package or SKU, or a group of packages or SKUs, from said picking-up station (402) comprises lifting with respect to said trays (118) and supporting said layer (110) of uniform packages or SKUs passing through a plurality of slots or openings (122) of said trays (118), said slots or openings (122) being arranged according to a grid with a pitch, transversely and longitudinally, considering the extent of said layer (110) of packages or SKUs, which depends on the type and size of said packages or SKUs.

30. Method for making a combined UDC according to the preceding claim, wherein said step of positioning said package or SKU, or said group of packages or SKUs on a movable section (422) comprises containing the peripheral SKUs of said combined UDC by means of a plurality of movable sides (805) connected, by means of movable connection means (806), to a frame or shell (804) of a containment cage or enclosure (803), said containment cage or enclosure (803) being made according to a hollow parallelepiped configuration, without the lower base and the upper base, said movable sides (805) being provided with contrast means provided to induce said sides (805) in the innermost position of the cage (803).

31. Method for making a combined UDC according to claim 29 or 30, wherein said step of positioning said package or SKU, or said group of packages or SKUs on a movable section (422) is preceded by the step of positioning a partially palletized UDC with uniform layers (110) of packages or SKUs, with or without pallets at the base, on said partially palletized UDC having previously been arranged on a containment cage or enclosure (803), by means of a cage lifting device (613).

32. Method for making a combined UDC with layers (110) of uniform packages or SKUs, said packages or SKUs being different for each layer (110), said combined UDC being obtained starting from a plurality of mother UDCs (105) formed by uniform packages or SKUs by means of an apparatus (1) according to one of claims 3 to 28, comprising the steps of:
removing the wrapping film and/or other lateral stabilizing elements from a mother UDC (105);
transferring said mother UDC (105) without wrapping film and/or other lateral stabilizing elements to a second automatic warehouse (300) or to an approach warehouse (250), by means of a second shuttle (800);
alternatively to the previous step, transferring, by means of said second shuttle (800), said mother UDC (105) without wrapping film and/or other lateral stabilizing elements to a second palletizing island (500);
if said mother UDC (105) without wrapping film and/or other lateral stabilizing elements is located in said second automatic warehouse (300) or in said approach warehouse (250), picking up said mother UDC (105) without wrapping film and/or other lateral stabilizing elements from said second automatic warehouse (300) or from said approach warehouse (250), by means of said second shuttle (800);
transferring, by means of said second shuttle (800), said mother UDC (105) free of wrapping film and/or other lateral stabilizing elements into a second palletizing island (500);
possibly positioning said mother UDC (105) free of wrapping film and/or other lateral stabilizing elements on an entry conveyor (503) of said second palletizing island (500);
transferring, by means of said second shuttle (800), a stack of pallets (111) in said second palletizing island (500);
picking up a pallet from said stack of pallets (111);
positioning said pallet on an outfeed conveyor (504) of said second palletizing island (500);
picking up from said mother UDC (105) at least one layer (110) of uniform packages or SKUs;
positioning said layer (110) of uniform packages or SKUs on said pallet positioned on said outfeed conveyor (504) of said second palletizing island (500);
repeating the two previous steps, changing the type of said layers (110) of uniform packages or SKUs, and placing said layers (110) on top of other layers (110) previously positioned, until forming a combined UDC formed by layers (110) of uniform packages or SKUs;
transferring said combined UDC from said second palletizing island (500) to a wrapping island (600), by means of a second shuttle (800);
wrapping said combined UDC by means of a ring wrapping device (612).

## Patentansprüche

1. Apparat (1) zur Herstellung von kombinierten Ladeeinheiten oder UDCs, bestehend aus Packungen unterschiedlicher Produkte oder SKUs, wobei die besagten kombinierten UDCs aus Mutter-UDCs (105) einheitlicher Packungen oder SKUs, oder aus teilweise depalettierten UDCs (114), d.h., einer Palette einheitlicher Packungen oder SKUs, von denen nur einige Schichten genommen wurden, erhalten werden, umfassend mindestens eine Depalettierinsel (100) zum Depalettieren der besagten Mutter-UDCs (105); mindestens eine Schicht-Entnahmeinsel (350), die in die Depalettierinsel (100) integriert werden kann; mindestens ein erstes automatisiertes Lager (200) für Schichten (110) einheitlicher Packungen oder SKUs; mindestens ein zweites automatisiertes Lager (300) oder mindestens ein Zugangslager (250), das für die besagten entfolierten Mutter-UDCs (105) und/oder für die besagten teilweise depalettierten UDCs (114) bestimmt ist; mindestens eine erste Palettierinsel (400) zur Herstellung der besagten kombinierten UDCs mit Schichten von Packungen, die aus einzelnen unterschiedlichen SKUs oder aus unterschiedlichen Gruppen von SKUs innerhalb derselben Schicht gebildet werden, mit einem Aufnahmekäfig oder Gehäuse (803) zum Aufnehmen der peripheren SKUs der zu bildenden UDC; mindestens eine Wickelinsel (600) für die besagten kombinierten UDCs; mindestens einen ersten autonom geführten Shuttle (700), der mit einer oberen Ebene (701) versehen ist, die in der Lage ist, eine Schicht (110) von Packungen oder SKUs zu stützen; mindestens einen zweiten Shuttle (800), der mit einer oberen Oberfläche (801) versehen ist, die in der Lage ist, eine Mutter-UDC (105) einheitlicher Packungen oder SKUS oder eine kombinierte UDC zu stützen, mit einem Förderer (802) zum Übergeben oder Erhalten der besagten Mutter-UDC (105) oder der besagten kombinierten UDC; mindestens einen Gabelstapler (850), d. h. einen mit Gabeln versehenen Gabelstapler, mit automatischer oder manueller Führung, **dadurch gekennzeichnet, dass** er Ablagen (118) umfasst, die mit einer Vielzahl von Schlitzen oder Öffnungen (122) versehen sind, die gemäß einem Raster mit einer Teilung, quergerichtet und längsgerichtet, unter Berücksichtigung der Ausdehnung der besagten Schicht (110) von Packungen oder SKUs, angeordnet sind, die von der Art und Größe der besagten Packungen oder SKUs abhängt, wobei die besagten Ablagen (118) für das Stützen der besagten Schichten (110) von Packungen oder SKUs auf dem besagten ersten Shuttle (700) und in dem besagten ersten automatisierten Lager (200) vorgesehen sind, um die Übergabe und anschließende Aufnahme der besagten Packungen oder SKUs einzeln oder in kleinen Gruppen in der besagten ersten Palettierinsel (400) zu ermöglichen.

2. Apparat (1) nach Anspruch 1, worin der besagte Käfig oder das besagte Gehäuse (803) nach einer hohlen Parallelepipedform, ohne die untere Basis und die obere Basis, hergestellt ist und einen Rahmen oder eine Schale (804) umfasst, die den Käfig oder das Gehäuse (803) außen begrenzt und eine Parallelepipedform mit einer Größe aufweist, die größer ist als ein kombinierter UDC, wobei der besagte Rahmen oder die besagte Schale (804) darin eine Vielzahl von beweglichen Seiten (805) umfasst, die an dem besagten Rahmen oder der besagten Schale (804) durch bewegliche Verbindungsmittel (806) befestigt sind, wobei die besagten beweglichen Seiten (805) mit Gegenmitteln versehen sind, die vorgesehen sind, um die besagten Seiten (805) in die innerste Position des Käfigs (803) zu bringen.

3. Apparat (1) nach Anspruch 1 oder 2, der zusätzlich oder alternativ zu der besagten mindestens einen ersten Palettierinsel (400) mindestens eine zweite Palettierinsel (500) zur Herstellung der besagten kombinierten UDCs mit Schichten einheitlicher SKUs umfasst.

4. Apparat (1) nach einem der vorangegangenen Ansprüche, worin die besagte obere Ebene (701) des besagten ersten Shuttles (700) kammförmig mit einer Reihe von parallelen Streifen (702) ist, die in einem bestimmten Abstand voneinander angeordnet sind, wobei der besagte bestimmte Abstand komplementär zu dem besagten Durchgang des besagten Rasters von Schlitzen oder Öffnungen (122) der besagten Ablage (118) ist.

5. Apparat (1) nach einem der vorangegangenen Ansprüche, umfassend mindestens ein drittes Lager (450) in der Nähe für die vorübergehende Lagerung von SKUs, die vor der Verwendung in der besagten mindestens einen ersten Palettierinsel (400) warten.

6. Apparat (1) nach einem der vorangegangenen Ansprüche, worin die besagte mindestens eine erste Palettierinsel (400) einen programmierbaren Manipulator oder anthropomorphen Roboter (401), der mit einem Palettiergreifer (416) versehen ist, der angepasst ist, um mindestens eine SKU von der besagten Ablage (118) aufzunehmen, mindestens eine Aufnahmestation (402) der SKUs, die mit einer Hebevorrichtung (403) versehen ist, mindestens eine Speicherstation (404), die mit einem Förderer (421) mit einem beweglichen Abschnitt (422) versehen ist, der vertikal angehoben und abgesenkt werden kann, umfasst.

7. Apparat (1) nach dem vorangegangenen Anspruch, worin die besagte Hebevorrichtung (403) eine Stützkonstruktion (411), montiert auf einer Basis (412), einen beweglichen Rahmen (413), vertikal auf der besagten Stützkonstruktion (411) gleitend, umfasst, wobei der bewegliche Rahmen (413) mit einer Vielzahl von Stützelementen oder Leisten (414) versehen ist, deren jeweilige obere Enden dazu bestimmt sind, die SKUs während der Aufnahme durch den besagten Palettiergreifer (416) zu berühren und zu stützen.

8. Apparat (1) nach dem vorangegangenen Anspruch, wenn abhängig von den Ansprüchen 4-6, worin die besagten Stützelemente oder Leisten (414) an einer Vielzahl von parallelen Stäben (415) befestigt sind, die in einem bestimmten Abstand voneinander positioniert sind, der komplementär zu dem Abstand der besagten Streifen (702) ist, und die besagten Stützelemente oder Leisten (414) gemäß einem rechteckigen Raster mit einer bestimmten Teilung in einer Querrichtung und in einer Längsrichtung unter Berücksichtigung der Schicht von SKUs angeordnet sind, wobei die besagte Teilung derjenigen der besagten Schlitze oder Öffnungen (122) der Ablage (118) entspricht, um zu ermöglichen, dass die besagten Stützelemente oder Leisten (414) in die besagten Schlitze oder Öffnungen (122) der Ablage (118) eingesetzt werden.

9. Apparat (1) nach dem vorangegangenen Anspruch, worin die besagten Stützelemente oder Leisten (414) die besagten oberen Enden, die mit der besagten Schicht (110) von Packungen oder SKUs in Berührung stehen, gemäß einer konvexen Anordnung aufweisen, wobei die Enden, die mit dem innersten Teil der besagten Schicht (110) in Berührung stehen, auf einem höheren Niveau in Bezug auf die Enden, die mit dem äußersten Teil der besagten Schicht (110) in Berührung stehen, sind.

10. Apparat (1) nach einem der Ansprüche 7 bis 9, worin die besagte Stützkonstruktion (411) auf einem Wagen (405) montiert ist, der in Bezug auf die besagte Basis (412) horizontal beweglich und bedienbar ist.

11. Apparat (1) nach einem der Ansprüche 6-10, worin die besagte mindestens eine Aufnahmestation (402) der SKUs eine Haltevorrichtung (440) der SKUs, die auf der besagten Ablage (118) angeordnet sind, umfasst, wobei die besagte Haltevorrichtung (440) Stoppelemente (441) umfasst, die mittels eines dreiachsigen kartesischen Systems (442) beweglich sind, worin die erste und die zweite Achse in der horizontalen Ebene des besagten kartesischen Systems (442) zum Bewegen der besagten Stoppelemente (441) jeweils längsgerichtet und quergerichtet in Bezug auf die Einsetzrichtung der Ablage (118) in die Aufnahmestation (402) enthalten sind und worin die dritte vertikale Achse des besagten kartesischen Systems (442) zum Bewegen der besagten Stoppelemente (441) gemäß einer vertikalen Richtung enthalten ist, um sich an die unterschiedlichen Höhen der zu verarbeitenden SKUs anzupassen.

12. Apparat (1) nach einem der Ansprüche 6-11, worin der besagte bewegliche Abschnitt (422) des Förderers (421) eine Vielzahl von Bändern (422A) umfasst, die mit einem Apparat (463-466) zum Variieren der Längsabmessung des besagten beweglichen Abschnitts (422) und einem Apparat (467-469) zum Variieren der Querabmessung des besagten beweglichen Abschnitts (422) versehen sind.

13. Apparat (1) nach einem der Ansprüche 6-12, worin der besagte Palettiergreifer (416) eine Vielzahl von horizontalen kammförmigen Stützelementen (417), die an einer im Wesentlichen vertikalen Konstruktion (418) beweglich gemäß einer horizontalen Richtung befestigt sind, mindestens einen horizontalen Andrücker (419), der gemäß einer vertikalen Richtung beweglich ist, und mindestens ein im Wesentlichen vertikales Anschlagelement (420A) umfasst.

14. Apparat (1) nach dem vorangegangenen Anspruch, worin die horizontalen kammförmigen Stützelemente (417) eine Teilung aufweisen, die quergerichtet und längsgerichtet der besagten Teilung der besagten Stützelemente oder Leisten (414) entspricht.

15. Apparat (1) nach einem der Ansprüche 6-14, worin der besagte bewegliche Abschnitt (422) des besagten Förderers (421) der besagten Speicherstation (404) durch Hebemittel (423) vertikal angehoben und abgesenkt wird und von einem festen Abschnitt (424) umgeben ist, wobei der besagte bewegliche Abschnitt (422) Abmessungen aufweist, die im Wesentlichen den Abmessungen einer Schicht von SKUs der kombinierten UDC entsprechen, und so angepasst ist, dass er in den besagten Aufnahmekäfig o der das besagte Gehäuse (803) eingesetzt und gehoben wird, wobei der besagte feste Abschnitt (424) angepasst ist, um den Käfig oder das Gehäuse (803) zu stützen und an den und von dem besagten zweiten Shuttle (800) zu übergeben.

16. Apparat (1) nach einem der vorangegangenen Ansprüche, worin die besagte mindestens eine Depalettierinsel (100) mindestens einen ersten Förderer (101), der mit einer oder mehreren Eingangszonen (102, 103) versehen ist, die zum Erhalten der besagten Mutter-UDCs (105) beim Eingang vorgesehen sind, eine Depalettierzone (107) der Schichten (110), einen oder mehrere Ausgänge (112) für Stapel von Paletten (111), einen oder mehrere Ausgänge (113) für die besagten teilweise depalettierten UDCs (114), einen zweiten Förderer (115), der sich im Wesentlichen parallel zu dem ersten Förderer (101) erstreckt, der mit einem Eingangsförderer (116) für die besagten Ablagen (118) versehen ist, eine Stapel- und Entstapelvorrichtung (119) für die besagten Ablagen (118), einen Ladebereich (120) zum Laden der besagten Schichten (110) von Packungen oder SKUs auf die besagten Ablagen (118), einen Ausgangsförderer (121), in dem die besagten Ablagen (118) mit einer vollständigen Schicht (110) an die besagten Shuttles (700) übergeben werden, einen programmierbaren Manipulator oder anthropomorphen Roboter (108), der zwischen dem besagten ersten Förderer (101) und dem besagten zweiten Förderer (115) angeordnet ist, wobei der programmierbare Manipulator oder anthropomorphe Roboter (108) mit einem Greifer (109) versehen ist, der in der Lage ist, eine vollständige Schicht (110) von Packungen oder SKUs aufzunehmen, umfasst.

17. Apparat (1) nach dem vorangegangenen Anspruch, wenn abhängig von einem der Ansprüche 4-15, worin der besagte Eingangsförderer (116) für die besagten Ablagen (118) und der besagte Ausgangsförderer (121) für die besagten Ablagen (118) mit einer vollständigen Schicht (110) von Packungen oder SKUs ein Kettensystem oder kammförmige Bänder umfassen, wobei die besagten Ketten oder Bänder in einem bestimmten Abstand voneinander angeordnet sind, um die besagten Ablagen (118) auf ihrer gesamten Oberfläche zu stützen, wobei der besagte Abstand zwischen den Ketten oder Bändern komplementär zu dem besagten Abstand zwischen den besagten Streifen (702) der besagten oberen Ebene (701) der besagten Shuttles (700) ist, um es den besagten Shuttles (700) zu ermöglichen, in das besagte Kettensystem oder die besagten kammförmigen Bänder des Eingangsförderers (116) und des Ausgangsförderers (121) für die Übergabe der besagten Ablagen (118) eingesetzt zu werden.

18. Apparat (1) nach einem der vorangegangenen Ansprüche, worin die besagte Schicht-Entnahmeinsel (350) eine erste Gruppe (351) für die Verwaltung der besagten Ablagen (118) und eine zweite Gruppe (360) für die Entnahme der Schicht von den SKU-Schichten umfasst.

19. Apparat (1) nach dem vorangegangenen Anspruch, worin die besagte zweite Gruppe (360) zur Entnahme der Schicht von den SKU-Schichten eine Schicht-Aufnahmestation (361), eine Schicht-Übergabestation (364) für die Übergabe der SKU-Schicht auf die besagte Ablage (118), wobei die besagte Station (364) an die besagte Schicht-Aufnahmestation (361) angrenzt, einen programmierbaren Manipulator, zum Beispiel einen zweiten anthropomorphen Roboter (362) oder einen kartesischen Roboter, der in der Nähe der Schicht-Aufnahmestation (361) angeordnet ist und mit einem Greifer (363) zum Entnehmen der Schicht versehen ist, umfasst.

20. Apparat (1) nach einem der vorangegangenen Ansprüche, worin das besagte mindestens eine erste automatische Lager (200) für Schichten (110) einheitlicher Packungen oder SKUs, vollständig oder teilweise, eine Vorderseite, eine Rückseite und mindestens einen Einlaufbereich (201) aufweist, der an der Vorderseite mit mindestens einem Förderer (206) angeordnet ist und eine Vielzahl von Ebenen und Regalen (202), die mit eindeutigen Standorten, getrennt durch Korridore (203), der Elevatoren (205) versehen sind, die an der Vorderseite mit einer Schnittstellenstation (204) mit dem besagten mindestens einen Förderer (206) angeordnet sind, wobei der besagte mindestens eine Förderer (206) und die besagten Elevatoren (205) zum Bewegen von Schichten (110) von einheitlichen Packungen oder SKUs, vollständig oder teilweise, vorgesehen sind, und mindestens einen dritten Shuttle (211) für jeden Korridor (203) umfasst, wobei die besagten dritten Shuttles (211) eine Ladeebene (217) für die Ablagen (118) und mindestens zwei Teleskoparme (215) umfassen, die mit Drehstiften (216) versehen sind, um die Ablage (118) von dem besagten eindeutigen Standort oder von der besagten Schnittstellenstation (204) zu der besagten Ladeebene (217) des besagten Shuttles (211) zu ziehen oder zu schieben und umgekehrt.

21. Apparat (1) nach dem vorangegangenen Anspruch, worin der besagte mindestens eine Förderer (206) mit Kettenoberleitungen und/oder motorisierten Rollen hergestellt ist, bei denen der Einlaufteil jedes Förderers (206) ein kammförmiges System von Ketten oder Bändern aufweist, wobei die besagten Ketten oder Bänder in einem Abstand angeordnet sind, der komplementär zu dem Abstand zwischen den besagten Streifen (702) der besagten oberen Ebene (701) der besagten Shuttles (700) ist.

22. Apparat (1) nach Anspruch 17 oder 18, worin das besagte mindestens eine erste automatische Lager (200) Elevatoren (212) umfasst, die auf der Rückseite gegenüber der Vorderseite der besagten Elevatoren (205) für einheitliche, vollständige oder teilweise Schichten (110) von Packungen oder SKUs positioniert sind, wobei die besagten Elevatoren (212) zum Bewegen der besagten dritten Shuttles (211) von einer Ebene zu einer anderen des besagten ersten automatischen Lagers (200) enthalten sind.

23. Apparat (1) nach einem der vorangegangenen Ansprüche, worin die besagte mindestens eine Wickelinsel (600) mindestens einen ersten Förderer (601) mit einer Eingangszone (602) zum Erhalten der besagten Käfige oder Gehäuse (803) beim Eingang mit den darin befindlichen kombinierten UDCs, mindestens einen zweiten Förderer (606) zum Erhalten von Stapeln (607) leerer Paletten auch unterschiedlicher Größen und Arten, eine Paletten-Einsetzstation (608) zum Einsetzen einer Palette unter den besagten Käfig oder das besagte Gehäuse (803) mit der besagten kombinierten UDC oder zum Einsetzen einer Palette unter die besagte kombinierte UDC ohne Käfig oder Gehäuse (803), und eine Wickelstation (610) zum Wickeln der besagten kombinierten UDC umfasst.

24. Apparat (1) nach dem vorangegangenen Anspruch, worin die besagte Paletten-Einsetzstation (608) vor der besagten Wickelstation (610) positioniert werden kann oder nach der besagten Wickelstation (610) positioniert werden kann.

25. Apparat (1) nach Anspruch 23 oder 24, worin die besagte Wickelstation (610) eine Ring-Wickelvorrichtung (612) umfasst, die mit einer Käfig-Hebevorrichtung (613) in Verbindung steht, die das Anheben des besagten Käfigs oder Gehäuses (803) im Wesentlichen gleichzeitig mit dem Anheben der besagten Ring-Wickelvorrichtung (612) während des Wickelvorgangs ermöglicht.

26. Apparat (1) nach einem der Ansprüche 3-25, worin die besagte mindestens zweite Palettierinsel (500) mindestens einen Eingangsförderer (503) zur Unterbringung der besagten Mutter-UDCs (105) ohne Folien und/oder andere seitliche Stabilisierungselemente, und Stapel von Paletten, einen programmierbaren Manipulator oder anthropomorphen Roboter (501), versehen mit einem Greifer (502), wobei der besagte Greifer (502) mit Konstruktionsmerkmalen hergestellt ist, um es einer vollständige Schicht (110) von Packungen oder SKUs zu ermöglichen, aufgenommen zu werden, und mindestens einen Auslaufförderer (504) für kombinierte UDCs in Schichten oder für UDCs, die teilweise mit nur einigen Schichten von SKUs gebildet sind, umfasst.

27. Apparat (1) nach einem der vorangegangenen Ansprüche, umfassend mindestens eine Entfolierungsinsel (150), d. h. eine Insel zum Entfernen der Wickelfolie von den Mutter-UDCs (105) und/oder anderer seitlicher Stabilisierungselemente von den Mutter-UDCs (105).

28. Apparat (1) nach einem der vorangegangenen Ansprüche, umfassend mindestens eine dritte Insel (900) für die manuelle Palettierung von Packungen oder speziellen SKUs, die nicht automatisch manipuliert werden können.

29. Verfahren zur Herstellung einer kombinierten UDC ausgehend von einer Vielzahl von Mutter-UDCs (105), die durch einheitliche Packungen oder SKUs mittels eines Apparates (1) nach einem der vorangegangenen Ansprüche gebildet wird, umfassend die Schritte des:
Entfernens der Wickelfolie und/oder anderer seitlicher Stabilisierungselemente von einer Mutter-UDC (105);
Aufnehmens mindestens einer Schicht (110) einheitlicher SKUs von der besagten Mutter-UDC (105);
Platzierens der besagten Schicht (110) einheitlicher SKUs auf einer Ablage (118);
Übergebens, mittels eines ersten Shuttles (700), der besagten Ablage (118) mit der besagten Schicht (110) einheitlicher SKUs an ein erstes automatisches Lager (200) zur Speicherung der besagten Ablagen (118) mit Schichten einheitlicher Packungen oder SKUs, wobei die besagten Packungen oder SKUs von unterschiedlichen Arten für jede Schicht (110) sein können;
alternativ zum vorangegangenen Schritt, Übergebens, mittels eines ersten Shuttles (700), der besagten Ablage (118) mit der besagten Schicht (110) einheitlicher Packungen oder SKUs an eine Aufnahmestation (402) einer ersten Palettierinsel (400);
wenn sich die besagte Ablage (118) mit der besagten Schicht (110) einheitlicher Packungen oder SKUs in dem besagten ersten automatischen Lager (200) befindet, Aufnehmens aus dem besagten ersten automatischen Lager (200) der besagten Ablage (118) mit der besagten Schicht (110) einheitlicher Packungen oder SKUs mittels des besagten ersten Shuttles (700);
Übergebens, mittels des besagten ersten Shuttles (700), der besagten Ablage (118) mit der besagten Schicht (110) einheitlicher Packungen oder SKUs an eine Aufnahmestation (402) einer ersten Palettierinsel (400);
Aufnehmens einer Packung oder SKU oder einer Gruppe von Packungen oder SKUs von der besagten Ablage (118) mit der besagten Schicht (110) einheitlicher Packungen oder SKUs, die in der besagten Aufnahmestation (402) positioniert ist;
Positionierens der besagten Packung oder SKU oder der besagten Gruppe von Packungen oder SKUs auf einem vertikal anhebbaren und absenkbaren beweglichen Abschnitt (422) einer Speicherstation (404); Wiederholens der beiden vorangegangenen Schritte, bis eine Schicht von Packungen oder SKUs unterschiedlicher Arten erhalten wird;
Absenkens des beweglichen Abschnitts (422) um ein Maß, das im Wesentlichen der Höhe einer Schicht von SKUs entspricht;
Wiederholens der vier vorangegangenen Schritte, bis eine kombinierte UDC gebildet wird, die durch Schichten (110) unterschiedlicher Packungen oder SKUs gebildet wird;
Übergebens der besagten kombinierten UDC von der besagten ersten Palettierinsel (400) an eine Wickelinsel (600) mittels eines zweiten Shuttles (800);
Wickelns der besagten kombinierten UDC in der besagten Wickelinsel (600) mittels einer Ring-Wickelvorrichtung (612);
optionales Einsetzen einer Palette unter der besagten kombinierten UDC in einer Paletten-Einsetzstation (608) mittels einer Vorrichtung zur Anpassung einer Palette an die kombinierte UDC, wobei der besagte Schritt des Einsetzens der besagten Palette vor oder nach dem besagten Wickelschritt erfolgen kann; worin
der besagte Schritt des Aufnehmens einer Packung oder SKU oder einer Gruppe von Packungen oder SKUs von der besagten Aufnahmestation (402) das Anheben in Bezug auf die besagten Ablagen (118) und das Stützen der besagten Schicht (110) einheitlicher Packungen oder SKUs, die durch eine Vielzahl von Schlitzen oder Öffnungen (122) der besagten Ablagen (118) hindurchgehen, umfasst, wobei die besagten Schlitze oder Öffnungen (122) gemäß einem Raster mit einer Teilung, quergerichtet und längsgerichtet unter Berücksichtigung des Ausmaßes der besagten Schicht (110) von Packungen oder SKUs, angeordnet sind, die von der Art und Größe der besagten Packungen oder SKUs abhängt.

30. Verfahren zur Herstellung einer kombinierten UDC nach dem vorangegangenen Anspruch, worin der besagte Schritt des Positionierens der besagten Packung oder SKU oder der besagten Gruppe von Packungen oder SKUs auf einem beweglichen Abschnitt (422) das Aufnehmen der peripheren SKUs der besagten kombinierten UDC mittels einer Vielzahl von beweglichen Seiten (805) umfasst, die mittels beweglicher Verbindungsmittel (806), mit einem Rahmen oder einer Schale (804) eines Aufnahmekäfigs oder Gehäuses (803) verbunden sind, wobei der besagte Aufnahmekäfigs oder das besagte Gehäuse (803) gemäß einer hohlen Parallelepiped-Konfiguration, ohne die untere Basis und die obere Basis, hergestellt ist, wobei die besagten beweglichen Seiten (805) mit Gegenmitteln versehen sind, die vorgesehen sind, um die besagten Seiten (805) in die innerste Position des Käfigs (803) zu bringen.

31. Verfahren zur Herstellung einer kombinierten UDC nach Anspruch 29 oder 30, worin dem besagten Schritt des Positionierens der besagten Packung oder SKU oder der besagten Gruppe von Packungen oder SKUs auf einem beweglichen Abschnitt (422) der Schritt des Positionierens einer teilweise palettierten UDC mit einheitlichen Schichten (110) von Packungen oder SKUs, mit oder ohne Paletten an der Basis, auf der besagten teilweise palettierten UDC, die zuvor auf einem Aufnahmekäfig oder Gehäuse (803) mittels einer Käfig-Hebevorrichtung (613) angeordnet wurde, vorausgeht.

32. Verfahren zur Herstellung einer kombinierten UDC mit Schichten (110) einheitlicher Packungen oder SKUs, wobei die besagten Packungen oder SKUs für jede Schicht (110) unterschiedlich sind, wobei die besagte kombinierte UDC ausgehend von einer Vielzahl von Mutter-UDCs (105) durch einheitliche Packungen mittels eines Apparates (1) nach einem der Ansprüche 3 bis 28 gebildet wird, umfassend die Schritte des:
Entfernens der Wickelfolie und/oder anderer seitlicher Stabilisierungselemente von einer Mutter-UDC (105);
Übergebens der besagten Mutter-UDC (105) ohne Wickelfolie und/oder andere seitliche Stabilisierungselemente an ein zweites automatisches Lager (300) oder an ein Zugangslager (250) mittels eines zweiten Shuttles (800);
alternativ zum vorherigen Schritt, Übergebens, mittels des besagten zweiten Shuttles (800), der besagten Mutter-UDC (105) ohne Wickelfolie und/oder andere seitliche Stabilisierungselemente an eine zweite Palettierinsel (500);
wenn die besagte Mutter-UDC (105) ohne Wickelfolie und/oder andere seitliche Stabilisierungselemente in dem zweiten automatischen Lager (300) oder in dem besagten Zugangslager (250) angeordnet ist, Aufnehmens der besagten Mutter-UDC (105) ohne Wickelfolie und/oder andere seitliche Stabilisierungselemente aus dem besagten zweiten automatischen Lager (300) oder aus dem besagten Zugangslager (250) mittels des besagten zweiten Shuttles (800);
Übergebens, mittels des besagten zweiten Shuttles (800), der besagten von Wickelfolie und/oder anderen seitlichen Stabilisierungselementen befreiten Mutter-UDC (105) in eine zweite Palettierinsel (500);
möglicherweise des Positionierens der besagten von Wickelfolie und/oder anderen seitlichen Stabilisierungselementen befreiten Mutter-UDC (105) auf einem Eingangsförderer (503) der besagten zweiten Palettierinsel (500);
Übergebens, mittels des besagten zweiten Shuttles (800), eines Stapels von Paletten (111) in die besagte zweite Palettierinsel (500);
Aufnehmens einer Palette aus dem besagten Stapel von Paletten (111);
Positionierens der besagten Palette auf einem Auslaufförderer (504) der besagten zweiten Palettierinsel (500);
Aufnehmens mindestens einer Schicht (110) einheitlicher Packungen oder SKUS von der besagten Mutter-UDC (105);
Positionierens der besagten Schicht (110) einheitlicher Packungen oder SKUs auf der besagten Palette, die auf dem besagten Auslaufförderer (504) der besagten zweiten Palettierinsel (500) positioniert ist;
Wiederholens der beiden vorangegangenen Schritte, wobei die Art der besagten Schichten (110) einheitlicher Packungen oder SKUs geändert wird, und Platzierens der besagten Schichten (110) oben auf andere, zuvor positionierte Schichten (110), bis eine kombinierte UDC gebildet wird, die aus Schichten (110) einheitlicher Packungen oder SKUs gebildet wird;
Übergebens der besagten kombinierten UDC von der besagten zweiten Palettierinsel (500) an eine Wickelinsel (600) mittels eines zweiten Shuttles (800);
Wickelns der besagten kombinierten UDC mittels einer Ring-Wickelvorrichtung (612).

## Revendications

1. Appareil (1) pour fabriquer des unités de charge combinées, ou UDC, composées de paquets de différents produits ou SKU, lesdites UDC combinées obtenues à partir d'UDC mères (105) de SKU ou paquets uniformes, ou d'UDC partiellement dépalettisées (114), c'est-à-dire une palette de SKU ou paquets uniformes dont seules certaines couches ont été retirées, comprenant au moins un îlot de dépalettisation (100) pour la dépalettisation desdites UDC mères (105); au moins un îlot de retrait de couche (350) pouvant être intégré dans l'îlot de dépalettisation (100); au moins un premier entrepôt automatisé (200) pour les couches (110) de SKU ou paquets uniformes; au moins un second entrepôt automatisé (300), ou au moins un entrepôt d'approche (250), destiné aux UDC mères défilmées (105) et/ou aux UDC partiellement dépalettisées (114); au moins un premier îlot de palettisation (400) pour fabriquer lesdites UDC combinées avec des couches de paquets formés par différents SKU individuels ou par différents groupes de SKU au sein d'une même couche, avec une cage ou une enveloppe de confinement (803) pour contenir les SKU périphériques de l'UDC en cours de formation; au moins un îlot d'enveloppement (600) pour lesdites UDC combinées; au moins une première navette guidée de façon autonome (700) équipée d'un plan supérieur (701) capable de supporter une couche (110) de paquets ou de SKU; au moins une seconde navette (800) équipée d'une surface supérieure (801) capable de supporter une UDC mère (105) de SKU ou paquets uniformes ou une UDC combinée, avec un convoyeur (802) pour transférer ou recevoir ladite UDC mère (105) ou ladite UDC combinée; au moins un chariot élévateur (850), c'est-à-dire un chariot élévateur équipé de fourches, avec guidage automatique ou manuel, caractérisé en ledit qu'il comprend des plateaux (118) munis d'une pluralité de fentes ou d'ouvertures (122), disposées en grille avec un pas, transversalement et longitudinalement, en tenant compte de l'extension de ladite couche (110) de paquets ou de SKU, qui dépend du type et de la taille desdits paquets ou SKU, lesdits plateaux (118) étant prévus pour soutenir lesdites couches (110) de paquets ou de SKU sur ladite première navette (700) et dans ledit premier entrepôt automatique (200), pour permettre le transfert et le prélèvement ultérieur desdits paquets ou SKU, individuellement ou en petits groupes dans ledit premier îlot de palettisation (400).

2. Appareil (1) selon la revendication 1, dans lequel ladite cage ou enveloppe (803) est fabriquée en forme de parallélépipède creux, sans la base inférieure ni la base supérieure et comprenant un cadre ou une coque (804) délimitant extérieurement la cage ou l'enveloppe (803) et ayant une forme de parallélépipède de taille supérieure à celle d'une UDC combinée, ledit cadre ou ladite coque (804) comprenant une pluralité de côtés mobiles (805) fixés audit cadre ou à ladite coque (804) par des moyens de connexion mobile (806), lesdits côtés mobiles (805) étant dotés de moyens de contraste pour pousser lesdits côtés (805) dans la position la plus intérieure de la cage (803).

3. Appareil (1) selon la revendication 1 ou 2, comprenant, en plus ou alternativement audit au moins un premier îlot de palettisation (400), au moins un deuxième îlot de palettisation (500) pour fabriquer lesdites UDC combinées avec des couches de SKU uniformes.

4. Appareil (1) selon l'une des revendications précédentes, dans lequel ledit plan supérieur (701) de ladite première navette (700) est en forme de peigne avec une série de bandes parallèles (702) disposées à une certaine distance les unes des autres, ladite certaine distance étant complémentaire audit passage de ladite grille de fentes ou d'ouvertures (122) dudit plateau (118).

5. Appareil (1) selon l'une des revendications précédentes, comprenant au moins un troisième entrepôt de proximité (450) pour le stockage temporaire des SKU en attente d'utilisation dans au moins un premier îlot de palettisation (400).

6. Appareil (1) selon l'une des revendications précédentes, dans lequel ledit au moins un premier îlot de palettisation (400) comprend un manipulateur programmable ou un robot anthropomorphe (401), doté d'une pince de palettisation (416), adaptée pour prélever au moins une SKU dudit plateau (118), au moins une station de prélèvement (402) des SKU, dotée d'un dispositif de levage (403), au moins une station de stockage (404) équipée d'un convoyeur (421) avec une section mobile (422) qui peut être soulevée et abaissée verticalement.

7. Appareil (1) selon la revendication précédente, dans lequel ledit dispositif de levage (403) comprend une structure de support (411), montée sur une base (412), un cadre mobile (413) coulissant verticalement sur ladite structure de support (411), ledit cadre mobile (413) étant doté d'une pluralité d'éléments ou lattes de support (414) dont les extrémités supérieures respectives sont destinées à entrer en contact et à soutenir les SKU lors du prélèvement par ladite pince de palettisation (416).

8. Appareil (1) selon la revendication précédente, quand elle dépend de l'une des revendications 4 à 6, dans lequel lesdits éléments ou lattes de support (414) sont fixés à une pluralité de barres parallèles (415) positionnées à une certaine distance les unes des autres, complémentaire à la distance desdites bandes (702), et lesdits éléments ou lattes de support (414) sont disposés selon une grille rectangulaire avec un certain pas dans une direction transversale et longitudinale en considérant la couche de SKU, ledit pas correspondant à celui desdites fentes ou ouvertures (122) du plateau (118), pour permettre le soutien desdits éléments ou lattes de support (414) qui doivent être insérés dans lesdites fentes ou ouvertures (122) du plateau (118).

9. Appareil (1) selon la revendication précédente, dans lequel lesdits éléments ou lattes de support (414) ont lesdites extrémités supérieures, en contact avec ladite couche (110) de paquets ou SKU, selon une disposition convexe dans laquelle les extrémités en contact avec la partie la plus interne de ladite couche (110) sont à un niveau supérieur par rapport aux extrémités en contact avec la partie la plus externe de ladite couche (110).

10. Appareil (1) selon l'une des revendications 7 à 9, dans lequel ladite structure de support (411) est montée sur un chariot (405) mobile et opérable horizontalement par rapport à ladite base (412).

11. Appareil (1) selon l'une des revendications 6 à 10, dans lequel ladite au moins une station de prélèvement (402) des SKU comprend un dispositif de retenue (440) des SKU situés sur ledit plateau (118), ledit dispositif de retenue (440) comprenant des éléments d'arrêt (441) mobiles au moyen d'un système cartésien à trois axes (442), dans lequel les premier et deuxième axes dans le plan horizontal dudit système cartésien (442) sont inclus pour déplacer lesdits éléments d'arrêt (441) respectivement longitudinalement et transversalement par rapport à la direction d'insertion du plateau (118) dans la station de prélèvement (402) et dans lequel le troisième axe vertical dudit système cartésien (442) est inclus pour déplacer lesdits éléments d'arrêt (441) selon une direction verticale afin de s'adapter aux différentes hauteurs des SKU à traiter.

12. Appareil (1) selon l'une des revendications 6 à 11, dans lequel ladite section mobile (422) du convoyeur (421) comprend une pluralité de bandes (422A) dotées d'un appareil (463-466) pour varier la dimension longitudinale de ladite section mobile (422) et d'un appareil (467-469) pour varier la dimension transversale de ladite section mobile (422).

13. Appareil (1) selon l'une des revendications 6 à 12, dans lequel ladite pince de palettisation (416) comprend une pluralité d'éléments de support horizontaux en forme de peigne (417) fixés à une structure sensiblement verticale (418) mobile dans une direction horizontale, au moins un presseur horizontal (419), mobile dans une direction verticale et au moins un élément de butée sensiblement vertical (420A).

14. Appareil (1) selon la revendication précédente, dans lequel les éléments de support horizontaux en forme de peigne (417) ont un pas correspondant transversalement et longitudinalement audit pas desdits éléments ou lattes de support (414).

15. Appareil (1) selon l'une des revendications 6 à 14, dans lequel ladite section mobile (422) dudit convoyeur (421) de ladite station de stockage (404) est soulevée et abaissée verticalement par un moyen de levage (423) et est entourée par une section fixe (424), ladite section mobile (422) ayant des dimensions correspondant sensiblement aux dimensions d'une couche de SKU de l'UDC combinée, et étant adaptée pour être insérée et soulevée à l'intérieur de ladite cage de confinement ou enveloppe (803), ladite section fixe (424) étant adaptée pour soutenir et transférer la cage ou l'enveloppe (803) vers et depuis la deuxième navette (800).

16. Appareil (1) selon l'une des revendications précédentes, dans lequel ledit au moins un îlot de dépalettisation (100) comprend au moins un premier convoyeur (101) doté d'une ou plusieurs zones d'entrée (102, 103), incluses pour recevoir lesdites UDC mères (105) à l'entrée, une zone de dépalettisation (107) des couches (110), une ou plusieurs sorties (112) pour les piles de palettes (111), une ou plusieurs sorties (113) pour lesdites UDC partiellement dépalettisées (114), un second convoyeur (115) qui s'étend sensiblement parallèlement au premier convoyeur (101), doté d'un convoyeur d'entrée (116) pour lesdits plateaux (118), un dispositif d'empilage et de dépilage (119) pour lesdits plateaux (118), une zone de chargement (120) pour charger lesdites couches (110) de paquets ou SKU sur lesdits plateaux (118), un convoyeur de sortie (121) dans lequel lesdits plateaux (118) avec une couche complète (110) sont transférés vers lesdites navettes (700), un manipulateur programmable ou robot anthropomorphe (108), disposé entre ledit premier convoyeur (101) et ledit second convoyeur (115), ledit manipulateur programmable ou robot anthropomorphe (108) étant équipé d'une pince (109) capable de prélever une couche complète (110) de paquets ou de SKU.

17. Appareil (1) selon la revendication précédente lorsqu'elle dépend de l'une des revendications 4 à 15, dans lequel ledit convoyeur d'entrée (116) pour lesdits plateaux (118) et ledit convoyeur de sortie (121) pour lesdits plateaux (118) avec une couche complète (110) de paquets ou SKU, comprennent un système de chaîne ou des bandes en forme de peigne, lesdites chaînes ou bandes étant disposées à une certaine distance les unes des autres afin de soutenir lesdits plateaux (118) sur toute leur surface, ladite distance entre les chaînes ou bandes étant complémentaire à ladite distance entre les bandes (702) dudit plan supérieur (701) desdites navettes (700), afin de permettre l'insertion desdites navettes (700) dans ledit système de chaîne ou de bandes en forme de peigne du convoyeur d'entrée (116) et du convoyeur de sortie (121), pour le transfert desdits plateaux (118).

18. Appareil (1) selon l'une des revendications précédentes, dans lequel ledit îlot de retrait de couches (350) comprend un premier groupe (351) pour la gestion desdits plateaux (118) et un second groupe (360) pour le retrait de la couche des couches de SKU.

19. Appareil (1) selon la revendication précédente, dans lequel ledit second groupe (360) pour le retrait de la couche des couches de SKU comprend une station de prélèvement de couche (361), une station de transfert de couche (364) pour le transfert de la couche de SKU sur ledit plateau (118), ladite station (364) étant adjacente à ladite station de prélèvement de couches (361), un manipulateur programmable, par exemple un second robot anthropomorphe (362), ou un robot cartésien, situé près de la station de prélèvement de couche (361) et doté d'une pince (363) pour retirer la couche.

20. Appareil (1) selon l'une des revendications précédentes, dans lequel au moins un premier entrepôt automatique (200) pour couches (110) de paquets ou SKU uniformes, complets ou partiels, possède un côté avant, un côté arrière et au moins une aire d'entrée (201) disposée à l'avant avec au moins un convoyeur (206) et comprend une pluralité de plans et d'étagères (202) avec des emplacements uniques séparés par des couloirs (203), des élévateurs (205) disposés sur le côté avant avec une station d'interface (204) avec ledit au moins un convoyeur (206), ledit au moins un convoyeur (206) et lesdits élévateurs (205) étant prévus pour déplacer les couches (110) de paquets ou SKU uniformes, complets ou partiels, et au moins une troisième navette (211) pour chaque couloir (203), lesdites troisièmes navettes (211) comprenant un plan de chargement (217) pour les plateaux (118) et au moins deux bras télescopiques (215) dotés de goupilles pivotantes (216) pour tirer ou pousser le plateau (118) depuis ledit emplacement unique, ou depuis ladite station d'interface (204), vers ledit plan de chargement (217) de ladite navette (211) et vice versa.

21. Appareil (1) selon la revendication précédente, dans lequel ledit au moins un convoyeur (206) est fabriqué avec des caténaires et/ou des rouleaux motorisés dans lesquels la partie d'entrée de chaque convoyeur (206) possède un système en forme de peigne composé de chaînes ou de bandes, lesdites chaînes ou bandes étant disposées à une distance complémentaire de la distance entre lesdites bandes (702) dudit plan supérieur (701) desdites navettes (700).

22. Appareil (1) selon la revendication 17 ou 18, dans lequel ledit au moins un premier entrepôt automatique (200) comprend des élévateurs (212) positionnés sur le côté arrière opposé au côté avant desdits élévateurs (205) pour des couches uniformes, complètes ou partielles (110) de paquets ou SKU, lesdits élévateurs (212) étant inclus pour déplacer lesdites troisièmes navettes (211) d'un plan à un autre dudit premier entrepôt automatique (200).

23. Appareil (1) selon l'une des revendications précédentes, dans lequel ledit au moins un îlot d'enveloppement (600) comprend au moins un premier convoyeur (601) avec une zone d'entrée (602) pour recevoir lesdites cages ou enveloppes (803) en entrée avec les UDC combinées, au moins un second convoyeur (606) pour recevoir les piles (607) de palettes vides également de tailles et de types différents, une station d'insertion de palette (608) pour insérer une palette en dessous de ladite cage ou enveloppe (803) avec ladite UDC combinée, ou pour insérer une palette en dessous de ladite UDC combinée sans cage ni enveloppe (803), et une station d'enveloppement (610) pour envelopper ladite UDC combinée.

24. Appareil (1) selon la revendication précédente, dans lequel ladite station d'insertion de palette (608) peut être positionnée avant ladite station d'enveloppement (610) ou après ladite station d'enveloppement (610).

25. Appareil (1) selon la revendication 23 ou 24, dans lequel ladite station d'enveloppement (610) comprend un dispositif d'enveloppement annulaire (612) associé à un dispositif de levage de cage (613) qui permet de soulever ladite cage ou enveloppe (803) sensiblement simultanément au levage dudit dispositif d'enveloppement annulaire (612) pendant l'opération d'enveloppement.

26. Appareil (1) selon l'une des revendications 3 à 25, dans lequel ledit au moins un deuxième îlot de palettisation (500) comprend au moins un convoyeur d'entrée (503) pour accueillir lesdites UDC mères (105) sans films et/ou autres éléments de stabilisation latérale, et des piles de palettes, un manipulateur programmable ou robot anthropomorphe (501), doté d'une pince (502), ladite pince (502) étant fabriquée avec des caractéristiques de construction permettant de prélever une couche complète (110) de paquets ou de SKU, et au moins un convoyeur de sortie (504) pour les UDC combinées en couches ou pour les UDC partiellement formées avec seulement quelques couches de SKU.

27. Appareil (1) selon l'une des revendications précédentes, comprenant au moins un îlot de défilmage (150), c'est-à-dire un îlot pour le retrait des UDC mères (105) du film d'enveloppement et/ou d'autres éléments stabilisateurs latéraux des UDC mères (105).

28. Appareil (1) selon l'une des revendications précédentes, comprenant au moins un troisième îlot (900) pour la palettisation manuelle de paquets ou de SKU spéciaux qui ne peuvent pas être manipulés automatiquement.

29. Procédé pour fabriquer une UDC combinée à partir d'une pluralité d'UDC mères (105) formées d'ensembles de SKU ou paquets uniformes au moyen d'un appareil (1) selon l'une des revendications précédentes, comprenant les étapes suivantes :
retirer le film d'enveloppement et/ou d'autres éléments de stabilisation latérale d'une UDC mère (105) ;
récupérer au moins une couche (110) de SKU uniformes de ladite UDC mère (105) ;
placer ladite couche (110) de SKU uniformes sur un plateau (118) ;
transférer, au moyen d'une première navette (700), ledit plateau (118) avec ladite couche (110) de SKU uniformes vers un premier entrepôt automatique (200) pour le stockage desdits plateaux (118) avec des couches de paquets ou SKU uniformes, lesdits paquets ou SKU pouvant être de différents types pour chaque couche (110) ;
alternativement à l'étape précédente, transférer, au moyen d'une première navette (700), ledit plateau (118) avec ladite couche (110) de paquets ou SKU uniformes vers une station de prélèvement (402) d'un premier îlot de palettisation (400) ;
si ledit plateau (118) avec ladite couche (110) de paquets ou SKU uniformes se trouve dans ledit premier entrepôt automatique (200), prélever dans ledit premier entrepôt automatique (200), ledit plateau (118) avec ladite couche (110) de paquets ou SKU uniformes, au moyen de ladite première navette (700) ;
transférer, au moyen de ladite première navette (700), ledit plateau (118) avec ladite couche (110) de paquets ou SKU uniformes vers une station de prélèvement (402) d'un premier îlot de palettisation (400) ;
récupérer un paquet ou un SKU, ou un groupe de paquets ou SKU, dans ledit plateau (118) avec ladite couche (110) de paquets ou SKU uniformes, positionnés dans ladite station de prélèvement (402) ;
positionner ledit paquet ou SKU, ou ledit groupe de paquets ou SKU sur une section mobile relevable et abaissable verticalement (422) d'une station de stockage (404) ;
répéter les deux étapes précédentes jusqu'à obtenir une couche de paquets ou de SKU de différents types ;
abaisser ladite section mobile (422) d'une mesure correspondant sensiblement à la hauteur d'une couche de SKU ;
répéter les quatre étapes précédentes, jusqu'à former une UDC combinée composée de couches (110) de différents paquets ou SKU ;
transférer ladite UDC combinée dudit premier îlot de palettisation (400) à un îlot d'enveloppement (600), au moyen d'une seconde navette (800) ;
envelopper ladite UDC combinée dans ledit îlot d'enveloppement (600) au moyen d'un dispositif d'enveloppement annulaire (612) ;
insérer éventuellement une palette en dessous de ladite UDC combinée dans une station d'insertion de palette (608) au moyen d'un dispositif permettant de faire correspondre une palette à l'UDC combinée, ladite étape d'insertion de ladite palette pouvant se faire avant ou après ladite étape d'enveloppement ; dans lequel
ladite étape de prélèvement d'un paquet ou SKU, ou d'un groupe de paquets ou SKU, de ladite station de prélèvement (402) consiste à soulever par rapport auxdits plateaux (118) et à soutenir ladite couche (110) de paquets ou SKU uniformes passant par une pluralité de fentes ou d'ouvertures (122) desdits plateaux (118), lesdites fentes ou ouvertures (122) étant disposées en grille avec un pas, transversalement et longitudinalement, tenant compte de l'étendue de ladite couche (110) de paquets ou SKU, qui dépend du type et de la taille desdits paquets ou SKU.

30. Procédé pour réaliser une UDC combinée selon la revendication précédente, dans lequel ladite étape de positionnement dudit paquet ou SKU, ou dudit groupe de paquets ou SKU sur une section mobile (422), comprend le confinement des SKU périphériques de ladite UDC combinée au moyen d'une pluralité de côtés mobiles (805) connectés, par des moyens de connexion mobile (806), à un cadre ou une coque (804) d'une cage ou enveloppe de confinement (803), ladite cage ou enveloppe (803) étant fabriquée en configuration de parallélépipède creux, sans la base inférieure ni la base supérieure, lesdits côtés mobiles (805) étant dotés de moyen de contraste pour pousser lesdits côtés (805) dans la position la plus intérieure de la cage (803).

31. Procédé pour fabriquer une UDC combinée selon la revendication 29 ou 30, dans lequel ladite étape de positionnement dudit paquet ou SKU, ou dudit groupe de paquets ou SKU sur une section mobile (422), est précédée par l'étape de positionnement d'une UDC partiellement palettisée avec des couches uniformes (110) de paquets ou SKU, avec ou sans palettes à la base, sur ladite UDC partiellement palettisée ayant été précédemment disposée sur une cage ou une enveloppe de confinement (803), au moyen d'un dispositif de levage de cage (613).

32. Procédé pour fabriquer une UDC combinée avec des couches (110) de SKU ou paquets uniformes, lesdits paquets ou SKU étant différents pour chaque couche (110), ladite UDC combinée étant obtenue à partir d'une pluralité d'UDC mères (105) formées par des SKU ou paquets uniformes au moyen d'un appareil (1) selon l'une des revendications 3 à 28, comprenant les étapes suivantes :
retirer le film d'enveloppement et/ou d'autres éléments de stabilisation latérale d'une UDC mère (105) ;
transférer ladite UDC mère (105) sans film d'enveloppement et/ou autres éléments de stabilisation latérale vers un second entrepôt automatique (300) ou vers un entrepôt d'approche (250), au moyen d'une seconde navette (800) ;
alternativement à l'étape précédente, transférer, au moyen de ladite seconde navette (800), ladite UDC mère (105) sans film d'enveloppement et/ou autres éléments de stabilisation latérale vers un deuxième îlot de palettisation (500) ;
si ladite UDC mère (105) sans film d'enveloppement et/ou autres éléments de stabilisation latérale se trouve dans ledit second entrepôt automatique (300) ou dans ledit entrepôt d'approche (250), récupérer ladite UDC mère (105) sans film d'enveloppement et/ou autres éléments de stabilisation latérale depuis ledit second entrepôt automatique (300) ou depuis ledit entrepôt d'approche (250), au moyen de ladite deuxième navette (800) ;
transférer, au moyen de ladite seconde navette (800), ladite UDC mère (105) sans film d'enveloppement et/ou autres éléments de stabilisation latérale vers un deuxième îlot de palettisation (500) ;
positionner éventuellement ladite UDC mère (105) sans film d'enveloppement et/ou autres éléments de stabilisation latérale sur un convoyeur d'entrée (503) dudit deuxième îlot de palettisation (500) ;
transférer, au moyen de ladite deuxième navette (800), une pile de palettes (111) dans ledit deuxième îlot de palettisation (500) ;
prélever une palette dans ladite pile de palettes (111) ;
positionner ladite palette sur un convoyeur de sortie (504) dudit deuxième îlot de palettisation (500) ;
récupérer de ladite UDC mère (105) au moins une couche (110) de SKU ou paquets uniformes ;
positionner ladite couche (110) de paquets ou SKU uniformes sur ladite palette positionnée sur ledit convoyeur de sortie (504) dudit deuxième îlot de palettisation (500) ;
répéter les deux étapes précédentes, changer le type desdites couches (110) de SKU ou paquets uniformes, et placer lesdites couches (110) sur d'autres couches (110) précédemment positionnées, jusqu'à former une UDC combinée formée de couches (110) de SKU ou paquets uniformes ;
transférer ladite UDC combinée dudit deuxième îlot de palettisation (500) à un îlot d'enveloppement (600), au moyen d'une seconde navette (800) ;
envelopper ladite UDC combinée au moyen d'un dispositif d'enveloppement annulaire (612).
